(19) Europäisches Patentamt
European Patent Office
Office européen des brevets

(11) EP 2 908 364 B1

(12) **EUROPEAN PATENT SPECIFICATION**

(45) Date of publication and mention of the grant of the patent:
**11.04.2018 Bulletin 2018/15**

(21) Application number: **13844628.1**

(22) Date of filing: **09.10.2013**

(51) Int Cl.:
***H01M 4/139*** (2010.01) ***H01M 2/16*** (2006.01)
***H01M 4/13*** (2010.01) ***H01M 4/62*** (2006.01)
***H01M 10/058*** (2010.01) ***H01M 4/36*** (2006.01)
***H01M 4/04*** (2006.01) ***H01M 10/0525*** (2010.01)

(86) International application number:
**PCT/JP2013/077532**

(87) International publication number:
**WO 2014/057993 (17.04.2014 Gazette 2014/16)**

(54) **METHOD FOR PRODUCING POSITIVE ELECTRODE FOR SECONDARY BATTERY, SECONDARY BATTERY, AND METHOD FOR PRODUCING STACK FOR SECONDARY BATTERY**

VERFAHREN ZUR HERSTELLUNG EINER POSITIVELEKTRODE FÜR SEKUNDÄRBATTERIEN, SEKUNDÄRBATTERIE UND VERFAHREN ZUR HERSTELLUNG EINES STAPELS FÜR EINE SEKUNDÄRBATTERIE

PROCÉDÉ DE PRODUCTION D'UNE ÉLECTRODE POSITIVE DESTINÉE À UNE BATTERIE RECHARGEABLE, BATTERIE RECHARGEABLE, ET PROCÉDÉ DE PRODUCTION D'UN EMPILEMENT DESTINÉ À UNE BATTERIE RECHARGEABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.10.2012 JP 2012224948**

(43) Date of publication of application:
**19.08.2015 Bulletin 2015/34**

(73) Proprietor: **Zeon Corporation**
**Tokyo 100-8246 (JP)**

(72) Inventors:
- **TOYODA, Yujiro**
  **Tokyo 100-8246 (JP)**
- **NAKATA, Natsuko**
  **Tokyo 100-8246 (JP)**
- **SHIBUYA, Masanori**
  **Tokyo 100-8246 (JP)**

(74) Representative: **Maiwald Patentanwalts GmbH**
**Elisenhof**
**Elisenstrasse 3**
**80335 München (DE)**

(56) References cited:
**WO-A1-2011/040562** **WO-A1-2012/046843**
**JP-A- 2000 507 996** **JP-A- 2008 123 996**
**JP-A- 2010 225 539** **JP-A- 2011 150 866**
**US-A1- 2011 129 731**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 908 364 B1

## Description

### Field

The present invention relates to a method for producing a positive electrode for a secondary battery, a secondary battery and a method for producing a stacked body for a secondary battery.

### Background

A secondary battery generally includes a positive electrode, a separator, and a negative electrode. The inclusion of the separator may prevent short circuit between the positive electrode and the negative electrode. It is also proposed to form a porous membrane containing non-conductive particles on the surface of the separator (see Non-Patent Literature 1).

### Citation List

### Non-Patent Literature

Non-Patent Literature 1: Naoki Imachi and three others, "Insertion of an Insulating Layer between Cathode and Separator for Improving Storage Characteristics of Li-Ion Batteries," Journal of The Electrochemical Society, 159(3), 2012, p. A269-A272

### Summary

### Technical Problem

In Non-Patent Literature 1, an attempt is made for improving storage property of a battery by providing the porous membrane. However, conventional techniques like Non-Patent Literature 1 have a problem in battery life in the high temperature environment, and it has been particularly desired to improve high temperature cycle property and high temperature storage property of a secondary battery.

The present invention has been made in view of the aforementioned problem, and the object of the present invention is to provide a method for producing a positive electrode for a secondary battery that can improve high temperature cycle property and high temperature storage property; a secondary battery that is excellent in high temperature cycle property and high temperature storage property; and a method for producing a stacked body for a secondary battery that can improve high temperature cycle property and high temperature storage property.

### Solution to Problem

The present inventor has extensively conducted study for solving the aforementioned problem. As a result, the present inventor has found out that a positive electrode for a secondary battery capable of improving high temperature cycle property and high temperature storage property can be produced by applying a slurry for a surface layer onto a positive electrode material layer containing a fluorine-containing polymer and a positive electrode active material, and then drying the applied slurry, wherein the slurry for a surface layer contains a particulate acrylic polymer, a water-soluble polymer, and water, and has a content ratio of the particulate acrylic polymer and the water-soluble polymer in the total solid content of 60% by weight to 95% by weight. Thus, the inventor has accomplished the present invention.

Accordingly, the present invention is as follows.

(1) A method for producing a positive electrode for a secondary battery, comprising the steps of:

applying a slurry for a positive electrode material layer onto a current collector, and drying the applied slurry to form a positive electrode material layer, the slurry for a positive electrode material layer containing a fluorine-containing polymer, a positive electrode active material, and a dispersion medium; and

applying a slurry for a surface layer onto the positive electrode material layer, and drying the applied slurry, the slurry for a surface layer containing a particulate acrylic polymer, a water-soluble polymer, and water, and having a content ratio of the particulate acrylic polymer and the water-soluble polymer in a total solid content of 60% by weight to 95% by weight;

wherein the particulate acrylic polymer contains a (meth)acrylic acid ester monomer unit and an acid group-containing vinyl monomer unit and the ratio of the acid-group containing vinyl monomer unit in the particulate

acrylic polymer is 1.0% by weight or more and 3.0% by weight or less; and
wherein the water-soluble polymer contains an ethylenically unsaturated carboxylic acid monomer unit and the ratio of the ethylenically unsaturated carboxylic acid monomer unit in the water-soluble polymer is 20% by weight or more and 50% by weight or less.

(2) The method for producing a positive electrode for a secondary battery according to (1), wherein the slurry for a positive electrode material layer further contains a polymer that does not contain fluorine.
(3) The method for producing a positive electrode for a secondary battery according to (2), wherein the polymer that does not contain fluorine is an acrylic polymer.
(4) The method for producing a positive electrode for a secondary battery according to any one of (1) to (3), wherein a content ratio of the water-soluble polymer in the total solid content of the slurry for a surface layer is 10% by weight to 40% by weight.
(5) The method for producing a positive electrode for a secondary battery according to any one of (1) to (4), wherein the water-soluble polymer contains a water-soluble polymer X containing an ethylenically unsaturated carboxylic acid monomer unit and a fluorine-containing (meth)acrylic acid ester monomer unit.
(6) The method for producing a positive electrode for a secondary battery according to any one of (1) to (5), wherein a swelling degree of the particulate polymer to a non-aqueous electrolytic solution is 1.5 times to 10 times, the swelling degree of the particulate polymer to the non-aqueous electrolytic solution being measured in the following manner:

the particulate acrylic polymer is poured in a petri dish and dried to obtain a film;
then, 4 $cm^2$ of the film is cut out, weighed to obtain pre-immersion weight A, and thereafter immersed in an electrolytic solution at 60°C, wherein the electrolytic solution is a 1.0 mol/L solution of $LiPF_6$ dissolved in a mixed solvent of ethylene carbonate (EC) and diethyl carbonate (DEC) having a volume ratio at 20°C of EC:DEC = 1:2;
the immersed film is taken out after 72 hours, wiped with towel paper, and then immediately weighed to obtain post-immersion weight B; and
the swelling degree of the particulate acrylic polymer to the electrolytic solution is calculated from the following formula:

$$\text{swelling degree} = B/A.$$

(7) A secondary battery comprising a positive electrode, a separator, and a negative electrode, wherein
the positive electrode is produced by the production method according to any one of (1) to (6).
(8) The secondary battery according to (7), wherein the separator includes an organic separator layer, and a porous membrane layer being formed on a surface of the organic separator layer and containing non-conductive particles.
(9) The secondary battery according to (8), wherein the porous membrane layer further contains a binder for the porous membrane layer, and the binder for the porous membrane layer contains a particulate acrylic polymer.
(10) The secondary battery according to (8) or (9), having the porous membrane layer on a positive electrode side of the organic separator layer.
(11) A method for producing a stacked body for a secondary battery, comprising the steps of:

applying a slurry for a positive electrode material layer onto a current collector, and drying the applied slurry to form a positive electrode material layer, the slurry for a positive electrode material layer containing a fluorine-containing polymer, a positive electrode active material, and a dispersion medium;
applying a slurry for a surface layer onto the positive electrode material layer, and drying the applied slurry, the slurry for a surface layer containing a particulate acrylic polymer, a water-soluble polymer, and water, and having a content ratio of the particulate acrylic polymer and the water-soluble polymer in a total solid content of 60% by weight to 95% by weight;
wherein the particulate acrylic polymer contains a (meth)acrylic acid ester monomer unit and an acid group-containing vinyl monomer unit and the ratio of the acid-group containing vinyl monomer unit in the particulate acrylic polymer is 1.0% by weight or more and 3.0% by weight or less; and
wherein the water-soluble polymer contains an ethylenically unsaturated carboxylic acid monomer unit and the ratio of the ethylenically unsaturated carboxylic acid monomer unit in the water-soluble polymer is 20% by weight or more and 50% by weight or less;
stacking a separator to a side of the positive electrode material layer where the slurry for a surface layer has been applied; and
stacking a negative electrode to the separator.

(12) The method for producing a stacked body for a secondary battery according to (11), wherein the separator includes an organic separator layer, and a porous membrane layer being formed on a surface of the organic separator layer and containing non-conductive particles.
(13) The method for producing a stacked body for a secondary battery according to (12), wherein the porous membrane layer further contains a binder for the porous membrane layer, and the binder for the porous membrane layer contains a particulate acrylic polymer.

Advantageous Effects of Invention

According to the method for producing a positive electrode for a secondary battery of the present invention, a positive electrode for a secondary battery that can improve high temperature cycle property and high temperature storage property can be produced.

According to the secondary battery of the present invention, high temperature cycle property and high temperature storage property can be improved.

According to the method for producing a stacked body for a secondary battery of the present invention, a stacked body for a secondary battery that can improve high temperature cycle property and high temperature storage property can be produced.

Description of Embodiments

The present invention will be described in detail by way of embodiments and exemplifications. However, the present invention is not limited to the following embodiments and exemplifications and may be implemented with any modifications without departing from the scope of the claims and equivalents thereto.

In the following description, (meth)acrylic acid means acrylic acid and methacrylic acid. (Meth)acrylate means acrylate and methacrylate. (Meth)acrylonitrile means acrylonitrile and methacrylonitrile.

That a material is "water-soluble" means that, when 0.5 g of the material is dissolved in 100 g of water at 25°C, the amount of the undissolved portion of the material is less than 0.5% by weight. That a material is "water-insoluble" means that, when 0.5 g of the material is dissolved in 100 g of water at 25°C, the amount of the undissolved portion of the material is 90% by weight or more.

[1. Method for producing positive electrode for secondary battery]

The method for producing a positive electrode for a secondary battery according to the present invention includes a step of applying a slurry for a positive electrode material layer onto a current collector and drying the applied slurry to form a positive electrode material layer, and a step of applying a slurry for a surface layer onto this positive electrode material layer and drying the applied slurry.

[1.1. Step of forming positive electrode material layer]

As described above, in the step of forming the positive electrode material layer, the slurry for a positive electrode material layer is applied onto a current collector, and is dried. Accordingly, a positive electrode material layer is formed on the current collector.

[1.1.1. Current collector]

Any material having electric conductivity and electrochemical durability may be used for the current collector. Particularly, from the viewpoint of heat resistance, a metal material such as iron, copper, aluminum, nickel, stainless steel, titanium, tantalum, gold, or platinum is preferable. Of these, aluminum is particularly preferable for the positive electrode.

No particular limitation is imposed on the shape of the current collector, but a sheet shaped current collector having a thickness of 0.001 mm to 0.5 mm is preferable.

Preferably, the current collector is subjected to roughing treatment in advance, for improving the binding strength to the positive electrode material layer. Examples of the roughening method may include a mechanical polishing method, an electrochemical polishing method, and a chemical polishing method. In the mechanical polishing method, for example, abrasive cloth or paper to which abrasive particles adhere, a grindstone, an emery wheel, a wire brush provided with steel wires, etc. is used.

For improving the binding strength and conductivity to the positive electrode material layer, an intermediate layer may be formed on the surface of the current collector.

[1.1.2 Slurry for positive electrode material layer]

The slurry for a positive electrode material layer is a fluid composition containing a positive electrode active material, a fluorine-containing polymer, and a dispersion medium.

(Positive electrode active material)

An active material that can be intercalated and deintercalated with lithium ions may be used as the positive electrode active material. Such positive electrode active materials are broadly classified into materials composed of inorganic compounds and materials composed of organic compounds.

Examples of the positive electrode active material composed of an inorganic compound may include transition metal oxides, transition metal sulfides, and lithium-containing complex metal oxides formed of lithium and transition metals.

Examples of the transition metals may include Ti, V, Cr, Mn, Fe, Co, Ni, Cu, and Mo.

Examples of the transition metal oxides may include MnO, $MnO_2$, $V_2O_5$, $V_6O_{13}$, $TiO_2$, $Cu_2V_2O_3$, amorphous $V_2OP_2O_5$, $MoO_3$, $V_2O_5$, and $V_6O_{13}$. Of these, MnO, $V_2O_5$, $V_6O_{13}$, and $TiO_2$ are preferable in terms of cycle property and capacity.

Examples of the transition metal sulfides may include $TiS_2$, $TiS_3$, amorphous $MoS_2$, and FeS.

Examples of the lithium-containing complex metal oxides may include lithium-containing complex metal oxides having a layered structure, lithium-containing complex metal oxides having a spinel structure, and lithium-containing complex metal oxides having an olivine-type structure.

Examples of the lithium-containing complex metal oxides having a layered structure may include lithium-containing cobalt oxide ($LiCoO_2$), lithium-containing nickel oxide ($LiNiO_2$), lithium complex oxide of Co-Ni-Mn ($Li(CoMnNi)O_2$), lithium-excess layered compound ($Li[Ni_{0.17}Li_{0.2}Co_{0.07}Mn_{0.56}]O_2$), lithium complex oxide of Ni-Mn-Al, and lithium complex oxide of Ni-Co-Al.

Examples of the lithium-containing complex metal oxides having a spinel structure may include lithium manganate ($LiMn_2O_4$) and $Li[Mn_{3/2}M_{1/2}]O_4$ obtained by substituting part of Mn with another transition metal (wherein M is Cr, Fe, Co, Ni, Cu, etc.).

Examples of the lithium-containing complex metal oxides having an olivine-type structure may include olivine-type lithium phosphate compounds represented by $LixMPO_4$ (wherein M is at least one selected from the group consisting of Mn, Fe, Co, Ni, Cu, Mg, Zn, V, Ca, Sr, Ba, Ti, Al, Si, B, and Mo, and $0 \leq X \leq 2$).

Among these, because of their excellent cycle property and initial capacity, lithium-containing cobalt oxide ($LiCoO_2$), lithium manganate ($LiMn_2O_4$), lithium-containing nickel oxide ($LiNiO_2$), lithium composite oxide of Co-Ni-Mn ($Li(CoMnNi)O_2$), olivine iron, olivine Mn, Li-excess spinel, lithium-excess layered compound ($Li [Ni_{0.17}Li_{0.2}Co_{0.07}Mn_{0.56}] O_2$), and lithium-containing composite metal oxide having a spinel structure ($LiNi_{0.5}Mn_{1.5}O_4$) are preferable.

Examples of the positive electrode active material composed of an organic compound may include conductive polymer compounds such as polyacetylene and poly-p-phenylene.

An iron-based oxide having poor electric conductivity may be subjected to reduction-firing in the presence of a carbon source material to produce an electrode active material covered with the carbon material, which may be used as the electrode active material.

A compound obtained by partially substituting an element in any of the aforementioned compounds with another element may also be used as the electrode active material.

One type of these positive electrode active materials may be solely used, or two or more types thereof may be used in combination at any ratio.

A mixture of any of the aforementioned inorganic compounds and any of the aforementioned organic compounds may also be used as the positive electrode active material.

The volume average particle diameter of the positive electrode active material is generally 1 μm or more, and preferably 2 μm or more, and is generally 50 μm or less, and preferably 30 μm or less. When the volume average particle diameter of the positive electrode active material is within the aforementioned range, the amount of the binder used in the positive electrode material layer can be reduced, and a reduction in capacity of the secondary battery can be suppressed. Further, the viscosity of the slurry for a positive electrode material layer can be easily adjusted to an appropriate viscosity suitable for application, and a uniform positive electrode can thereby be obtained. The volume average particle diameter represents a particle diameter at a cumulative volume, calculated from the small diameter side, of 50% in a particle diameter distribution measured by a laser diffraction method.

The content ratio of the positive electrode active material in the positive electrode material layer is preferably 90% by weight or more, and more preferably 95% by weight or more, and is preferably 99.9% by weight or less, and more preferably 99% by weight or less. When the content amount of the positive electrode active material in the positive electrode material layer is within the aforementioned range, the flexibility and the binding property can be improved while

the capacity of the secondary battery can be increased.

(Fluorine-containing polymer)

A fluorine-containing polymer is a polymer including a structural unit containing fluorine, and can function as a binder in the positive electrode material layer. The structural unit containing fluorine is a structural unit having a structure that is formed by polymerizing a fluorine-containing monomer. Examples of the fluorine-containing polymer may include a homopolymer of a fluorine-containing monomer; a copolymer of a fluorine-containing monomer and another fluorine-containing monomer that can be copolymerized therewith; a copolymer of a fluorine-containing monomer and a monomer that can be copolymerized therewith; and a copolymer of a fluorine-containing monomer, another fluorine-containing monomer that can be copolymerized therewith, and a monomer that can be copolymerized therewith. When the positive electrode material layer contains the fluorine-containing polymer, stability of the slurry for a positive electrode material layer improves. Furthermore, the binder can be inhibited from swelling to an electrolytic solution, so that cycle property of the secondary battery can be improved.

Examples of the fluorine-containing monomer may include vinylidene fluoride, tetrafluoroethylene, hexafluoropropylene, vinyl fluoride, and perfluoroalkyl vinyl ether. Among these, vinylidene fluoride is preferable. One type of the fluorine-containing monomers may be solely used, or two or more types thereof may be used in combination at any ratio.

The ratio of the structural unit containing fluorine in the fluorine-containing polymer is usually 70% by weight or more, and preferably 80% by weight or more. Usually, the ratio of the structural unit containing fluorine in the fluorine-containing polymer is identical to a ratio of the fluorine-containing monomer in all monomers for the fluorine-containing polymer (charging ratio).

Examples of the monomer that can be copolymerized with the fluorine-containing monomer may include 1-olefin such as ethylene, propylene, and 1-butene; aromatic vinyl compounds such as styrene, $\alpha$-methylstyrene, p-t-butylstyrene, vinyl toluene, and chlorostyrene; unsaturated nitrile compounds such as (meth)acrylonitrile; (meth)acrylic acid ester compounds such as methyl (meth)acrylate, butyl (meth)acrylate, and 2-ethylhexyl (meth)acrylate; (meth)acrylamide compounds such as (meth)acrylamide, N-methylol (meth)acrylamide, and N-butoxymethyl (meth)acrylamide; carboxyl group-containing vinyl compounds such as (meth)acrylic acid, itaconic acid, fumaric acid, crotonic acid, and maleic acid; epoxy group-containing unsaturated compounds such as allyl glycidyl ether and glycidyl (meth)acrylate; amino group-containing unsaturated compounds such as dimethylaminoethyl (meth)acrylate and diethylaminoethyl (meth)acrylate; sulfonic acid group-containing unsaturated compounds such as styrenesulfonic acid, vinylsulfonic acid, and (meth)allyl sulfonic acid; sulfuric acid group-containing unsaturated compounds such as 3-allyloxy-2-hydroxypropane sulfuric acid; and phosphoric acid group-containing unsaturated compounds such as (meth)acrylic acid-3-chloro-2-phosphopropyl ester, and 3-allyloxy-2-hydroxypropane phosphoric acid. One type of them may be solely used, or two or more types thereof may be used in combination at any ratio.

The ratio of copolymerized units (i.e., structural units having a structure that is formed by polymerizing the monomer that can be copolymerized with the fluorine-containing monomer) in the fluorine-containing polymer is usually 30% by weight or less, and preferably 20% by weight or less. Usually, the ratio of the copolymerized units in the fluorine-containing polymer is identical to a ratio of the monomers that can be copolymerized with the fluorine-containing monomer in all monomers for the fluorine-containing polymer (charging ratio).

Among the fluorine-containing polymers, a polymer including vinylidene fluoride as the fluorine-containing monomer is preferable. In particular, preferred polymers are a homopolymer of vinylidene fluoride; a copolymer of vinylidene fluoride and another fluorine-containing monomer that can be copolymerized therewith; and a copolymer of vinylidene fluoride, another fluorine-containing monomer that can be copolymerized therewith, and a monomer that can be copolymerized therewith.

Among the aforementioned fluorine-containing polymers, polyvinylidene fluoride (PVdF), polytetrafluoroethylene (PTFE), a vinylidene fluoride-hexafluoropropylene copolymer (PVdF-HFP), polyvinyl fluoride, and a tetrafluoroethylene-perfluoroalkyl vinyl ether copolymer are preferable, and polyvinylidene fluoride is more preferable. These are excellent in stability when in a state of slurry and in swelling resistance to an electrolytic solution.

One type of the fluorine-containing polymers may be solely used, or two or more types thereof may be used in combination at any ratio. In particular, a combination of a low-molecular weight body and a high-molecular weight body is preferably used. The low-molecular weight body refers to a fluorine-containing polymer having a melt viscosity measured with ASTM D3835/232°C 100 $sec^{-1}$ of less than 35 kpoise. The high-molecular weight body refers to a fluorine-containing polymer having a melt viscosity measured with ASTM D3835/232°C 100 $sec^{-1}$ of not less than 35 kpoise.

Examples of polyvinylidene fluoride of high-molecular weight body may include kynar hsv 900 manufactured by Arkema Inc.; solef 6020, solef 6010, solef 1015, and solef 5130 manufactured by Solvay Inc.; and KF 7208 manufactured by Kureha Corporation. Examples of polyvinylidene fluoride of low-molecular weight body may include kynar 710, kynar 720, kynar 740, kynar 760, and kynar 760A manufactured by Arkema Inc.; solef 6008 manufactured by Solvay Inc.; and KF 1120 manufactured by Kureha Corporation.

When the combination of the high-molecular weight body and the low-molecular weight body is used as the fluorine-containing polymer, the weight ratio between the low-molecular weight body and the high-molecular weight body (low-molecular weight body/high-molecular weight body) of the fluorine-containing polymer is preferably 30/70 to 70/30. When the weight ratio between the low-molecular weight body and the high-molecular weight body of the fluorine-containing polymer is not less than the lower limit of the aforementioned range, the slurry for a positive electrode material layer can have higher viscosity to increase binding property of the positive electrode material layer to the current collector. When not more than the upper limit, the slurry for a positive electrode material layer can be prevented from having excessively high viscosity, and can enhance stability of the slurry for a positive electrode material layer.

The weight average molecular weight of the fluorine-containing polymer is preferably 100,000 or more, more preferably 200,000 or more, and particularly preferably 400,000 or more, and is preferably 2,000,000 or less, more preferably 1,500,000 or less, and particularly preferably 1,000,000 or less. The aforementioned weight average molecular weight is a polystyrene equivalent value measured by gel permeation chromatography. When the weight average molecular weight of the fluorine-containing polymer falls within the aforementioned range, detachment of the particles (particle falling) of the positive electrode active material, conductive materials, and the like from the positive electrode material layer can be inhibited, and adjustment of the viscosity of the slurry for a positive electrode material layer is facilitated.

The glass transition temperature (Tg) of the fluorine-containing polymer is preferably 0°C or lower, more preferably -20°C or lower, particularly preferably - 30°C or lower. No particular limitation is imposed on the lower limit of the glass transition temperature of the fluorine-containing polymer, but the lower limit is preferably -50°C or higher, and more preferably -40°C or higher. When the glass transition temperature of the fluorine-containing polymer falls within the aforementioned range, detachment of the particles (particle falling) of the positive electrode active material, conductive materials, and the like from the positive electrode material layer can be inhibited. The glass transition temperature of the fluorine-containing polymer may be adjusted by combining a variety of monomers. The glass transition temperature may be measured using a differential scanning calorimeter in accordance with JIS K 7121;1987.

The melting point (Tm) of the fluorine-containing polymer is preferably 150°C or higher, and further preferably 160°C or higher, and preferably 190°C or lower, more preferably 180°C or lower, and particularly preferably 170°C or lower. When the melting point of the fluorine-containing polymer falls within the aforementioned range, a positive electrode having excellent flexibility and adhesion strength can be obtained. The melting point of the fluorine-containing polymer may be adjusted by combining a variety of monomers, by controlling the polymerization temperature, or the like. The melting point may be measured using a differential scanning calorimeter in accordance with JIS K 7121;1987.

The fluorine-containing polymer is usually used in a state of a dispersion liquid in which the fluorine-containing polymer is dispersed in a dispersion medium, or in a state of a solution in which the fluorine-containing polymer is dissolved. As the dispersion medium, a substance in which the fluorine-containing polymer can be uniformly dispersed or dissolved may be used. Examples of the dispersion medium used may include water and an organic solvent. Examples of the organic solvent may include cyclic aliphatic hydrocarbons such as cyclopentane and cyclohexane; aromatic hydrocarbons such as toluene, xylene, and ethyl benzene; ketones such as acetone, ethyl methyl ketone, diisopropyl ketone, cyclohexanone, methylcyclohexane, and ethylcyclohexane; aliphatic hydrocarbon chloride such as methylene chloride, chloroform, and carbon tetrachloride; esters such as ethyl acetate, butyl acetate, $\gamma$-butyrolactone, and $\varepsilon$-caprolactone; nitriles such as acetonitrile and propionitrile; ethers such as tetrahydrofuran and ethylene glycol diethyl ether; alcohols such as methanol, ethanol, isopropanol, ethylene glycol, and ethylene glycol monomethyl ether; and amides such as N-methylpyrrolidone and N,N-dimethylformamide. One type of them may be solely used, or two or more types thereof may be used in combination at any ratio. Among these, water, N-methylpyrrolidone, cyclohexanone, and toluene are particularly preferable, because they are industrially used when producing the slurry for a positive electrode material layer, they have low tendency to be vaporized in production, and with them vaporization of the slurry for a positive electrode material layer can be reduced to thereby improve smoothness of the positive electrode material layer.

When the fluorine-containing polymer is dispersed in a particulate state in a dispersion medium, the solid content concentration of the dispersion liquid is usually 1% by weight or more, preferably 3% by weight or more, and more preferably 5% by weight or more, and is usually 25% by weight or less, preferably 20% by weight or less, and more preferably 15% by weight or less, from the viewpoint of handling property.

The viscosity when the fluorine-containing polymer is dissolved in N-methylpyrrolidone to produce a 8% by weight solution (this may be appropriately referred to hereinbelow as the "8% NMP solution viscosity") is preferably 10 mPa·s or more, and more preferably 100 mPa·s or more, and is preferably 5000 mPa·s or less, and more preferably 2000 mPa·s or less. When the 8% NMP solution viscosity of the fluorine-containing polymer falls within the aforementioned range, the viscosity of the slurry for a positive electrode material layer can be easily adjusted when producing the slurry for a positive electrode material layer so that coating can be readily performed. The 8% NMP solution viscosity of the fluorine-containing polymer can be obtained by dissolving the fluorine-containing polymer in N-methylpyrrolidone to produce a 8% by weight solution, and measuring the produced solution at 25°C and 60 rpm using a B-type viscometer (RB-80L manufactured by Toki Sangyo Co., Ltd) in accordance with JIS K 7117-1;1999.

No particular limitation is imposed on the method for producing the fluorine-containing polymer, and any of, for example, a solution polymerization method, a suspension polymerization method, a bulk polymerization method, and an emulsion polymerization method may be used. Among these, a suspension polymerization method and an emulsion polymerization method are preferable, and an emulsion polymerization method is more preferable. When the fluorine-containing polymer is produced by an emulsion polymerization method, productivity of the fluorine-containing polymer can be improved, and the fluorine-containing polymer having a desired average particle diameter can be obtained. Examples of the polymerization reaction used may include ion polymerization, radical polymerization, and living radical polymerization.

Examples of the polymerization initiator for polymerization may include organic peroxides such as lauroyl peroxide, diisopropyl peroxydicarbonate, di-2-ethylhexyl peroxydicarbonate, t-butyl peroxypivalate, and 3,3,5-trimethylhexanoyl peroxide; azo compounds such as $\alpha,\alpha'$-azobisisobutyronitrile; ammonium persulfate; and potassium persulfate. One type of them may be solely used, or two or more types thereof may be used in combination at any ratio.

The fluorine-containing polymer can function as a binder that binds the positive electrode active material in the positive electrode material layer. The amount of the binder with respect to 100 parts by weight of the positive electrode active material is preferably 0.5 parts by weight or more, more preferably 1 part by weight or more, and particularly preferably 1.5 parts by weight or more, and is preferably 5 parts by weight or less. When the amount of the binder is not less than the lower limit of the aforementioned range, binding property by the binder can be enhanced. Enhanced binding property can prevent the positive electrode active material from detaching from the binder due to repeated charging and discharging, thereby improving cycle property. When the amount of the binder is not more than the upper limit thereof, the volume that the binder occupies in the positive electrode material layer can be decreased, thereby increasing the capacity of the secondary battery.

The amount of the fluorine-containing polymer with respect to 100% by weight of the binder for a positive electrode is usually 50% by weight or more, preferably 60% by weight or more, and more preferably 70% by weight or more, and is usually 100% by weight or less, preferably 95% by weight or less, more preferably 90% by weight or less, and particularly preferably 85% by weight or less. When the amount of the fluorine-containing polymer is not less than the lower limit of the aforementioned range, resistance of the positive electrode can be lowered.

(Polymer other than fluorine-containing polymer)

It is preferable that the slurry for a positive electrode material layer further contains a polymer other than the fluorine-containing polymer, that is, a polymer that does not contain fluorine. Examples of such a polymer other than the fluorine-containing polymer may include a nitrile polymer and an acrylic polymer, and an acrylic polymer is preferable. The acrylic polymer is a polymer that contains a (meth)acrylic acid ester monomer unit, and a nitrile polymer is a polymer that contains a nitrile group-containing monomer unit and does not contain a (meth)acrylic acid ester monomer unit. The (meth)acrylic acid ester monomer unit is a structural unit having a structure that is formed by polymerizing a (meth)acrylic acid ester monomer. When the slurry for a positive electrode material layer contains a combination of the fluorine-containing polymer and the acrylic polymer, bending property when the positive electrode is wound, and initial capacity, output property and high electric potential cycle property of a secondary battery can be made favorable.

Examples of the (meth)acrylic acid ester monomer may include a compound represented by formula (1): $CH_2=CR^1\text{-}COOR^2$. $R^1$ represents a hydrogen atom or a methyl group, and $R^2$ represents an alkyl group or a cycloalkyl group.

Specific examples of the (meth)acrylic acid ester monomer represented by the formula (1) may include acrylates such as methyl acrylate, ethyl acrylate, propyl acrylate, isopropyl acrylate, n-butyl acrylate, isobutyl acrylate, t-butyl acrylate, n-amyl acrylate, isoamyl acrylate, n-hexyl acrylate, heptyl acrylate, octyl acrylate, 2-ethylhexyl acrylate, nonyl acrylate, decyl acrylate, lauryl acrylate, n-tetradecyl acrylate, and stearyl acrylate; and methacrylates such as methyl methacrylate, ethyl methacrylate, propyl methacrylate, isopropyl methacrylate, n-butyl methacrylate, isobutyl methacrylate, t-butyl methacrylate, n-amyl methacrylate, isoamyl methacrylate, n-hexyl methacrylate, heptyl methacrylate, octyl methacrylate, 2-ethylhexyl methacrylate, nonyl methacrylate, decyl methacrylate, lauryl methacrylate, n-tetradecyl methacrylate, and stearyl methacrylate. Among these, acrylate is preferable, and 2-ethylhexyl acrylate and butyl acrylate are more preferable from the viewpoint of improving the flexibility of the positive electrode material layer and the swelling resistance to the electrolytic solution. One type of the (meth)acrylic acid ester monomers may be solely used, or two or more types thereof may be used in combination at any ratio. Furthermore, a combination of an acrylic acid ester and a methacrylic acid ester may be used.

The ratio of the (meth)acrylic acid ester monomer unit in the acrylic polymer is preferably 30% by weight or more, more preferably 35% by weight or more, and particularly preferably 45% by weight or more, and is preferably 85% by weight or less, and more preferably 75% by weight or less. When the ratio of the (meth)acrylic acid ester monomer unit is not less than the lower limit of the aforementioned range, flexibility of the positive electrode material layer can be increased, to thereby prevent the occurrence of cracks when the positive electrode is wound and pressed. When the

ratio is not more than the upper limit, the slurry for a positive electrode material layer can have favorable slurry property. The ratio of the (meth)acrylic acid ester monomer unit in the acrylic polymer is usually identical to the ratio of the (meth)acrylic acid ester monomer in all monomers for the acrylic polymer (charging ratio).

Among the acrylic polymers, the nitrile group-containing acrylic polymer is preferably used. The nitrile group-containing acrylic polymer is a polymer that contains a nitrile group-containing monomer unit and a (meth)acrylic acid ester monomer unit. The nitrile group-containing monomer unit is a structural unit having a structure that is formed by polymerizing a nitrile group-containing monomer. The use of the nitrile group-containing acrylic polymer can further improve cycle property at a high electrical potential.

Specific examples of the nitrile group-containing monomer may include acrylonitrile and methacrylonitrile. Among these, acrylonitrile is preferable in terms of increasing adhesion with the current collector and improving electrode strength. One type of the nitrile group-containing monomers may be solely used, or two or more types thereof may be used in combination at any ratio.

The ratio of the nitrile group-containing monomer unit in the acrylic polymer is preferably 5% by weight or more, further preferably 10% by weight or more, and particularly preferably 15% by weight or more, and is preferably 35% by weight or less, further preferably 30% by weight or less, and particularly preferably 25% by weight or less. When the ratio of the nitrile group-containing monomer unit is not less than the lower limit of the aforementioned range, strength of the acrylic polymer can be increased. Therefore, adhesion between the current collector and the positive electrode material layer can be improved, and cycle property of the secondary battery can thereby be improved. When the ratio is not more than the upper limit, the polarity of the acrylic polymer can be lowered, thereby suppressing the swelling property to the electrolytic solution. Therefore, the adhesion between the current collector and the positive electrode material layer can be inhibited from decreasing due to charging and discharging, and cycle property of the secondary battery can thereby be enhanced. The ratio of the nitrile group-containing monomer unit in the acrylic polymer is usually identical to the ratio of the nitrile group-containing monomer in all monomers for the acrylic polymer (charging ratio).

Furthermore, the acrylic polymer may contain an optional structural unit other than the aforementioned (meth)acrylic acid ester monomer unit and nitrile group-containing monomer unit. Examples of the optional structural unit may include an ethylenically unsaturated acid monomer unit and a conjugated diene monomer unit.

The ethylenically unsaturated acid monomer unit is a structural unit having a structure that is formed by polymerizing an ethylenically unsaturated acid monomer. When the acrylic polymer contains the ethylenically unsaturated acid monomer unit, the slurry for a positive electrode material layer can have improved slurry property. Therefore, dispersibility of the components in the positive electrode material layer can be enhanced, and resistance of the positive electrode can thereby be lowered.

The ethylenically unsaturated acid monomer may be, e.g., an ethylenically unsaturated monomer having an acid group such as a carboxyl group, a sulfonic acid group, or a phosphinyl group. Specific examples of the ethylenically unsaturated acid monomer may include an ethylenically unsaturated carboxylic acid monomer, an ethylenically unsaturated sulfonic acid monomer, and an ethylenically unsaturated phosphoric acid monomer.

Examples of the ethylenically unsaturated carboxylic acid monomer may include an ethylenically unsaturated monocarboxylic acid and derivatives thereof, and an ethylenically unsaturated dicarboxylic acid, and acid anhydrides thereof and derivatives thereof.

Examples of the ethylenically unsaturated monocarboxylic acid may include acrylic acid, methacrylic acid, and crotonic acid.

Examples of the derivatives of the ethylenically unsaturated monocarboxylic acid may include 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\alpha$-diaminoacrylic acid.

Examples of the ethylenically unsaturated dicarboxylic acid may include maleic acid, fumaric acid, and itaconic acid.

Examples of the acid anhydride of the ethylenically unsaturated dicarboxylic acid may include maleic anhydride, acrylic anhydride, methylmaleic anhydride, and dimethylmaleic anhydride.

Examples of the derivatives of the ethylenically unsaturated dicarboxylic acid may include a maleic acid having a substituent such as methylmaleic acid, dimethylmaleic acid, phenylmaleic acid, chloromaleic acid, dichloromaleic acid, and fluoromaleic acid; and maleic esters such as methyl allyl maleate, diphenyl maleate, nonyl maleate, decyl maleate, dodecyl maleate, octadecyl maleate, and fluoroalkyl maleate.

Among these ethylenically unsaturated carboxylic acid monomers, ethylenically unsaturated monocarboxylic acid is preferable from the viewpoint of allowing favorable dispersibility to be expressed for the acrylic polymer, and acrylic acid and methacrylic acid are more preferable, and methacrylic acid is particularly preferable.

Examples of the ethylenically unsaturated sulfonic acid monomer may include vinylsulfonic acid, methylvinylsulfonic acid, styrenesulfonic acid, (meth)acrylsulfonic acid, (meth)acrylic acid-2-sulfonic acid ethyl ester, 2-acrylamide-2-hydroxypropane sulfonic acid, and 2-acrylamide-2-methylpropane sulfonic acid.

Among these ethylenically unsaturated sulfonic acid monomers, 2-acrylamide-2-hydroxypropane sulfonic acid

and 2-acrylamide-2-methylpropane sulfonic acid are preferable from the viewpoint of allowing favorable dispersibility of the acrylic polymer to be expressed, and 2-acrylamide-2-methylpropane sulfonic acid is more preferable.

Examples of the ethylenically unsaturated phosphoric acid monomer may include (meth)acrylic acid-3-chloro-2-phosphopropyl ester, (meth)acrylic acid-2-phosphoethyl ester, and 3-allyloxy-2-hydroxypropane phosphoric acid.

Furthermore, alkali metal salts and ammonium salts of the ethylenically unsaturated acid monomers described above as the examples may also be used.

One type of the ethylenically unsaturated acid monomers may be solely used, or two or more types thereof may be used in combination at any ratio.

Among these, from the viewpoint of improving the dispersibility of the acrylic polymer, it is preferable to solely use one of the ethylenically unsaturated carboxylic acid monomer and the ethylenically unsaturated sulfonic acid monomer alone, or to use a combination of the ethylenically unsaturated carboxylic acid monomer and the ethylenically unsaturated sulfonic acid monomer, as the ethylenically unsaturated acid monomer. In particular, it is more preferable to use a combination of the ethylenically unsaturated carboxylic acid monomer and the ethylenically unsaturated sulfonic acid monomer.

The ratio of the ethylenically unsaturated acid monomer unit in the acrylic polymer is preferably 5% by weight or more, more preferably 10% by weight or more, particularly preferably 12% by weight or more, and most preferably 14% by weight or more, and is preferably 30% by weight or less, more preferably 28% by weight or less, and particularly preferably 26% by weight or less. When the ratio of the ethylenically unsaturated acid monomer unit is not less than the lower limit of the aforementioned range, swelling property of the acrylic polymer to the electrolytic solution can be suppressed. Therefore, the adhesion between the current collector and the positive electrode material layer can be inhibited from decreasing due to charging and discharging, and cycle property of the secondary battery can thereby be enhanced. When the ratio is not more than the upper limit, flexibility of the positive electrode material layer can be increased to prevent the occurrence of fracture when the positive electrode is wound and pressed. The ratio of the ethylenically unsaturated acid monomer unit in the acrylic polymer is usually identical to the ratio of the ethylenically unsaturated acid monomer in all monomers for the acrylic polymer (charging ratio).

When the combination of the ethylenically unsaturated carboxylic acid monomer and the ethylenically unsaturated sulfonic acid monomer is used as the ethylenically unsaturated acid monomer, the ratio of the ethylenically unsaturated carboxylic acid monomer unit (a structural unit having a structure that is formed by polymerizing the ethylenically unsaturated carboxylic acid monomer) in the acrylic polymer is preferably 10% by weight or more, more preferably 12% by weight or more, and preferably 30% by weight or less, and more preferably 28% by weight or less. The ratio of the ethylenically unsaturated sulfonic acid monomer unit is preferably 0.1% by weight or more, and preferably 10% by weight or less. By setting the ratio in this manner, dispersibility of the acrylic polymer in the slurry for a positive electrode material layer can be increased, and a positive electrode material layer that is excellent in uniformity can thereby be formed. Therefore, the resistance of the positive electrode can be reduced.

The conjugated diene monomer unit is a structural unit that is formed by polymerizing a conjugated diene monomer and/or a structural unit that is formed by polymerizing a conjugated diene monomer and hydrogenating the polymerized conjugated diene monomer.

Specific examples of the conjugated diene monomer may include 1,3-butadiene, isoprene, 2,3-dimethyl-1,3-butadiene, 1,3-pentadiene, and chloroprene, and preferably 1,3-butadiene and isoprene, and more preferably 1,3-butadiene. One type of the aforementioned conjugated diene monomers may be solely used, or two or more types thereof may be used in combination at any ratio. Thus, a nitrile group-containing acrylic polymer (B1) may solely contain one type of the conjugated diene monomer units, or may contain a combination of two or more types thereof at any ratio.

The content ratio of the conjugated diene monomer unit (that includes the hydrogenated monomer unit for calculation of the ratio) in the acrylic polymer is in the range of preferably 20 to 98% by weight, more preferably 20 to 80% by weight, and particularly preferably 20 to 70% by weight.

Furthermore, the acrylic polymer may contain a cross-linkable monomer unit. The cross-linkable monomer unit is a structural unit having a structure that is formed by polymerizing a cross-linkable monomer. The cross-linkable monomer is a monomer that is capable of forming a cross-linked structure after or during polymerization as a result of application thereto of heat or energy ray irradiation. Examples of the cross-linkable monomer may include monomers that are thermally cross-linkable. Specific examples thereof may include a monofunctional monomer having one olefinic double bond per molecule and a thermally cross-linkable group; and a polyfunctional monomer having two or more olefinic double bonds per molecule.

Examples of the thermally cross-linkable group contained in the monofunctional monomer may include an epoxy group, an N-methylol amido group, an oxetanyl group, an oxazoline group, and a combination thereof. Among these, an epoxy group is more preferable, because cross-linking and cross-linking densities are easily adjusted.

Examples of the cross-linkable monomer having an epoxy group as the thermally cross-linkable group and having an olefinic double bond may include unsaturated glycidyl ethers such as vinyl glycidyl ether, allyl glycidyl ether, butenyl glycidyl ether, and o-allylphenyl glycidyl ether; monoepoxides of diene or polyene such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl ester of 3-cyclohexenecarboxylic acid, and glycidyl ester of 4-methyl-3-cyclohexenecarboxylic acid.

Examples of the cross-linkable monomer having an N-methylol amido group as the thermally cross-linkable group and having an olefinic double bond may include (meth)acrylamides having a methylol group such as N-methylol (meth)acrylamide.

Examples of the cross-linkable monomer having an oxetanyl group as the thermally cross-linkable group and having an olefinic double bond may include 3-((meth)acryloyloxymethyl)oxetane, 3-((meth)acryloyloxymethyl)-2-trifluoromethyloxetane, 3-((meth)acryloyloxymethyl)-2-phenyloxetane, 2-((meth)acryloyloxymethyl)oxetane, and 2-((meth)acryloyloxymethyl)-4-trifluoromethyloxetane.

Examples of the cross-linkable monomer having an oxazoline group as the thermally cross-linkable group and having an olefinic double bond may include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Examples of the polyfunctional monomer having two or more olefinic double bonds may include allyl (meth)acrylate, ethylene di(meth)acrylate, diethylene glycol di(meth)acrylate, triethylene glycol di(meth)acrylate, tetraethylene glycol di(meth)acrylate, trimethylol propane-tri(meth)acrylate, dipropylene glycol diallyl ether, polyglycol diallyl ether, triethylene glycol divinyl ether, hydroquinone diallyl ether, tetraallyl oxyethane, trimethylol propane-diallyl ether, other allyl or vinyl ether of polyfunctional alcohols, triallylamine, methylenebisacrylamide, and divinylbenzene.

Among these, as the cross-linkable monomer, in particular, allyl (meth)acrylate, ethylene dimethacrylate, allyl glycidyl ether, N-methylol (meth)acrylamide, and glycidyl methacrylate are preferable.

One type of the cross-linkable monomers may be solely used, or two or more types thereof may be used in combination at any ratio.

When the acrylic polymer contains the cross-linkable monomer unit, the ratio of the cross-linkable monomer unit is preferably 0.1% by weight or more, more preferably 0.2% by weight or more, and particularly preferably 0.5% by weight or more, and is preferably 5% by weight or less, more preferably 4% by weight or less, and particularly preferably 2% by weight or less. When the ratio of the cross-linkable monomer unit is not less than the lower limit of the aforementioned range, the weight average molecular weight of the acrylic polymer can be increased, and swelling degree from excessively increasing can be prevented. When the ratio of the cross-linkable monomer unit is not more than the upper limit, the acrylic polymer can have favorable dispersibility. Thus, when the ratio of the cross-linkable monomer unit falls within the aforementioned range, both the swelling degree and the dispersibility can be favorable. Therefore, the resistance of the positive electrode can be reduced. The ratio of the cross-linkable monomer unit in the acrylic polymer is usually identical to the ratio of the cross-linkable monomer in all monomers for the acrylic polymer (charging ratio).

Furthermore, the acrylic polymer may contain an optional structural unit such as an aromatic vinyl monomer unit and an ethylenically unsaturated carboxylic acid amide monomer unit.

The aromatic vinyl monomer unit is a structural unit having a structure that is formed by polymerizing an aromatic vinyl monomer. Examples of the aromatic vinyl monomer may include styrene, $\alpha$-methylstyrene, vinyl toluene, chlorostyrene, and hydroxymethylstyrene. One type of them may be solely used, or two or more types thereof may be used in combination at any ratio.

The ethylenically unsaturated carboxylic acid amide monomer unit is a structural unit having a structure that is formed by polymerizing an ethylenically unsaturated carboxylic acid amide monomer. Examples of the ethylenically unsaturated carboxylic acid amide monomer may include (meth)acrylamide and N-methoxymethyl (meth)acrylamide. One type of them may be solely used, or two or more types thereof may be used in combination at any ratio.

When these optional structural units are contained, dispersibility of the acrylic polymer in the slurry for a positive electrode material layer can be increased, thereby enabling the formation of the positive electrode material layer having high uniformity.

Therefore, the resistance of the positive electrode can be reduced. Usually, the amount of these optional monomer units is 10% by weight or less in the acrylic polymer. The ratio of the optional monomer units in the acrylic polymer is usually identical to the ratio of the optional monomers in all monomers for the acrylic polymer (charging ratio).

The swelling degree of the acrylic polymer to the non-aqueous electrolytic solution is preferably 1.0 time or more, and is preferably 3 times or less, more preferably 2.8 times or less, and further preferably 2.6 times or less. The swelling degree of the acrylic polymer to the non-aqueous electrolytic solution may be measured in a similar manner to the swelling degree of the particulate acrylic polymer to the non-aqueous electrolytic solution. When the swelling degree of the acrylic polymer to the non-aqueous electrolytic solution falls within the aforementioned range, the adhesion of the positive electrode material layer to the current collector can be maintained even when the charging-discharging cycle is repeated, and high cycle property can be realized. The swelling degree to the non-aqueous electrolytic solution can

be controlled by, for example, the aforementioned ratio of respective monomer units. Specifically, the swelling degree tends to increase with a higher ratio of the nitrile group-containing monomer unit, and tends to decrease with a higher ratio of the ethylenically unsaturated monomer unit.

The insoluble amount of the acrylic polymer in tetrahydrofuran (THF) is preferably 30% by weight or less, more preferably 25% by weight or less, and particularly preferably 20% by weight or less. The THF insoluble content is an index for gel amounts. Therefore, by reducing THF insoluble content, particle formation of the acrylic polymer can be prevented in the slurry for a positive electrode material layer containing an organic solvent such as N-methylpyrrolidone, and dispersibility in the slurry can thereby be enhanced. The THF insoluble content can be controlled by, for example, the polymerization reaction temperature, the time for mixing monomers, and the amount of the polymerization initiator. Specifically, the insoluble amount tends to decrease by, for example, elevating the polymerization reaction temperature, or increasing the amounts of a polymerization initiator and a chain transfer agent.

No particular limitation is imposed on the method for producing the acrylic polymer. For example, the acrylic polymer may be produced by emulsion-polymerizing a monomer mixture containing monomers constituting the acrylic polymer and, as necessary, hydrogenating the emulsion-polymerized mixture. As the method for emulsion polymerization, any publicly known emulsion polymerization method may be adopted. No particular limitation is imposed on the mixing method, and examples thereof may include the method using an agitation-type, shaking-type, or rotation-type mixing apparatus. Examples of the mixing method may include the method using a dispersion kneader such as a homogenizer, a ball mill, a sand mill, a roll mill, a planetary mixer, and a planetary kneader. No particular limitation is imposed on the method for hydrogenation, and any publicly known method may be adopted.

Examples of the polymerization initiator used for emulsion polymerization may include inorganic peroxides such as sodium persulfate, potassium persulfate, ammonium persulfate, potassium perphosphate, and hydrogen peroxide; organic peroxides such as t-butyl peroxide, cumene hydroperoxide, p-menthane hydroperoxide, di-t-butyl peroxide, t-butyl cumyl peroxide, acetyl peroxide, isobutyryl peroxide, octanoyl peroxide, benzoyl peroxide, 3,5,5-trimethyl hexanoyl peroxide, and t-butyl peroxy isobutyrate; and azo compounds such as azobisisobutyronitrile, azobis-2,4-dimethylvaleronitrile, azobis cyclohexane carbonitrile, and methyl azobisisobutyrate. Among these, inorganic peroxides are preferable. One type of the polymerization initiators may be solely used, or two or more types thereof may be used in combination at any ratio. The peroxide initiator may be combined with a reducing agent such as sodium bisulfite to be used as a redox-based polymerization initiator.

The using amount of the polymerization initiator with respect to 100 parts by weight of the monomer mixture used for polymerization is preferably 0.05 parts by weight or more, and more preferably 0.1 parts by weight or more, and is preferably 5 parts by weight or less, and more preferably 2 parts by weight or less. When the polymerization initiator is used within the aforementioned range, the THF insoluble content of the obtained acrylic polymer can be appropriately adjusted.

For adjusting the THF insoluble content of the acrylic polymer, a chain transfer agent is preferably used during emulsion polymerization. Examples of the chain transfer agent may include alkyl mercaptans such as n-hexyl mercaptan, n-octyl mercaptan, t-octyl mercaptan, n-dodecyl mercaptan, t-dodecyl mercaptan, and n-stearyl mercaptan; xanthogen compounds such as dimethyl xanthogen disulfide and diisopropyl xanthogen disulfide; terpinolene, and thiuram-based compounds such as tetramethylthiuram disulfide, tetraethylthiuram disulfide, and tetramethylthiuram monosulfide; phenol-based compounds such as 2,6-di-t-butyl-4-methyl phenol and styrenated phenol; allyl compounds such as allyl alcohol; halogenated hydrocarbon compounds such as dichloromethane, dibromomethane, and carbon tetrabromide; thioglycolic acid, thiomalic acid, 2-ethylhexyl thioglycolate, diphenylethylene, and $\alpha$-methylstyrene dimer. Among these, alkyl mercaptans are preferable, and t-dodecyl mercaptan is more preferable. One type of the chain transfer agents may be solely used, or two or more types thereof may be used in combination at any ratio.

The using amount of the chain transfer agent with respect to 100 parts by weight of the monomer mixture is preferably 0.05 parts by weight or more, and more preferably 0.1 parts by weight or more, and is preferably 2 parts by weight or less, and more preferably 1 part by weight or less.

A surfactant may be used during emulsion polymerization. The surfactant for use may be any one of an anionic surfactant, a nonionic surfactant, a cationic surfactant and an amphoteric surfactant. Specific examples of the anionic surfactant may include sulfate salts of higher alcohol such as sodium laurylsulfate, ammonium laurylsulfate, sodium dodecylsulfate, ammonium dodecylsulfate, sodium octylsulfate, sodium decylsulfate, sodium tetradecylsulfate, sodium hexadecylsulfate, and sodium octadecylsulfate; alkylbenzenesulfonic acid salts such as sodium dodecylbenzene sulfonate, sodium laurylbenzene sulfonate, and sodium hexadecylbenzene sulfonate; and aliphatic sulfonic acid salts such as sodium laurylsulfonate, sodium dodecylsulfonate, and sodium tetradecylsulfonate. One type of the surfactants may be solely used, or two or more types thereof may be used in combination at any ratio.

The using amount of the surfactant with respect to 100 parts by weight of the monomer mixture is preferably 0.5 parts by weight or more, and more preferably 1 part by weight or more, and is preferably 10 parts by weight or less, and more preferably 5 parts by weight or less.

Furthermore, additives may be appropriately added during emulsion polymerization. Examples of such additives

may include pH adjusters such as sodium hydroxide and ammonia; a dispersant; a chelating agent; an oxygen scavenger; a builder; and a seed latex for adjusting the particle diameter. In particular, emulsion polymerization using a seed latex is preferable. The seed latex refers to a dispersion liquid of microparticles that become the core of the reaction during emulsion polymerization. The particle diameter of the microparticles is often 100 nm or less. No particular limitation is imposed on the type of the microparticles, and a general-purpose polymer such as a diene-based polymer may be used. With the seed polymerization method using the seed latex, copolymer particles having a relatively uniform particle diameter can be obtained.

The polymerization temperature when polymerization reaction is performed is usually 0°C or higher, and preferably 40°C or higher, and is usually 100°C or lower, and preferably 80°C or lower. Emulsion polymerization is performed in such a temperature range, and the polymerization reaction is terminated by mixing a polymerization terminating agent or cooling the polymerization system, at a predetermined polymerization conversion rate. The polymerization conversion rate at which the polymerization reaction is terminated is preferably 93% by weight or more, and more preferably 95% by weight or more. When the polymerization temperature falls within the aforementioned range, the THF insoluble content of the obtained copolymer can be appropriately adjusted.

After the termination of the reaction (the polymerization reaction, or sometimes an optional reaction such as a hydrogenation reaction performed after the polymerization reaction), unreacted monomers may be removed, and the pH and the solid content concentration may be adjusted as desired, to thereby obtain an acrylic polymer in a form where the polymer is dispersed in a dispersion medium (a latex). Thereafter, the dispersion medium may be substituted as necessary. The dispersion medium may be evaporated, to obtain a particulate copolymer in a powder form.

If necessary, the dispersion liquid of the acrylic polymer may contain a dispersant, a thickening agent, an age resistor, an antifoaming agent, a preservative, an antimicrobial agent, a blister inhibitor, a pH adjustor, and the like.

When the combination of the fluorine-containing polymer and the acrylic polymer is used as a binder, the amount of the acrylic polymer with respect to 100% by weight of the binder is preferably 5% by weight or more, and is preferably 50% by weight or less, more preferably 40% by weight or less, and particularly preferably 30% by weight or less. When the amount of the acrylic polymer, in the case of using the combination of the fluorine-containing polymer and the acrylic polymer, is not less than the lower limit of the aforementioned range, the positive electrode active material can be sufficiently coated with the acrylic polymer, thereby achieving favorable cycle property at a high electrical potential. Also, the electrode can be prevented from becoming excessively hard and easily fractured. Furthermore, when the amount of the acrylic polymer is not more than the upper limit, the positive electrode active material can be prevented from being excessively coated with the acrylic polymer, thereby reducing the resistance of the positive electrode and increasing the initial capacity of the secondary battery.

In addition to the aforementioned fluorine-containing polymer and acrylic polymer, the slurry for a positive electrode material layer may contain an optional polymer that may be used as a binder. Examples of such an optional polymer may include soft polymers such as polyacrylic acid derivatives, olefin-based soft polymers, and vinyl-based soft polymers. One type of them may be solely used, or two or more types thereof may be used in combination at any ratio. The amount of the optional polymer with respect to 100% by weight of the binder is usually 30% by weight or less, preferably 20% by weight or less, and particularly preferably 10% by weight or less. The lower limit is not particularly limited, but is usually 0.1% by weight or more, and preferably 0.2% by weight or more.

(Conductive material)

The slurry for a positive electrode material layer may contain a conductive material. The use of the conductive material can improve electrical contact between the particles of the positive electrode active material. In particular, the use of the conductive material in a lithium secondary battery can improve discharging rate property.

Examples of the conductive material may include conductive carbons such as carbon black, graphite, vapor grown carbon fiber, carbon nanotube, and carbon flake; carbon powders such as graphite; carbon fiber; carbon ultrashort fiber; and fibers and foils of a variety of metals. Among these, carbon black is preferable, and acetylene black, Ketjen black, and furnace black are more preferable, because of excellent conductivity and slurry property, and ability to give higher density to the positive electrode. One type of them may be solely used, or two or more types thereof may be used in combination at any ratio.

The volume average particle diameter of the conductive material is preferably 5 nm or more, and more preferably 10 nm or more, and is preferably 40 nm or less, and more preferably 38 nm or less. When the volume average particle diameter of the conductive material is not less than the lower limit of the aforementioned range, the conductive material is easily dispersed in the slurry for a positive electrode material layer, thereby reducing the resistance of the positive electrode and increasing the capacity of the secondary battery. When the volume average particle diameter of the conductive material is not more than the upper limit, the conductive material can be stably disposed between the particles of the positive electrode active material, thereby reducing the resistance of the positive electrode and increasing the capacity of the secondary battery.

The specific surface area of the conductive material is preferably 400 $m^2/g$ or less, and more preferably 300 $m^2/g$ or less. When the specific surface area of the conductive material is such a small value, the dispersibility of the conductive material can be easily increased, thereby reducing the resistance of the positive electrode and increasing the capacity of the secondary battery. The specific surface area of the conductive material may be measured by a BET method.

The amount of the conductive material with respect to 100 parts by weight of the positive electrode active material is preferably 1 part by weight or more, and more preferably 1.2 parts by weight or more, and is preferably 10 parts by weight or less, and more preferably 5 parts by weight or less. When the amount of the conductive material is not less than the lower limit of the aforementioned range, the resistance of the positive electrode can be lowered, and capacity of the secondary battery can thereby be increased. When the amount of the conductive material is not more than the upper limit, the density of the positive electrode can be increased, and initial capacity of the secondary battery can thereby be increased.

(Optional additives)

The slurry for a positive electrode material layer may optionally contain a component other than the aforementioned components.

For example, the slurry for a positive electrode material layer may contain a reinforcing agent. Examples of the reinforcing agent may include a variety of inorganic and organic fillers having a spherical, plate, rod or fibrous shape. The using amount of the reinforcing agent with respect to 100 parts by weight of the positive electrode active material is usually 0 parts by weight or more, and preferably 1 part by weight or more, and is usually 20 parts by weight or less, and preferably 10 parts by weight or less.

For example, the slurry for a positive electrode material layer may contain a thickening agent. As the thickening agent, a polymer that is soluble in a dispersion medium for the slurry for a positive electrode material layer may be used. Specific examples thereof may include an acrylonitrile-butadiene copolymer hydrogenated product, etc.

Furthermore, the slurry for a positive electrode material layer may contain, for example, trifluoropropylene carbonate, vinylene carbonate, catechol carbonate, 1,6-dioxaspiro[4,4]nonane-2,7-dione, and 12-crown-4-ether, for increasing stability and lifetime of the battery. These may be contained in the electrolytic solution.

(Dispersion medium)

A dispersion medium is a substance in which the positive electrode active material and the fluorine-containing polymer, as well as optional components such as the acrylic polymer, the conductive material, and the additives can be dissolved or dispersed. Usually, the positive electrode active material may disperse in the dispersion medium, and the fluorine-containing polymer may disperse or dissolve in the dispersion medium. Use of a substance in which the fluorine-containing polymer or the acrylic polymer can be dissolved as the dispersion medium improves dispersibility of the positive electrode active material and the conductive material, and is thus preferable. It is considered that this is because the use of the fluorine-containing polymer or the acrylic polymer in a state of being dissolved in the dispersion medium causes adsorption of the fluorine-containing polymer or the acrylic polymer on the surfaces of the particles such as the positive electrode active material, and the resultant volume effect can stabilize the dispersion.

Examples of the dispersion medium for use may include any of water and an organic solvent. Examples of the organic solvent may include cyclic aliphatic hydrocarbons such as cyclopentane and cyclohexane; aromatic hydrocarbons such as toluene and xylene; ketones such as ethyl methyl ketone and cyclohexanone; esters such as ethyl acetate, butyl acetate, γ-butyrolactone, and ε-caprolactone; nitriles such as acetonitrile and propionitrile; ethers such as tetrahydrofuran and ethylene glycol diethyl ether; alcohols such as methanol, ethanol, isopropanol, ethylene glycol, and ethylene glycol monomethyl ether; and amides such as N-methylpyrrolidone and N,N-dimethylformamide. One type of these dispersion medium may be solely used, or two or more types thereof may be used in combination at any ratio. It is preferable to appropriately select the type of specific dispersion medium from the viewpoint of drying speed and environmental aspect. Among these, a non-aqueous dispersion medium is preferably used, in terms of the swelling property of the electrode to water.

The amount of the dispersion medium is preferably adjusted so that the viscosity becomes suitable for application, depending on the types of the positive electrode active material, the fluorine-containing polymer, and optional components. Specifically, the amount is adjusted so that the solid content concentration that is the total of the positive electrode active material, the fluorine-containing polymer, and optional components becomes preferably 30% by weight or more, and more preferably 40% by weight or more, and preferably 90% by weight or less, and more preferably 80% by weight or less.

(Method for producing slurry for positive electrode material layer)

The slurry for a positive electrode material layer may be obtained by mixing, using a mixer, the positive electrode active material, the fluorine-containing polymer, and the dispersion medium, as well as optional components contained as necessary. The mixing may be performed by supplying the aforementioned components at a time into a mixer and mixing the supplied components. When the positive electrode active material, the fluorine-containing polymer, the conductive material, and the thickening agent are used as the components of the slurry for a positive electrode material layer, it is preferable to mix the conductive material and the thickening agent in the dispersion medium so that the conductive material is dispersed in a particulate state, and thereafter mix the positive electrode active material and the fluorine-containing polymer, for improving dispersibility of the slurry. When the positive electrode active material, the fluorine-containing polymer, the polymer other than the fluorine-containing polymer, and the conductive material are used as the components of the slurry for a positive electrode material layer, it is preferable to mix the conductive material and the other polymer in the dispersion medium so that the conductive material is dispersed in a particulate state, and thereafter mix the positive electrode active material and the fluorine-containing polymer, for improving dispersibility of the slurry. As the mixer, for example, a ball mill, a sand mill, a pigment disperser, a kneader, an ultrasonic disperser, a homogenizer, a planetary mixer, and a Hobart mixer may be used. Among these, it is preferable to use a ball mill, because aggregation of the conductive material and the positive electrode active material can be suppressed.

The size of the particles contained in the slurry for a positive electrode material layer (particle size) is preferably 35 μm or less, and further preferably 25 μm or less. The lower limit of the size of the particles is not particularly limited, but may be 1 μm or more. As the value of the size of the particles, the value of the 50% volume average particle diameter may be adopted. When the particle size of the slurry is within the aforementioned range, a positive electrode material layer having highly dispersed conductive material and thus having high uniformity can be obtained.

[1.1.3. Application]

After preparing the slurry for a positive electrode material layer, a current collector is coated with the prepared slurry for a positive electrode material layer.

At this time, the slurry for a positive electrode material layer may be applied onto at least one surface of the current collector, but is preferably applied onto both surfaces of the current collector. Accordingly, a layer of the slurry for a positive electrode material layer is formed on the current collector.

Examples of the method for applying the slurry for a positive electrode material layer onto the current collector may include a doctor blade method, a dipping method, a reverse roll method, a direct roll method, a gravure method, an extrusion method, and a brushing method.

The thickness of the layer of the slurry for a positive electrode material layer may be appropriately determined depending on the thickness of the intended electrode material layer.

[1.1.4. Drying]

After the slurry for a positive electrode material layer is applied onto the current collector, the layer of the slurry for a positive electrode material layer formed on the current collector is dried. Accordingly, the dispersion medium is removed from the layer of the slurry for a positive electrode material layer, and thus a positive electrode material layer is formed on the current collector.

Examples of the drying method may include drying with warm air, hot air, or low moisture air; vacuum drying; and a drying method by irradiation with (far) infrared rays, electron beams, or the like.

The drying temperature and time are preferably the temperature and time with which the dispersion medium can be removed from the layer of the slurry for a positive electrode material layer. Specifically, the drying time is usually in the range of one minute to 30 minutes, and the drying temperature is usually in the range of 40°C to 180°C.

[1.1.5. Positive electrode material layer]

Through the aforementioned steps, the positive electrode material layer may be obtained. Since this positive electrode material layer is a layer formed with the solid content of the slurry for a positive electrode material layer, the positive electrode material layer contains the positive electrode active material and the fluorine-containing polymer.

The thickness of the positive electrode material layer is usually 5 μm or more, and preferably 10 μm or more, and is usually 300 μm or less, and preferably 250 μm or less.

[1.2. Step of applying slurry for surface layer]

After the positive electrode material layer is formed on the current collector, a step of applying the slurry for a surface layer onto this positive electrode material layer and drying the slurry, is performed.

[1.2.1. Slurry for surface layer]

The slurry for a surface layer is a fluid composition containing a particulate acrylic polymer, a water-soluble polymer, and water. In the slurry for a surface layer, the content ratio of the particulate acrylic polymer and the water-soluble polymer in the total solid content contained in the slurry for a surface layer falls within a specific range. The solid content of the slurry for a surface layer refers to components that is not vaporized but remains after the slurry for a surface layer is dried to remove water.

(Particulate acrylic polymer)

The particulate acrylic polymer is a particulate polymer containing a (meth)acrylic acid ester monomer unit and an acid group-containing vinyl monomer unit, and the ratio of the acid group-containing vinyl monomer unit in the particulate acrylic polymer is 1.0% by weight or more and 3.0% by weight or less. Since the (meth)acrylic acid ester monomer unit is contained, the particulate acrylic polymer usually has binding property, and is capable of binding to the positive electrode active material. Examples of the (meth)acrylic acid ester monomer corresponding to the (meth)acrylic acid ester monomer unit may be those listed in the description of the acrylic polymers that the slurry for a positive electrode material layer may contain. One type of the (meth)acrylic acid ester monomers may be solely used, or two or more types thereof may be used in combination at any ratio.

The ratio of the (meth)acrylic acid ester monomer unit in the particulate acrylic polymer is preferably 50% by weight or more, more preferably 60% by weight or more, and particularly preferably 70% by weight or more, and is usually 100% by weight or less. By setting the ratio in this manner, electrical stability of the positive electrode material layer can be improved. When both the slurry for a positive electrode material layer and the slurry for a surface layer include the acrylic polymer, particle falling resistance can be effectively improved. The ratio of the (meth)acrylic acid ester monomer unit in the particulate acrylic polymer is usually identical to the ratio of the (meth)acrylic acid ester monomer in all monomers for the particulate acrylic polymer (charging ratio).

The particulate acrylic polymer may contain an optional structural unit other than the (meth)acrylic acid ester monomer unit and the acid group-containing vinyl monomer unit. Examples of the optional structural unit may include an $\alpha,\beta$-unsaturated nitrile monomer unit, and a cross-linkable monomer unit. One type of them may be solely used, or two or more types thereof may be used in combination at any ratio.

The acid group-containing vinyl monomer unit is a structural unit having a structure that is formed by polymerizing a vinyl monomer and having an acid group. Examples of this acid group may include a -COOH group (carboxylic acid group), an -OH group (hydroxyl group), an $-SO_3H$ group (sulfonic acid group), a $-PO_3H_2$ group, and a - PO(OH)(OR) group (R represents a hydrocarbon group).

The acid group-containing vinyl monomer unit is usually obtained by polymerizing an acid group-containing vinyl monomer. Examples of the acid group-containing vinyl monomer may include a lower polyoxyalkylene group-containing monomer. An acid anhydride that is capable of generating a carboxylic acid group by hydrolysis may also be used as the acid group-containing vinyl monomer. Among these, the carboxylic acid group-containing vinyl monomer is preferably used because of its excellent binding property to the positive electrode material layer or the separator, and its capability of efficiently trapping transition metal ions eluted from the positive electrode active material.

Examples of the carboxylic acid group-containing vinyl monomer may include monocarboxylic acid, dicarboxylic acid, anhydrides of dicarboxylic acid, and derivatives thereof. Examples of the monocarboxylic acid may include acrylic acid, methacrylic acid, crotonic acid, 2-ethylacrylic acid, isocrotonic acid, $\alpha$-acetoxyacrylic acid, $\beta$-trans-aryloxyacrylic acid, $\alpha$-chloro-$\beta$-E-methoxyacrylic acid, and $\beta$-diaminoacrylic acid. Examples of the dicarboxylic acid may include maleic acid, fumaric acid, itaconic acid, methylmaleic acid, dimethylmaleic acid, phenylmaleic acid, chloromaleic acid, dichloromaleic acid, fluoromaleic acid, and maleic esters such as methyl allyl maleate, diphenyl maleate, nonyl maleate, decyl maleate, dodecyl maleate, octadecyl maleate, and fluoroalkyl maleate. Examples of the acid anhydrides of dicarboxylic acid may include maleic anhydride, acrylic anhydride, methylmaleic anhydride, and dimethylmaleic anhydride. Among these, preferred examples may include monocarboxylic acid containing a carboxylic acid group and having 5 or less carbon atoms per molecule such as acrylic acid and methacrylic acid; and dicarboxylic acid containing two carboxylic acid groups per molecule and having 5 or less carbon atoms per molecule such as maleic acid and itaconic acid. Furthermore, acrylic acid, methacrylic acid, and itaconic acid are preferable because of high storage stability of the prepared slurry for a surface layer. One type of them may be solely used, or two or more types thereof may be used in combination at any ratio.

The ratio of the acid group-containing vinyl monomer unit in the particulate acrylic polymer is 1.0% by weight or more, and more preferably 1.5% by weight or more, and is 3.0% by weight or less, and more preferably 2.5% by weight or less. The ratio of the acid group-containing vinyl monomer unit in the particulate acrylic polymer is usually identical to the ratio of the acid group-containing vinyl monomer in all monomers for the particulate acrylic polymer (charging ratio).

The α,β-unsaturated nitrile monomer unit is a structural unit having a structure that is formed by polymerizing an α,β-unsaturated nitrile monomer. Examples of the α,β-unsaturated nitrile monomer may include acrylonitrile, methacrylonitrile, α-chloroacrylonitrile, and α-ethylacrylonitrile. Among these, acrylonitrile and methacrylonitrile are preferable, from the viewpoint of improving mechanical strength and binding capacity in the surface layer or the portion containing the solid content of the slurry for a surface layer in the positive electrode material layer. One type of them may be solely used, or two or more types thereof may be used in combination at any ratio.

The ratio of the α,β-unsaturated nitrile monomer unit in the particulate acrylic polymer is preferably 1.0% by weight or more, and is preferably 50% by weight or less, more preferably 40% by weight or less, and particularly preferably 30% by weight or less. The ratio of the α, β-unsaturated nitrile monomer unit in the particulate acrylic polymer is usually identical to the ratio of the α, β-unsaturated nitrile monomer in all monomers for the particulate acrylic polymer (charging ratio).

Examples of the cross-linkable monomer unit and the cross-linkable monomer corresponding to the cross-linkable monomer unit may be those listed in the description of the acrylic polymers that the slurry for a positive electrode material layer may contain. One type of the cross-linkable monomer units may be solely used, or two or more types thereof may be used in combination at any ratio.

The ratio of the cross-linkable monomer unit in the particulate acrylic polymer is preferably 0.02% by weight or more, more preferably 0.1% by weight or more, and particularly preferably 0.2% by weight or more, and is preferably 4.0% by weight or less, more preferably 3.5% by weight or less, and particularly preferably 3.0% by weight or less. By setting the ratio in this manner, the particulate acrylic polymer can be inhibited from eluting into the electrolytic solution, and excellent electrode strength and long-term cycle property can be achieved. The ratio of the cross-linkable monomer unit in the particulate acrylic polymer is usually identical to the ratio of the cross-linkable monomer in all monomers for the particulate acrylic polymer (charging ratio).

The glass transition temperature of the particulate acrylic polymer is usually -80°C or higher, preferably -70°C or higher, and more preferably -60°C or higher, and is usually 60°C or lower, preferably 30°C or lower, and more preferably 0°C or lower. When the glass transition temperature of the particulate acrylic polymer is not less than the lower limit of the aforementioned range, blocking of pores of the positive electrode material layer upon application of the slurry for a surface layer can be prevented, thus improving liquid permeability. Therefore, rate property of the secondary battery can be enhanced. When the glass transition temperature is not more than the upper limit, binding property of the particulate acrylic polymer can be enhanced, thereby stably preventing falling of particles from the positive electrode material layer.

The specific number average particle diameter of the particulate acrylic polymer is usually 50 nm or more, preferably 100 nm or more, and more preferably 150 nm or more, and is usually 1000 nm or less, preferably 800 nm or less, and more preferably 600 nm or less. When the number average particle diameter of the particulate acrylic polymer is not less than the lower limit of the aforementioned range, porosity of the positive electrode material layer can be maintained at a high level to thereby suppress the resistance of the positive electrode, and battery properties are kept at a favorable state. When the number average particle diameter is not more than the upper limit, adhesion points of the particulate acrylic polymer to the positive electrode active material and the conductive material can be increased, thereby stably preventing falling of particles.

The number average particle diameter of the particles may be measured in the following manner. That is, a photograph is taken at a magnification of 25000 times using a field emission-scanning electron microscope, and then 200 particles are arbitrarily selected from the image. When the longest diameter of the particle image is La, and the shortest diameter thereof is Lb, (La + Lb)/2 is defined as the particle diameter. The average of the particle diameters of 200 particles is calculated as a number average particle diameter.

The swelling degree of the particulate acrylic polymer to the non-aqueous electrolytic solution is preferably 1.5 times or more, more preferably 2.0 times or more, and particularly preferably 2.5 times or more, and is preferably 10 times or less, more preferably 8.0 times or less, and particularly preferably 5.0 times or less. When the swelling degree of the particulate acrylic polymer to the non-aqueous electrolytic solution falls within the aforementioned range, inhibition of the lithium intercalation and deintercalation reaction to the positive electrode active material can be suppressed, and rate property can thereby be improved. Furthermore, decomposition of the electrolytic solution that occurs on the positive electrode active material can also be suppressed.

The swelling degree of the particulate acrylic polymer to the non-aqueous electrolytic solution may be measured in the following manner. The particulate acrylic polymer is poured in a Teflon (registered trademark) petri dish and dried to obtain a film. Then, 4 $cm^2$ of the film is cut out, weighed (pre-immersion weight A), and thereafter immersed in an

electrolytic solution at 60°C. The immersed film is taken out after 72 hours, wiped with towel paper, and then immediately weighed (post-immersion weight B). The swelling degree of the particulate acrylic polymer to the electrolytic solution is calculated from the following formula. As the electrolytic solution, a 1.0 mol/L solution of $LiPF_6$ dissolved in a mixed solvent of ethylene carbonate (EC) and diethyl carbonate (DEC) having a volume ratio at 20°C of EC:DEC = 1:2 is used.

$$\text{Swelling degree} = B/A$$

The swelling degree of the particulate acrylic polymer to the non-aqueous electrolytic solution may be adjusted within the aforementioned range by adjusting the types or ratios of all polymerized units constituting the particulate acrylic polymer. As an index therefor, a solubility parameter (referred to hereinbelow as a "SP value") of a binder may be used. For example, as the method therefor, a polymer or copolymer having a solubility parameter (referred to hereinbelow as an "SP value") of preferably 9.0 $(cal/cm^3)^{1/2}$ or more and less than 11 $(cal/cm^3)^{1/2}$, more preferably 9 to 10.5 $(cal/cm^3)^{1/2}$, and further preferably 9.5 to 10 $(cal/cm^3)^{1/2}$ may be used as the binder. When the SP value is adjusted to a value within the aforementioned range, an appropriate swelling property to an electrolytic solution can be obtained.

No particular limitation is imposed on the method for producing the particulate acrylic polymer, and any of, for example, a solution polymerization method, a suspension polymerization method, and an emulsion polymerization method may be used. Among these, an emulsion polymerization method and a suspension polymerization method are preferable since polymerization can be performed in water so that the resultant product can be used as it is as the slurry for a surface layer.

The amount of the particulate acrylic polymer with respect to the total solid content of the slurry for a surface layer is usually 50% by weight or more, preferably 55% by weight or more, and more preferably 60% by weight or more, and is usually 80% by weight or less, preferably 75% by weight or less, and more preferably 70% by weight or less. When the amount of the particulate acrylic polymer is not less than the lower limit of the aforementioned range, flexibility and high temperature storage property can be maintained. When the amount is not more than the upper limit, flexibility and high temperature storage property can be maintained.

(Water-soluble polymer)

As the water-soluble polymer, an optional water soluble polymer may be used, as long as the effects of the present invention are not significantly impaired. Among these, it is preferable to use a water-soluble polymer containing an ethylenically unsaturated carboxylic acid monomer unit and a fluorine-containing (meth)acrylic acid ester monomer unit (this may be appropriately referred to hereinbelow as a "water-soluble polymer X").

The water-soluble polymer X containing the ethylenically unsaturated carboxylic acid monomer unit usually has a carboxy group (-COOH group) as an acid functional group. Since this carboxy group functions as an acid functional group, the water-soluble polymer X can express excellent binding property. That is, the polar group present on the surface of the positive electrode active material and the acid functional group possessed by the water-soluble polymer X interact with each other, so that the water-soluble polymer X is retained on the surface of the positive electrode active material, enabling formation of a stable coating layer.

Examples of the ethylenically unsaturated carboxylic acid monomer may be those listed in the description of the acrylic polymers that the slurry for a positive electrode material layer may contain. One type of the ethylenically unsaturated carboxylic acid monomers may be solely used, or two or more types thereof may be used in combination at any ratio. Among these, ethylenically unsaturated monocarboxylic acids such as acrylic acid and methacrylic acid are preferable. This is because the dispersibility of the water-soluble polymer X to water can be further enhanced.

In the water-soluble polymer X, the ratio of the ethylenically unsaturated carboxylic acid monomer unit is 20% by weight or more, preferably 25% by weight or more, and more preferably 30% by weight or more, and is 50% by weight or less, preferably 45% by weight or less, and more preferably 40% by weight or less. When the ratio of the ethylenically unsaturated carboxylic acid monomer unit is not less than the lower limit of the aforementioned range, adhesion of the water-soluble polymer X to the positive electrode active material can be improved, and furthermore, lifetime property of the secondary battery can be improved. When the ratio is not more than the upper limit, the positive electrode can be made flexible. The ratio of the ethylenically unsaturated carboxylic acid monomer unit in the water-soluble polymer X is usually identical to the ratio of the ethylenically unsaturated carboxylic acid monomer in all monomers for the water-soluble polymer X (charging ratio).

The water-soluble polymer X contains a fluorine-containing (meth)acrylic acid ester monomer unit. The fluorine-containing (meth)acrylic acid ester monomer unit is a structural unit having a structure that is formed by polymerizing a fluorine-containing (meth)acrylic acid ester monomer. The fluorine-containing (meth)acrylic acid ester monomer unit has high ion conductivity, and therefore can inhibit increase in resistance caused by a coating layer of the water-soluble polymer, and can exert a function of improving both the output property and cycle property of the secondary battery.

Examples of the fluorine-containing (meth)acrylic acid ester monomer may include monomers represented by the following formula (I).

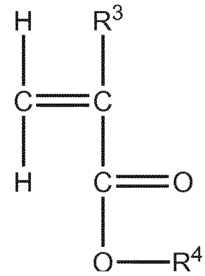

(I)

In the aforementioned formula (I), $R^3$ represents a hydrogen atom or a methyl group.

In the aforementioned formula (I), $R^4$ represents a hydrocarbon group containing a fluorine atom. The number of carbon atoms of the hydrocarbon group is usually 1 or more, and usually 18 or less. The number of fluorine atoms contained in $R^4$ may be one, or may be two or more.

Examples of the fluorine-containing (meth)acrylic acid ester monomer represented by the formula (I) may include fluorinated alkyl (meth)acrylate, fluorinated aryl (meth)acrylate, and fluorinated aralkyl(meth)acrylate. Among these, fluorinated alkyl(meth)acrylate is preferable. Specific examples of such a monomer may include (meth)acrylic acid perfluoroalkyl esters such as 2,2,2-trifluoroethyl(meth)acrylate, β-(perfluorooctyl)ethyl(meth)acrylate, 2,2,3,3-tetrafluoropropyl(meth)acrylate, 2,2,3,4,4,4-hexafluorobutyl(meth)acrylate, 1H,1H,9H-perfluoro-1-nonyl (meth)acrylate, 1H,1H,11H-perfluoroundecyl(meth)acrylate, perfluorooctyl(meth)acrylate, trifluoromethyl (meth)acrylate, and 3[4[1-trifluoromethyl-2,2-bis[bis(trifluoromethyl)fluoromethyl]ethynyloxy]benzoxy]2-hydroxypropyl(meth)acrylate. Among these, from the viewpoint of a balance between cycle property and output property, 2,2,2-trifluoroethyl methacrylate is preferable. One type of the fluorine-containing (meth)acrylic acid ester monomers may be solely used, or two or more types thereof may be used in combination at any ratio.

In the water-soluble polymer X, the ratio of the fluorine-containing (meth)acrylic acid ester monomer unit is usually 1% by weight or more, preferably 1.5% by weight or more, and more preferably 2% by weight or more, and is usually 30% by weight or less, preferably 25% by weight or less, and more preferably 20% by weight or less. When the ratio of the fluorine-containing (meth)acrylic acid ester monomer unit is not less than the lower limit of the aforementioned range, output property of the secondary battery can be improved, thereby enhancing low temperature property. When the ratio is not more than the upper limit, electrochemical stability can be ensured. The ratio of the fluorine-containing (meth)acrylic acid ester monomer unit in the water-soluble polymer X is usually identical to the ratio of the fluorine-containing (meth)acrylic acid ester monomer in all monomers for the water-soluble polymer X (charging ratio).

The water-soluble polymer X may contain a cross-linkable monomer unit. The inclusion of the cross-linkable monomer unit gives cross-linking ability to the water-soluble polymer X, thereby improving the strength and stability of a coating layer formed with the water-soluble polymer.

As the cross-linkable monomer, a monomer that can form a cross-linked structure during or after polymerization is used. Examples of the cross-linkable monomer may be those listed in the description of the acrylic polymers that the slurry for a positive electrode material layer may contain. Among these, in particular, ethylene dimethacrylate, allyl glycidyl ether, and glycidyl methacrylate are preferable as the cross-linkable monomer. One type of the cross-linkable monomers may be solely used, or two or more types thereof may be used in combination at any ratio.

The ratio of the cross-linkable monomer unit in the water-soluble polymer X is preferably 0.1% by weight or more, more preferably 0.2% by weight or more, and particularly preferably 0.5% by weight or more, and is preferably 2% by weight or less, more preferably 1.5% by weight or less, and particularly preferably 1% by weight or less. When the ratio of the cross-linkable monomer unit falls within the aforementioned range, the swelling degree can be suppressed, and the durability of the positive electrode can be enhanced. The ratio of the cross-linkable monomer unit in the water-soluble polymer X is usually identical to the ratio of the cross-linkable monomer in all monomers for the water-soluble polymer X (charging ratio).

The water-soluble polymer X may contain a reactive surfactant monomer unit. The reactive surfactant monomer unit is a structural unit having a structure that is formed by polymerizing a reactive surfactant monomer. The reactive surfactant monomer unit constitutes part of the water-soluble polymer X, and can function as a surfactant as well.

The reactive surfactant monomer is a monomer having a polymerizable group that can be copolymerized with another monomer and having a surface-active group (a hydrophilic group and a hydrophobic group). Usually, the reactive surfactant monomer has a polymerizable unsaturated group, and this group also functions as a hydrophobic group after polymerization. Examples of the polymerizable unsaturated group that the reactive surfactant monomer has may include a vinyl group, an allyl group, a vinylidene group, a propenyl group, an isopropenyl group, and an isobutylidene group.

One type of such polymerizable unsaturated groups may be solely used, or two or more types thereof may be used in combination at any ratio.

The reactive surfactant monomer usually has a hydrophilic group as a moiety that expresses hydrophilicity. The reactive surfactant monomer is classified into anionic, cationic and nonionic surfactants depending on the type of the hydrophilic group.

Examples of the anionic hydrophilic group may include $-SO_3M$, -COOM, and $-PO(OM)_2$. M represents a hydrogen atom or a cation. Examples of the cation may include alkali metal ions such as lithium, sodium, and potassium; alkali earth metal ions such as calcium and magnesium; ammonium ion; ammonium ions of alkylamine such as monomethylamine, dimethylamine, monoethylamine, and triethylamine; and ammonium ions of alkanolamine such as monoethanolamine, diethanolamine, and triethanolamine.

Examples of the cationic hydrophilic group may include primary amine salts such as $-NH_2HX$, secondary amine salts such as $-NHCH_3HX$, tertiary amine salts such as $-N(CH_3)_2HX$, and quaternary amine salts such as $-N^+(CH_3)_3X^-$. X represents a halogen group.

Examples of the nonionic hydrophilic group may include -OH.

Examples of the suitable reactive surfactant monomer may include compounds represented by the following formula (II).

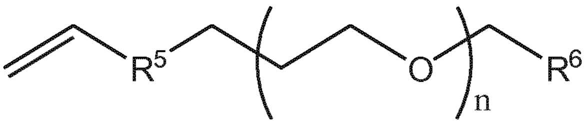

(II)

In the formula (II), $R^5$ represents a divalent linking group. Examples of $R^5$ may include an -Si-O- group, a methylene group, and a phenylene group.

In the formula (II), $R^6$ represents a hydrophilic group. Examples of $R^6$ may include an $-SO_3NH_4$.

In the formula (II), n represents an integer of 1 or more and 100 or less.

Other examples of the suitable reactive surfactant monomer may include a compound having a polymerization unit based on ethylene oxide and a polymerization unit based on butylene oxide, and further having, at a terminal, an alkenyl group with a terminal double bond and $-SO_3NH_4$ (for example, trade name "Latemul PD-104" and "Latemul PD-105", manufactured by Kao Corporation).

One type of the reactive surfactant monomers may be solely used, or two or more types thereof may be used in combination at any ratio.

The ratio of the reactive surfactant monomer unit in the water-soluble polymer X is preferably 0.1% by weight or more, more preferably 0.2% by weight or more, and particularly preferably 0.5% by weight or more, and is preferably 5% by weight or less, more preferably 4% by weight or less, and particularly preferably 2% by weight or less. When the ratio of the reactive surfactant monomer unit is not less than the lower limit of the aforementioned range, dispersibility in the slurry for a surface layer can be improved. When the ratio is not more than the upper limit, durability of the positive electrode can be improved. The ratio of the reactive surfactant monomer unit in the water-soluble polymer X is usually identical to the ratio of the reactive surfactant monomer in all monomers for the water-soluble polymer X (charging ratio).

The water-soluble polymer X may contain an optional structural unit other than the aforementioned structural units. Examples of the optional structural unit may include a (meth)acrylic acid ester monomer unit other than the fluorine-containing (meth)acrylic acid ester monomer unit. However, among the (meth)acrylic acid ester monomer, those having fluorine is herein regarded as the fluorine-containing (meth)acrylic acid ester monomer, and thus distinguished from the (meth)acrylic acid ester monomer.

Examples of the (meth)acrylic acid ester monomer may be those listed in the description of the acrylic polymers that the slurry for a positive electrode material layer may contain. One type of the (meth)acrylic acid ester monomers may be solely used, or two or more types thereof may be used in combination at any ratio.

The ratio of the (meth)acrylic acid ester monomer unit in the water-soluble polymer X is preferably 30% by weight or more, more preferably 35% by weight or more, and particularly preferably 40% by weight or more, and is preferably 70% by weight or less. When the ratio of the (meth)acrylic acid ester monomer unit is not less than the lower limit of the aforementioned range, ability of the water-soluble polymer X to be adsorbed to the positive electrode active material can be enhanced. When the ratio is not more than the upper limit of the aforementioned range, flexibility of the positive electrode can be enhanced. The ratio of the (meth)acrylic acid ester monomer unit in the water-soluble polymer X is usually identical to the ratio of the (meth)acrylic acid ester monomer in all monomers for the water-soluble polymer X (charging ratio).

The water-soluble polymer X may contain, as an optional structural unit, a structural unit having a structure that is formed by polymerizing the following monomers. One type of the optional monomers may be solely used, or two or more types thereof may be used in combination at any ratio.

Examples of the optional monomers may include styrene-based monomers such as, styrene chlorostyrene, vinyl toluene, t-butylstyrene, vinylbenzoic acid, methyl vinylbenzoate, vinyl naphthalene, chloromethylstyrene, hydroxymethylstyrene, α-methylstyrene, and divinylbenzene; amide-based monomers such as acrylamide; α,β-unsaturated nitrile compound monomers such as acrylonitrile and methacrylonitrile; olefin monomers such as ethylene and propylene; halogen atom-containing monomers such as vinyl chloride and vinylidene chloride; vinyl ester monomers such as vinyl acetate, vinyl propionate, vinyl butyrate, and vinyl benzoate; vinyl ether monomers such as methyl vinyl ether, ethyl vinyl ether, and butyl vinyl ether; vinyl ketone monomers such as methyl vinyl ketone, ethyl vinyl ketone, butyl vinyl ketone, hexyl vinyl ketone, and isopropenyl vinyl ketone; and heterocyclic ring-containing vinyl compound monomers such as N-vinylpyrrolidone, vinylpyridine, and vinylimidazole.

Further examples of the optional monomers may include a monomer having a phosphate group, such as: a compound containing a phosphate group and an allyloxy group; and a phosphate group-containing (meth)acrylic acid ester. Examples of the compound including a phosphate group and an allyloxy group may include 3-allyloxy-2-hydroxypropane phosphoric acid. Examples of the phosphate group-containing (meth)acrylic acid ester may include dioctyl-2-methacryloyloxyethyl phosphate, diphenyl-2-methacryloyloxyethyl phosphate, monomethyl-2-methacryloyloxyethyl phosphate, dimethyl-2-methacryloyloxyethyl phosphate, monoethyl-2-methacryloyloxyethyl phosphate, diethyl-2-methacryloyloxyethyl phosphate, monoisopropyl-2-methacryloyloxyethyl phosphate, diisopropyl-2-methacryloyloxyethyl phosphate, mono n-butyl-2-methacryloyloxyethyl phosphate, di n-butyl-2-methacryloyloxyethyl phosphate, monobutoxyethyl-2-methacryloyloxyethyl phosphate, dibutoxyethyl-2-methacryloyloxyethyl phosphate, mono(2-ethylhexyl)-2-methacryloyloxyethyl phosphate, and di(2-ethylhexyl)-2-methacryloyloxyethyl phosphate.

Furthermore, examples of the optional monomers may include a monomer containing a sulfonic acid group. Examples of the monomer containing a sulfonic acid group may include sulfonic acid group-containing monomers or salts thereof, such as a monomer obtained by sulfonating one of conjugated double bonds of a diene compound such as isoprene and butadiene, vinylsulfonic acid, styrenesulfonic acid, allylsulfonic acid, sulfoethyl methacrylate, and sulfopropyl methacrylate; a monomer containing an amido group and a sulfonic acid group or salts thereof, such as 2-acrylamide-2-methylpropane sulfonic acid (AMPS); and a monomer containing a hydroxyl group and a sulfonic acid group or salts thereof, such as 3-allyloxy-2-hydroxypropane sulfonic acid (HAPS).

One type of the water-soluble polymers may be solely used, or two or more types thereof may be used in combination at any ratio. Therefore, the water-soluble polymer for use may be a combination of two or more types of the aforementioned water-soluble polymer X containing the ethylenically unsaturated carboxylic acid monomer unit and the fluorine-containing (meth)acrylic acid ester monomer unit, or a combination of the water-soluble polymer X and a water-soluble polymer other than the water-soluble polymer X. Among these, a combination of the aforementioned water-soluble polymer X and carboxymethyl cellulose is preferably used. Carboxymethyl cellulose may be used in a state of salt, specifically in a state of ammonium salt or alkali metal salt such as sodium salt, and potassium salt. The use of the water-soluble polymer having such a combination can improve adhesion between the water-soluble polymer and the active material.

When the combination of the carboxymethyl cellulose and the water-soluble polymer X is used as the water-soluble polymer, the weight ratio thereof (carboxymethyl cellulose/water-soluble polymer X) is preferably 50/50 or less, more preferably 40/60 or less, and particularly preferably 30/70 or less. When the weight of the water-soluble polymer X is more than that of carboxymethyl cellulose in this manner, adhesion between the water-soluble polymer and the positive electrode active material can be enhanced.

As the water-soluble polymer, water-soluble polymers other than the aforementioned water-soluble polymer X or carboxymethyl cellulose may also be used. Examples of other water-soluble polymers may include (modified) poly(meth)acrylic acid, and ammonium salts and alkali metal salts thereof; a copolymer of (meth)acrylic acid and a sulfonate group-containing monomer, and alkali metal salts thereof; polyvinyl alcohols such as (modified) polyvinyl alcohol, a copolymer of acrylic acid or acrylic acid salt and vinyl alcohol, and a copolymer of maleic anhydride or maleic acid or fumaric acid and vinyl alcohol; and polyethylene glycol, polyethylene oxide, polyvinyl pyrrolidone, modified polyacrylic acid, oxidized starch, phosphate starch, casein, a variety of modified starches, polyvinyl pyrrolidone, polyacrylamide, and polyvinylsulfonic acid. The "(modified) poly-" means "unmodified poly-" and "modified poly-".

The weight average molecular weight of the water-soluble polymer is usually less than that of the particulate acrylic polymer, and is preferably 100 or more, more preferably 500 or more, and particularly preferably 1000 or more, and is preferably 500000 or less, more preferably 250000 or less, and particularly preferably 100000 or less. When the weight average molecular weight of the water-soluble polymer is not less than the lower limit of the aforementioned range, the strength of the water-soluble polymer can be elevated, and a coating layer covering the positive electrode active material can be stabilized. Therefore, cycle property and output property of the secondary battery can be improved. When the weight average molecular weight is not more than the upper limit, the water-soluble polymer can become soft. Accordingly, the swelling of the positive electrode can be suppressed, and ability of the water-soluble polymer to be adsorbed to the positive electrode active material can be improved.

The weight average molecular weight of the water-soluble polymer may be calculated as a polystyrene equivalent value by GPC using as a development solvent a solution of 0.85 g/ml sodium nitrate dissolved in a 10% by volume aqueous solution of dimethylformamide.

The glass transition temperature of the water-soluble polymer is usually 0°C or higher, and preferably 5°C or higher, and is usually 100°C or lower, and preferably 70°C or lower. When the glass transition temperature of the water-soluble polymer falls within the aforementioned range, both the particle falling resistance and the flexibility of the positive electrode can be achieved. The glass transition temperature of the water-soluble polymer may be adjusted by combining a variety of monomers.

The viscosity of a 1% by weight aqueous solution of the water-soluble polymer is preferably 0.1 mPa·s or more, more preferably 0.5 mPa·s or more, and particularly preferably 1 mPa·s or more, and is preferably 20000 mPa·s or less, more preferably 15000 mPa·s or less, and particularly preferably 10000 mPa·s or less. When the aforementioned viscosity is not less than the lower limit of the aforementioned range, the strength of the water-soluble polymer can be enhanced, thereby improving durability of the positive electrode. When the viscosity is not more than the upper limit, the slurry for a surface layer can have favorable coating property. The aforementioned viscosity can be adjusted by, for example, the molecular weight of the water-soluble polymer. The aforementioned viscosity is a value measured using an E-type viscometer at 25°C and at a revolution of 60 rpm.

No particular limitation is imposed on the method for producing the aforementioned water-soluble polymer. For example, the aforementioned water-soluble polymer X containing the ethylenically unsaturated carboxylic acid monomer unit and the fluorine-containing (meth)acrylic acid ester monomer unit may be produced by polymerizing, in an aqueous solvent, a monomer composition containing monomers that are raw materials of the water-soluble polymer X.

The ratio of each monomer in the monomer composition is usually set to be the same as the ratio of each structural unit (for example, the ethylenically unsaturated carboxylic acid monomer unit, the fluorine-containing (meth)acrylic acid ester monomer unit, the cross-linkable monomer unit, and the reactive surfactant monomer unit) in the water-soluble polymer X.

The aqueous solvent for use is usually an aqueous solvent having a boiling point at normal pressure of usually 80°C or higher, and preferably 100°C or higher, and is usually 350°C or lower, and preferably 300°C or lower. Examples of the aqueous solvent are as follows. In the following listed examples, the number in parentheses following the name of the solvent is a boiling point at normal pressure (unit °C), and the value is rounded off or down to the nearest whole number.

Examples of the aqueous solvent may include water (100); ketones such as diacetone alcohol (169) and $\gamma$-butyrolactone (204); alcohols such as ethyl alcohol (78), isopropyl alcohol (82), and normal propyl alcohol (97); glycol ethers such as propylene glycol monomethyl ether (120), methyl cellosolve (124), ethyl cellosolve (136), ethylene glycol tertiary butyl ether (152), butyl cellosolve (171), 3-methoxy-3-methyl-1-butanol (174), ethylene glycol monopropyl ether (150), diethylene glycol monobutyl ether (230), triethylene glycol monobutyl ether (271), and dipropylene glycol monomethyl ether (188); and ethers such as 1,3-dioxolane (75), 1,4-dioxolane (101), and tetrahydrofuran (66). Among these, water is particularly preferable, from the viewpoint of not being combustible and being capable of easily providing a polymer. Alternatively, water may be used as a main solvent, and mixed with an aqueous solvent other than water.

No particular limitation is imposed on the polymerization method. Examples thereof for use may include a solution polymerization method, a suspension polymerization method, a bulk polymerization method, and an emulsion polymerization method. Examples of the polymerization method for use may include ion polymerization, radical polymerization, and living radical polymerization.

Examples of a polymerization initiator may include organic peroxides such as lauroyl peroxide, diisopropyl peroxydicarbonate, di-2-ethylhexyl peroxydicarbonate, t-butyl peroxypivalate, and 3,3,5-trimethyl hexanoyl peroxide; azo compounds such as $\alpha,\alpha'$-azobisisobutyronitrile; ammonium persulfate; and potassium persulfate. One type of the polymerization initiators may be solely used, or two or more types thereof may be used in combination at any ratio. The amount of the polymerization initiator with respect to 100 parts by weight of monomers may be 0.01 parts by weight to 5 parts by weight.

The polymerization temperature and polymerization time may be optionally selected depending on the types of polymerization method and polymerization initiator. The polymerization temperature is usually 0°C or higher, preferably 25°C or higher, and more preferably 30°C or higher, and is usually 100°C or lower, and preferably 80°C or lower. The polymerization time is usually 0.5 hours or more, preferably 1 hour or more, and more preferably 5 hours or more, and is usually 50 hours or less, preferably 30 hours or less, and more preferably 20 hours or less.

By the aforementioned method, a reaction solution containing the water-soluble polymer X in an aqueous solvent is usually obtained. The obtained reaction solution is usually acidic, and the water-soluble polymer X is often dispersed in the aqueous solvent. The water-soluble polymer dispersed in the aqueous solvent in this manner may usually become soluble in the aqueous solvent by adjusting pH of the reaction solution to, for example, 7 to 13. From the reaction solution obtained in this manner, the water-soluble polymer X may be taken out. However, the water-soluble polymer X in a state of being dissolved in the aqueous solvent is usually used for the production of the slurry for a surface layer.

Examples of the method for alkalizing the reaction solution to pH 7 to pH 13 may include the method of adding an alkaline aqueous solution such as an aqueous solution of alkali metal such as an aqueous solution of lithium hydroxide, an aqueous solution of sodium hydroxide, and an aqueous solution of potassium hydroxide; an aqueous solution of alkali earth metal such as an aqueous solution of calcium hydroxide and an aqueous solution of magnesium hydroxide; and an aqueous solution of ammonia. One type of the aforementioned alkaline aqueous solutions may be solely used, or two or more types thereof may be used in combination at any ratio.

The amount of the water-soluble polymer with respect to the total solid content of the slurry for a surface layer is usually 10% by weight or more, preferably 15% by weight or more, and more preferably 20% by weight or more, and is usually 40% by weight or less, preferably 35% by weight or less, and more preferably 30% by weight or less. When the amount of the water-soluble polymer falls within the aforementioned range, the flexibility of the positive electrode material layer can be improved, and the protection effect to the positive electrode active material by the water-soluble polymer can be improved.

The content ratio of the particulate acrylic polymer and the water-soluble polymer in the total solid content of the slurry for a surface layer (that is, the ratio of the sum of the particulate acrylic polymer and the water-soluble polymer) is usually 60% by weight or more, preferably 65% by weight or more, and more preferably 70% by weight or more, and is usually 95% by weight or less. By setting the ratio in this manner, the particulate acrylic polymer and the water-soluble polymer can stably protect the positive electrode material layer. Further, the solid content of the slurry for a surface layer can be stably bound to the positive electrode material layer.

The ratio between the particulate acrylic polymer and the water-soluble polymer in the total solid content of the slurry for a surface layer is, in terms of the ratio (weight ratio) of particulate acrylic polymer/water-soluble polymer, preferably 99.9/0.1 to 95/5, and more preferably 99.9/0.1 to 97/3. When the ratio (weight ratio) of particulate acrylic polymer/water-soluble polymer falls within the aforementioned range, the positive electrode material layer can be uniformly coated with the surface layer, thereby stably protecting the positive electrode material layer.

(Surfactant)

The slurry for a surface layer may contain a surfactant such as an alkyl-based surfactant, a silicon-based surfactant, a fluorine-based surfactant and a metal-based surfactant. The inclusion of the surfactant can prevent repelling when applying the slurry for a surface layer, and improve the smoothness of the positive electrode. One type of the surfactants may be solely used, or two or more types thereof may be used in combination at any ratio.

The amount of the surfactant is preferably in the range where battery property are not influenced, and is preferably the amount that allows the amount of the surfactant to become 10% by weight or less with respect to the slurry for a surface layer.

(Optional additives)

The slurry for a surface layer may contain an optional component other than the aforementioned particulate acrylic polymer, water-soluble polymer, and surfactant. No particular limitation is imposed on the optional component, so long as the battery reaction in the secondary battery is not excessively unfavorably influenced. One type of the optional components may be used, or two or more types thereof may be used.

(Water)

Water functions as a solvent or a dispersion medium in the slurry for a surface layer, and allows the particulate acrylic polymer to disperse therein and the water-soluble polymer to dissolve therein. At this time, the dissolution of the water-soluble polymer causes the particulate acrylic polymer to have favorable dispersibility. The water-soluble polymer also functions as a thickening agent, thereby adjusting the viscosity of the slurry for a surface layer so that the slurry for a surface layer has favorable coating property.

The amount of water is preferably adjusted so that the viscosity becomes suitable for application, depending on the types of the particulate acrylic polymer, the water-soluble polymer, and the optional component. Specifically, the amount of water for use is the amount that allows the solid content concentration of the total of the particulate acrylic polymer, the water-soluble polymer and the optional component to become preferably 1.5% by weight or more, and more preferably 2.0% by weight or more, and become preferably 10% by weight or less, and more preferably 5.0% by weight or less.

(Method for producing slurry for surface layer)

The slurry for a surface layer may be obtained by mixing the particulate acrylic polymer, the water-soluble

polymer, and water, as well as the optional component contained as necessary. The aforementioned components may be mixed at a time, or may be sequentially mixed in any order. The mixing may be performed using a mixer. For example, a mixer for use may be a mixer that is the same as the mixer that can be used in the production of the slurry for a positive electrode material layer.

[1.2.2. Application]

After the slurry for a surface layer is prepared, the prepared slurry for a surface layer is applied onto the positive electrode material layer. The applied amount of the slurry for a surface layer is, in terms of a weight per unit area (the amount of the solid content applied per unit area), preferably 0.1 g/cm$^2$ or more, and more preferably 2 g/cm$^2$ or more, and is preferably 10 g/cm$^2$ or less, and more preferably 8 g/cm$^2$ or less. When the applied amount of the slurry for a surface layer is not less than the lower limit of the aforementioned range, the function of protecting the positive electrode material layer due to the solid content of the slurry for a surface layer can be stably exerted. When the applied amount is not more than the upper limit, resistance caused by the application of the slurry for a surface layer can be prevented from increasing, so that the secondary battery can have favorable battery resistance.
As the method for applying the slurry for a surface layer, a method that is the same as the method for applying the slurry for a positive electrode material layer may be adopted.

[1.2.3. Drying]

After the slurry for a surface layer is applied onto the positive electrode material layer, the applied slurry for a surface layer is dried. The drying conditions such as the drying method, the drying time, and the drying temperature may be, for example, the same as those in the slurry for a positive electrode material layer.

[1.3. Other steps]

In the method for producing the positive electrode for a secondary battery according to the present invention, optional steps other than the aforementioned steps may be performed as necessary.
For example, it is preferable to subject the positive electrode material layer to pressurization treatment using a pressing machine such as a mold press or a roll press, after the layer of the slurry for a positive electrode material layer is dried to form the positive electrode material layer, and before the slurry for a surface layer is applied onto the positive electrode material layer. As a result of the pressurization treatment, the positive electrode material layer can have a reduced porosity. The porosity is preferably 5% or more, and more preferably 7% or more, and is preferably 15% or less, and more preferably 13% or less. When the porosity is not less than the lower limit of the aforementioned range, volume capacity can be increased, and the positive electrode material layer can be prevented from peeling. When the porosity is not more than the upper limit of the aforementioned range, charging efficiency and discharging efficiency can be increased.
For example, when the positive electrode material layer contains a polymer that can be cured by a curing reaction such as a cross-linking reaction, the polymer may be cured at an appropriate time after the slurry for a positive electrode material layer is applied onto the current collector. For example, when the positive electrode material layer contains a thermally cross-linkable polymer, heat treatment may be performed at 120°C or higher for one hour or more.
Furthermore, for example, when the polymer contained in the slurry for a surface layer contains the polymer that can be cured by a curing reaction such as a cross-linking reaction, the polymer may be cured at an appropriate time after the slurry for a surface layer is applied onto the positive electrode material layer.

[2. Positive electrode for secondary battery]

According to the method for producing the positive electrode for a secondary battery of the present invention, a positive electrode including a current collector and a positive electrode material layer formed on the current collector can be obtained. Since the slurry for a surface layer is applied and dried on the positive electrode material layer, the particulate acrylic polymer and the water-soluble polymer exist on the surface of or inside the positive electrode material layer. These particulate acrylic polymer and water-soluble polymer are solid content remaining after water is removed from the applied slurry for a surface layer through drying.
These particulate acrylic polymer and water-soluble polymer form the surface layer on the positive electrode material layer. Alternatively, a portion including the particulate acrylic polymer and water-soluble polymer is formed in a surface portion within the positive electrode material layer. Details thereof are as follows.

(a) The application of the slurry for a surface layer on the positive electrode material layer allows a film of the applied

slurry for a surface layer to be formed on the positive electrode material layer. By drying this film, the surface layer including the solid content of the slurry for a surface layer is formed on the positive electrode material layer.

(b) The application of the slurry for a surface layer on the positive electrode material layer causes infiltration of the applied slurry for a surface layer into the positive electrode material layer, so that a portion including the slurry for a surface layer is formed in a surface portion within the positive electrode material layer. Then, the drying of the slurry for a surface layer having infiltrated into the positive electrode material layer allows a portion containing the solid content of the slurry for a surface layer to be formed in the surface portion within the positive electrode material layer.

Which one of the structures of the aforementioned (a) and (b) is obtained depends on, for example, the composition of the positive electrode material layer, as well as the composition, application conditions, and drying conditions of the slurry for a surface layer. Usually, a part of the applied slurry for a surface layer forms the surface layer as in the aforementioned (a), and another part thereof forms the portion containing the particulate acrylic polymer and water-soluble polymer in the surface portion within the positive electrode material layer as in the aforementioned (b).

In both cases where the structure of the aforementioned (a) is obtained and where the structure of the aforementioned (b) is obtained, the positive electrode material layer is protected by the particulate acrylic polymer and water-soluble polymer that were contained in the slurry for a surface layer. Specifically, by the binding capacity of the particulate acrylic polymer and water-soluble polymer (particularly, the binding capacity of the particulate acrylic polymer), the particles such as the positive electrode active material and the conductive material contained in the positive electrode material layer are stably retained in the positive electrode material layer. Therefore, conductive paths are unlikely to be cut off even when stress is generated in the positive electrode material layer due to expansion and contraction of the positive electrode active material associated with charging and discharging, expansion and contraction caused by temperature variations, and the like. Further, even when the binder contained in the positive electrode material layer deteriorates, the positive electrode active material and the conductive material can be prevented from detaching from the positive electrode material layer due to the deterioration of the binder. Furthermore, since the water-soluble polymer forms a stable coating layer on the surface of the positive electrode active material, resistance increase due to decomposition of the electrolytic solution can be prevented.

Generally, the aforementioned problems such as cutting-off of the conductive paths caused by stress generated in the positive electrode material layer, deterioration of the binder, and decomposition of the electrolytic solution are particularly significant in the high temperature environment. As a countermeasure, the application and drying of the slurry for a surface layer can give effective solution to the aforementioned problems. Therefore, the use of the positive electrode produced by the aforementioned production method realizes the secondary battery having excellent high temperature storage property and high temperature cycle property.

In view of the protection of the positive electrode active material by the polymer, it is also conceivable that, for example, the particulate acrylic polymer and the water-soluble polymer may be added to the slurry for a positive electrode material layer, so that the positive electrode material layer contains the particulate acrylic polymer and the water-soluble polymer. However, in comparison to such a case, the positive electrode produced by the production method according to the present invention can reduce the internal resistance of the secondary battery. Particularly, in the charging and discharging at a low rate (for example, approximately 2 C or less. The current value at which the total capacity of a battery is charged and discharged for one hour is defined as 1 C rate, and 2 C rate means performing charging and discharging at the current value that is twice 1 C rate), increase in internal resistance caused by the application of the slurry for a surface layer is negligibly small. The reason why the internal resistance can be reduced in this manner is not clear, but can be inferred as follows. That is, since the slurry for a surface layer is applied after the positive electrode material layer is formed in the production method according to the present invention, the particulate acrylic polymer and the water-soluble polymer are unevenly distributed on the surface of or inside the positive electrode material layer. Therefore, when compared to the case where the particulate acrylic polymer and the water-soluble polymer are dispersed in the entire positive electrode material layer, increase in resistance caused by the polymer between the particles of the positive electrode active material and between the positive electrode active material and the conductive material comes to be small. It is considered that thereby the internal resistance can be lowered as described above.

Furthermore, the reason why the slurry for a surface layer remains on the surface of the positive electrode material layer or in the applied surface portion, and does not easily enter the overall thickness direction of the positive electrode material layer is not clear, but can be inferred, for example, as follows. That is, since the positive electrode material layer contains the fluorine-containing polymer, the positive electrode material layer comes to have low affinity to water. Therefore, the slurry for a surface layer that is an aqueous slurry cannot easily infiltrate into the pores in the positive electrode material layer. Therefore, it is considered that since the applied slurry for a surface layer cannot enter from the applied surface of the positive electrode material layer into the thickness direction, the slurry remains on the surface of the positive electrode material layer or in the applied surface portion.

Further, the application of the slurry for a surface layer on the positive electrode material layer reinforces the

positive electrode material layer. By such reinforcement, cracks of the positive electrode material layer or peeling of the positive electrode material layer from the current collector do not easily occur even when the positive electrode is bent. That is, flexibility of the positive electrode material layer is improved, and the positive electrode material layer is not easily damaged even when the positive electrode is deformed.

[3. Secondary battery]

The secondary battery according to the present invention has a positive electrode, a negative electrode, and a separator. The secondary battery according to the present invention includes, as the positive electrode, the positive electrode for a secondary battery produced by the aforementioned production method according to the present invention.
The secondary battery according to the present invention includes the positive electrode for a secondary battery produced by the method for producing the present invention, and therefore has excellent high temperature cycle property and high temperature storage property.

[3.1. Negative electrode]

The negative electrode includes a current collector, and a negative electrode material layer formed on the current collector. The negative electrode material layer contains a negative electrode active material and a binder.

[3.1.1. Current collector]

As the current collector, a current collector that is similar to the current collector of the positive electrode may be used. In particular, the current collector for a negative electrode is preferably made of copper.

[3.1.2. Negative electrode material layer]

The negative electrode material layer contains a negative electrode active material. Examples of the negative electrode active material may include carbonaceous materials such as amorphous carbon, graphite, natural graphite, mesocarbon microbeads, pitch-based carbon fiber; and conductive polymers such as polyacene. Other examples thereof may include metals such as silicon, tin, zinc, manganese, iron, and nickel, and alloys thereof; oxides of the metals or alloys; and sulfates of the metals or alloys. Further, metal lithium; lithium alloys such as Li-Al, Li-Bi-Cd, and Li-Sn-Cd; lithium transition metal nitrides; and silicon may also be used. Furthermore, a conductive material may be attached to the surface of the negative electrode active material by a mechanical modification method. One type of these negative electrode active materials may be solely used, or two or more types thereof may be used in combination at any ratio.
The particle diameter of the negative electrode active material is appropriately selected in consideration of other structural requirements of the secondary battery. From the viewpoint of improvement in battery properties such as initial efficiency, load property, and cycle property, the volume average particle diameter of the negative electrode active material is usually 1 μm or more, and preferably 15 μm or more, and is usually 50 μm or less, and preferably 30 μm or less.
As the binder for the negative electrode material layer, a variety of polymer components may be used. The inclusion of the binder improves adhesion property of the negative electrode material layer, and increases strength to mechanical force applied during processes such as winding of the negative electrode. The inclusion of the binder also reduces the tendency of detachment of the negative electrode material layer, and thereby reduces the possibility of, for example, short circuit due to detached substances.
Examples of the binder for the negative electrode material layer for use may include polyethylene, polytetrafluoroethylene (PTFE), polyvinylidene fluoride (PVdF), a tetrafluoroethylene-hexafluoropropylene copolymer (FEP), polyacrylic acid derivatives, and polyacrylonitrile derivatives.
Furthermore, soft polymers in the following examples may also be used as the binder. That is, examples of the soft polymers may include:

(i) an acrylic-based soft polymer which is a homopolymer of acrylic acid or methacrylic acid derivatives, or a copolymer of acrylic acid or methacrylic acid derivatives and a monomer that can be copolymerized therewith, such as polybutyl acrylate, polybutyl methacrylate, polyhydroxy ethyl methacrylate, polyacrylamide, polyacrylonitrile, a butyl acrylate·styrene copolymer, a butyl acrylate·acrylonitrile copolymer, and a butyl acrylate·acrylonitrile·glycidyl methacrylate copolymer;
(ii) an isobutylene-based soft polymer such as polyisobutylene, isobutylene·isoprene rubber, and an isobutylene·styrene copolymer;
(iii) a diene-based soft polymer such as polybutadiene, polyisoprene, a butadiene·styrene random copolymer, an

isoprene·styrene random copolymer, an acrylonitrile·butadiene copolymer, an acrylonitrile·butadiene·styrene copolymer, a butadiene·styrene·block copolymer, a styrene·butadiene·styrene·block copolymer, an isoprene·styrene·block copolymer, and a styrene·isoprene·styrene·block copolymer;

(iv) a silicon-containing soft polymer such as dimethylpolysiloxane, diphenylpolysiloxane, and dihydroxypolysiloxane;

(v) an olefin-based soft polymer such as liquid polyethylene, polypropylene, poly-1-butene, an ethylene·α-olefin copolymer, a propylene·α-olefin copolymer, an ethylene·propylene·diene copolymer (EPDM), and an ethylene·propylene·styrene copolymer;

(vi) a vinyl-based soft polymer such as polyvinyl alcohol, polyvinyl acetate, polyvinyl stearate, and a vinyl acetate·styrene copolymer;

(vii) an epoxy-based soft polymer such as polyethylene oxide, polypropylene oxide, and epichlorohydrin rubber;

(viii) a fluorine-containing soft polymer such as vinylidene fluoride-based rubber and tetrafluoroethylene-propylene rubber; and

(ix) other soft polymers such as natural rubber, polypeptide, protein, polyester-based thermoplastic elastomer, vinyl chloride-based thermoplastic elastomer, and polyamide-based thermoplastic elastomer. These soft polymers may have a cross-linked structure, or may include a functional group introduced by modification.

One type of the binders may be solely used, or two or more types thereof may be used in combination at any ratio.

The amount of the binder in the negative electrode material layer with respect to 100 parts by weight of the negative electrode active material is preferably 0.1 parts by weight or more, more preferably 0.2 parts by weight or more, and particularly preferably 0.5 parts by weight or more, and is preferably 5 parts by weight or less, more preferably 4 parts by weight or less, and particularly preferably 3 parts by weight or less. When the amount of the binder falls within the aforementioned range, the negative electrode active material can be prevented from detaching from the negative electrode material layer without inhibiting a battery reaction.

The binder is usually prepared in a state of being contained in a solution or a dispersion liquid for producing the negative electrode material layer. The viscosity of the solution or the dispersion liquid at that time is usually 1 mPa·s or more, and preferably 50 mPa·s or more, and is usually 300,000 mPa·s or less, and preferably 10,000 mPa·s or less. The viscosity is a value when measured using a B-type viscometer at 25°C and at a revolution of 60 rpm.

Furthermore, the negative electrode material layer may contain an optional component other than the negative electrode active material and the binder, as long as the effects of the present invention are not significantly impaired. Examples thereof may include components that can be contained in the positive electrode material layer, such as the conductive material and the reinforcing agent.

The thickness of the negative electrode material layer is usually 5 μm or more, and preferably 10 μm or more, and is usually 300 μm or less, and preferably 250 μm or less.

[3.2. Separator]

A separator is a member that is generally disposed between a positive electrode and a negative electrode for preventing short circuit of the electrodes. As the separator, a member having an organic separator layer is usually used. Examples of the organic separator layer for use may include a porous substrate having micropores, and a porous substrate composed of an organic material is usually used. Specific examples of the organic separator layer may include a microporous film or a nonwoven fabric containing polyolefin resins such as polyethylene and polypropylene, aromatic polyamide resins, and the like.

The thickness of the organic separator layer is usually 0.5 μm or more, and preferably 1 μm or more, and is usually 40 μm or less, preferably 30 μm or less, and more preferably 10 μm or less. When the thickness is within this range, resistance within the battery due to the separator decreases, and workability during the production of a battery is excellent.

The separator preferably includes a porous membrane layer. The porous membrane layer is a layer containing non-conductive particles, and is usually formed on the organic separator layer. Generally, the organic separator layer may contract when the temperature of the secondary battery increases to high level by internal and external stimuli. As a countermeasure to this, the organic separator layer may be provided with the porous membrane layer, whereby contraction at high temperature can be inhibited, and strength of the separator can be increased. Accordingly, safety can be improved. Even when the separator includes the porous membrane layer, the electrolytic solution can penetrate the porous membrane layer, so that rate property or the like are not adversely affected.

The separator preferably has the aforementioned porous membrane layer on the positive electrode side of the organic separator layer. This can provide the effect of inhibiting decomposition of the electrolytic solution on the positive electrode side.

As the non-conductive particles contained in the porous membrane layer, inorganic particles may be used, and organic particles may also be used. The inorganic particles are excellent in dispersion stability in a solvent, and are

unlikely to precipitate in a slurry, so that a uniform slurry state can be maintained for a long period of time. In particular, as a material of the non-conductive particles, an electrochemically stable material is preferable. From such a viewpoint, preferred examples of the inorganic material of the non-conductive particles may include oxide particles such as aluminum oxide (alumina), hydrate of aluminum oxide (boehmite (AlOOH), gibbsite ($Al(OH)_3$), silicon oxide, magnesium oxide (magnesia), magnesium hydroxide, calcium oxide, titanium oxide (titania), $BaTiO_3$, ZrO, and alumina-silica composite oxide; nitride particles such as aluminum nitride and boron nitride; covalent crystal particles such as silicon and diamond; poorly-soluble ion crystal particles such as barium sulfate, calcium fluoride and barium fluoride; and clay fine particles such as talc and montmorillonite. Among these, from the viewpoint of stability in an electrolytic solution and electropotential stability, oxide particles are preferable. Among these, from the viewpoint of low water absorption and excellent heat resistance (for example, resistance to a high temperature of 180°C or higher), titanium oxide, aluminum oxide, hydrate of aluminum oxide, magnesium oxide, and magnesium hydroxide are more preferable, and aluminum oxide, hydrate of aluminum oxide, magnesium oxide, and magnesium hydroxide are particularly preferable.

As the organic particles, particles of a polymer are usually used. Affinity of the organic particles to water can be controlled by adjusting the types and amounts of functional groups on surfaces of the organic particles. By such controlling, water content in the porous membrane layer can also be controlled. Preferred examples of the organic material of the non-conductive particles may include a variety of polymer compounds such as polystyrene, polyethylene, polyimide, melamine resins, and phenolic resins. The aforementioned polymer compounds constituting particles may be used in a form of a mixture, a modified body, a derivative, a random copolymer, an alternating copolymer, a graft copolymer, a block copolymer, a cross-linked body and the like. The organic particles may be formed with a mixture of two or more polymer compounds.

The non-conductive particles may be subjected to element substitution, surface treatment, solid solution formation, or the like, as necessary. The non-conductive particles may solely contain one type of the aforementioned materials in one particle, or may contain two or more types thereof in combination at any ratio in one particle. Furthermore, the non-conductive particles for use may be a combination of two or more types of particles each being formed of a different material.

The volume average particle diameter D50 of the non-conductive particles is usually 0.01 μm or more, and preferably 0.05 μm or more, and is usually 5 μm or less, preferably 2 μm or less, and more preferably 1 μm or less. When the non-conductive particles having such a volume average particle diameter are used, a uniform porous membrane layer can be obtained even the thickness thereof is thin. Accordingly, high capacity of the battery can be realized. The volume average particle diameter D50 represents a particle size at a cumulative volume calculated from the small diameter side of 50% in a particle size distribution measured by a laser diffraction method.

The BET specific surface area of the non-conductive particles is, for example, 0.9 $m^2/g$ or more, and preferably 1.5 $m^2/g$ or more. From the viewpoint of inhibiting aggregation of the non-conductive particles, and optimizing the fluidity of the slurry for a porous membrane, the BET specific surface area is preferably not extremely large, and is, for example, preferably 150 $m^2/g$ or less.

The ratio of the non-conductive particles in the porous membrane layer is usually 70% by weight or more, preferably 75% by weight or more, and more preferably 80% by weight or more, and is usually 99% by weight or less, preferably 98% by weight or less, and more preferably 97% by weight or less. When the ratio of the non-conductive particles in the porous membrane layer falls within this range, the non-conductive particles can have contact parts with each other, while spaces among the non-conductive particles are formed to a degree such that ions are not inhibited from transferring. Therefore, when the content ratio of the non-conductive particles is within the aforementioned range, the strength of the porous membrane layer can be improved, and short circuit of the battery can be stably prevented.

The porous membrane layer preferably contains a binder for the porous membrane layer. In the porous membrane layer, the binder preferably has a particle shape. When the binder for the porous membrane layer is in a shape of particles, the binder can lie among the non-conductive particles and between the non-conductive particles and the organic separator layer, to exert binding effects.

No particular limitation is imposed on a polymer that forms the binder, so long as it has binding property. One type of the binders may be solely used, or two or more types thereof may be used in combination at any ratio.

In particular, as the binder for the porous membrane, a particulate acrylic polymer is preferably used. For example, a particulate acrylic polymer that is similar to that for the slurry for a surface layer may be used. This can enhance adhesion between the porous membrane layer and the positive electrode material layer on which the slurry for a surface layer is applied and dried.

The amount of the binder with respect to 100 parts by weight of the non-conductive particles is preferably 1 part by weight or more, and more preferably 2 parts by weight or more, and is preferably 15 parts by weight or less, and more preferably 10 parts by weight or less. When the amount of the binder is not less than the lower limit of the aforementioned range, the particle falling of the non-conductive particles can be stably prevented. When the amount is not more than the upper limit, porosity of the porous membrane layer can be maintained at a high level to thereby suppress the resistance of the porous membrane layer, and battery properties are kept at a favorable state.

Furthermore, the porous membrane layer may contain an optional component other than the aforementioned components. As the optional component, those which do not have an excessively adverse effect on the battery reaction in the secondary battery may be used. One type of the optional components may be used, and two or more types thereof may also be used.

The thickness of the porous membrane layer is preferably 0.5 μm to 20 um. When the thickness of the porous membrane layer is not less than the lower limit of the aforementioned range, the porous membrane layer can have a uniform thickness. When the thickness is not more than the upper limit, the capacity of the battery per volume or weight can be increased.

The porous membrane layer may be produced by, for example, applying onto a substrate a slurry for a porous membrane containing the non-conductive particles, the binder, and a medium, as well as optional components as necessary, and drying the applied slurry. As the medium, an aqueous medium is usually used. As the aqueous medium, water is usually used. Usually, the amount of the medium contained in the slurry for a porous membrane may be optionally set within the range that allows the slurry for a porous membrane to have a viscosity that does not impair workability during the production of the porous membrane layer. Specifically, the amount of the medium may be determined so that the solid content concentration of the slurry for a porous membrane usually becomes 5% by weight to 30% by weight.

The slurry for a porous membrane may contain a viscosity modifier. As the viscosity modifier, a polymer that can be dissolved in a medium is usually used. For example, when water is used as the medium, a water-soluble polymer is used as the viscosity modifier. When the aqueous medium is used as the medium in the slurry for a porous membrane, a part of the viscosity modifier dissolves in the medium, while another part of the viscosity modifier is adsorbed on the surfaces of the non-conductive particles and the binder for a porous membrane. Accordingly, the non-conductive particles and the binder for a porous membrane are covered with a layer of the viscosity modifier (a dispersion stabilizing layer), thereby improving the dispersibility in water of the non-conductive particles and the binder for a porous membrane.

Examples of the viscosity modifier may include cellulose-based polymers such as carboxymethyl cellulose, methylcellulose, and hydroxypropyl cellulose, and ammonium salts and alkali metal salts thereof; (modified) poly(meth)acrylic acid, (modified) polyitaconic acid, and ammonium salts and alkali metal salts thereof; polyvinyl alcohols such as (modified) polyvinyl alcohol, a copolymer of acrylic acid or acrylic acid salt and vinyl alcohol, and a copolymer of maleic anhydride or maleic acid or fumaric acid and vinyl alcohol; and polyethylene glycol, polyethylene oxide, polyvinyl pyrrolidone, modified polyacrylic acid, oxidized starch, phosphate starch, casein, chitosan, polyvinyl pyrrolidone, polyacrylamide, and a variety of modified starches. The "(modified) poly" means "unmodified poly" and "modified poly".

The amount of the viscosity modifier with respect to 100 parts by weight of the non-conductive particles is preferably 0.03 parts by weight or more, more preferably 0.18 parts by weight or more, and particularly preferably 0.3 parts by weight or more, and is preferably 19 parts by weight or less, more preferably 15 parts by weight or less, and particularly preferably 12 parts by weight or less. When the amount of the viscosity modifier falls within the aforementioned range, the slurry for a porous membrane can have favorable application property.

The slurry for a porous membrane may contain, for example, a dispersant. Examples of the dispersant may include an anionic compound, a cationic compound, a nonionic compound, and a polymer compound. Usually, specific type of the dispersant is selected depending on the configuration of the non-conductive particles.

The slurry for a porous membrane may contain, for example, a surfactant such as an alkyl-based surfactant, a silicon-based surfactant, a fluorine-based surfactant, and a metal-based surfactant. The inclusion of the surfactant can prevent repelling when applying the slurry for a porous membrane, and improve the smoothness of the porous membrane layer. The amount of the surfactant is preferably in the range that does not impair battery property, and is preferably 10% by weight or less in the porous membrane layer.

The slurry for a porous membrane may contain, for example, nanoparticles having a volume average particle diameter of less than 100 nm, such as fumed silica and fumed alumina. The inclusion of the nanoparticles can control thixotropic property of the slurry for a porous membrane, and furthermore, improve leveling property of the porous membrane layer.

Furthermore, the slurry for a porous membrane may contain, for example, an electrolytic solution dispersion inhibitor.

The substrate on which the slurry for a porous membrane is applied is not limited, and may be, for example, a release film. In this case, the slurry for a porous membrane may be applied onto the surface of the release film to obtain a slurry layer, and the obtained slurry layer may be dried to obtain a porous membrane layer. Thereafter, the porous membrane layer may be peeled from the release film. However, from the viewpoint of omitting the step of peeling the porous membrane layer so as to improve production efficiency, a battery element is usually used as the substrate. Specific examples of such a battery element may include the organic separator layer.

Examples of the method for applying the slurry for a porous membrane may include a doctor blade method, a dipping method, a reverse roll method, a direct roll method, a gravure method, an extrusion method, and a brushing method. Among these, a dipping method and a gravure method are preferable since a uniform porous membrane layer can thereby be obtained.

The slurry for a porous membrane is applied to obtain a slurry layer, and then the obtained slurry layer is dried. Accordingly, a porous membrane layer may be obtained. Examples of the drying method may include drying with air such as warm air, hot air, and low moisture air; vacuum drying; and a drying method by irradiation with (far) infrared rays, electron beams or the like. The drying temperature is set to be a temperature that allows the medium to vaporize and be removed from the coat. When the binder for a porous membrane has a thermally cross-linkable group, the drying is preferably performed at a high temperature higher than the temperature that allows the thermally cross-linkable group to cause a cross-linking reaction. When the drying and the cross-linking reaction are simultaneously performed, the number of steps can be reduced, and production efficiency can thereby be improved. The drying is usually performed at 40°C to 120°C.

In the aforementioned method for producing the porous membrane layer, other steps may further be performed. For example, a mold press or a roll press may be used for performing pressurization treatment. This can improve adhesion between the substrate and the porous membrane layer. Such pressurization treatment is particularly useful when the organic separator layer is used as the substrate. However, when the pressurization treatment is excessively performed, porosity of the porous membrane layer can be impaired. Therefore, it is preferable that the pressure and the pressurizing time are controlled in an appropriate manner.

[3.3. Electrolytic solution]

As an electrolytic solution, an organic electrolytic solution in which a support electrolyte is dissolved in an organic solvent may be usually used. Examples of the support electrolyte for use may include lithium salt. Examples of the lithium salt may include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Among these, $LiPF_6$, $LiClO_4$, and $CF_3SO_3Li$ are preferable, because these are easily dissolved in a solvent, and indicate a high dissociation degree. One type of the electrolytes may be solely used, or two or more types thereof may be used in combination at any ratio. Usually, since the support electrolyte having a higher dissociation degree tends to have higher lithium ion conductivity, the lithium ion conductivity can be adjusted by the type of the support electrolyte.

As the organic solvent used in the electrolytic solution, an organic solvent in which the support electrolyte can be dissolved may be used. For example, carbonates such as dimethyl carbonate (DMC), ethylene carbonate (EC), diethyl carbonate (DEC), propylene carbonate (PC), butylene carbonate (BC), and methyl ethyl carbonate (MEC); ethers such as γ-butyrolactone and methyl formate; ethers such as 1,2-dimethoxyethane and tetrahydrofuran; and sulfur-containing compounds such as sulfolane and dimethyl sulfoxide are suitably used. A mixed liquid of these solvents may also be used. Among these, carbonates are preferable because of high permittivity and wide range of stable electropotential region. Usually, since the solvent having a lower viscosity tends to cause higher lithium ion conductivity, the lithium ion conductivity can be adjusted by the type of the solvent.

The concentration of the support electrolyte in the electrolytic solution is usually 1% by weight or more, and preferably 5% by weight or more, and is usually 30% by weight or less, and preferably 20% by weight or less. Depending on the type of the support electrolyte, the concentration may sometimes be usually 0.5 mol/L to 2.5 mol/L. When the concentration of the support electrolyte is extremely low or extremely high, the ion conductivity tends to decrease. Usually, since the electrolytic solution having a lower concentration causes polymer particles such as a binder to have a larger swelling degree, the lithium ion conductivity can be adjusted by regulating the concentration of the electrolytic solution.

Furthermore, the electrolytic solution may contain, as necessary, an additive or the like.

[4. Method for producing secondary battery]

The method for producing a secondary battery according to the present invention may be, for example, the following method. That is, firstly, a stacked body for a secondary battery including a positive electrode, a separator, and a negative electrode in this order is produced. Thereafter, the obtained stacked body for a secondary battery is wound, bent or the like depending on the battery shape, and placed in a battery container. Then, an electrolytic solution is injected in the battery container, and the battery container is sealed. Accordingly, a secondary battery according to the present invention is obtained. As necessary, an overcurrent prevention element such as a fuse and a PTC element, a lead plate, an expanded metal or the like may be placed so that the excessive charging and discharging and the increase in pressure inside the battery can be prevented. The shape of a battery may be any one of, for example, coin type, button type, sheet type, cylindrical, square, and flat-type.

The stacked body for a secondary battery may be produced by stacking the separator on the side of the positive electrode material layer where the slurry for a surface layer has been applied, and also stacking the negative electrode on the separator. Therefore, the stacked body for a secondary battery may be produced by a production method including: a step of applying a slurry for a positive electrode material layer onto a current collector and drying the applied slurry to

form a positive electrode material layer; a step of applying a slurry for a surface layer onto the positive electrode material layer and drying the applied slurry; a step of stacking a separator on the side of the positive electrode material layer where the slurry for a surface layer has been applied; and a step of stacking a negative electrode on the separator.

The stacked body may be obtained by sandwiching the separator between the positive electrode and the negative electrode. The method for preparing the stacked body may be any of known methods. For example, a stacked body having a structure in which positive electrodes and negative electrodes are alternately stacked to each other with separators interposed therebetween may be formed by: a method of stacking positive electrodes and negative electrodes with separators interposed therebetween, and winding the stacked product to render the stacked body a wound structure; a method of stacking positive electrodes and negative electrodes with separators interposed therebetween, and bending the stacked product; a method of stacking positive electrodes, negative electrodes, and separators in multiple layers; or the like.

[Examples]

The present invention will be specifically described hereinbelow by way of Examples. However, the present invention is not limited to the following Examples and may be implemented with any modifications without departing from the scope of the claims and equivalents thereto. Unless otherwise specified, "part" and "%" representing an amount in the following description are based on weight. Furthermore, a (meth)acrylonitrile monomer unit refers to a structural unit having a structure that is formed by polymerizing (meth)acrylonitrile. An allyl methacrylate unit refers to a structural unit having a structure that is formed by polymerizing allyl methacrylate. Unless otherwise specified, the operations in the following were performed under the conditions of room temperature and normal pressure.

[Evaluation methods]

[Swelling degree of particulate acrylic polymer to non-aqueous electrolytic solution]

A particulate acrylic polymer was poured in a Teflon petri dish and dried to obtain a film. Then, 4 $cm^2$ of the film was cut out, weighed (pre-immersion weight A), and thereafter immersed in an electrolytic solution at 60°C. The immersed film was taken out after 72 hours, wiped with towel paper, and then immediately weighed (post-immersion weight B). The swelling degree of the particulate acrylic polymer to the electrolytic solution was calculated from the following formula, and evaluated in accordance with the following criteria. Lower swelling degree is indicative of better battery property (high temperature cycle property). As the electrolytic solution, a 1.0 mol/L solution of $LiPF_6$ dissolved in a mixed solvent of ethylene carbonate (EC) and diethyl carbonate (DEC) having a volume ratio at 20°C of EC:DEC = 1:2 was used.

$$\text{Swelling degree} = B/A$$

[Flexibility property]

The positive electrode is cut out into a rectangular of 1 cm in width x 5 cm in length to be used as a test piece. The test piece is placed on a desk with the surface on the current collector side facing downward, and a stainless rod having a diameter of 1 mm is laid on the surface of the current collector side in a width direction on the center (position at 2.5 cm from the edge) in the length direction. The test piece is bent at 180° around this stainless rod such that the positive electrode material layer on which the slurry for a surface layer is applied is outwardly exposed. Ten test pieces are tested. The bent portion of the positive electrode material layer in each test piece is observed for the presence or absence of cracks or peelings, and judged in accordance with the following criteria. Fewer cracks or peelings are indicative of better flexibility of the positive electrode.

A: Cracks or peelings are not observed on all of 10 test pieces.
B: Cracks or peelings are observed on 1 to 3 pieces of 10 test pieces.
C: Cracks or peelings are observed on 4 to 9 pieces of 10 test pieces.
D: Cracks or peelings are observed on all of 10 test pieces.

[High temperature cycle property of secondary battery]

The lithium ion secondary battery of a laminate-type cell was left stand for 24 hours in an environment of 25°C, and thereafter subjected to charging and discharging operation to 4.2 V with a charging and discharging rate of 0.1 C

in an environment of 25°C, to measure an initial capacity $C_0$. Furthermore, charging and discharging were repeated in an environment of 60°C, and a capacity $C_2$ after 100 cycles was measured. The high temperature cycle property was evaluated based on a charging and discharging capacity retention rate $\Delta C_C$ represented by $\Delta C_C = C_2/C_0 \times 100$ (%). Higher value of this charging and discharging capacity retention rate $\Delta C_C$ is indicative of better high temperature cycle property.

Using the charging and discharging capacity retention rate $\Delta C_C$ as the evaluation criteria of the high temperature cycle property, evaluation was made in accordance with the following criteria. Higher value of the charging and discharging capacity retention rate $\Delta C_C$ is indicative of better high temperature cycle property.

A: Charging and discharging capacity retention rate $\Delta C_C$ is not less than 80%.
B: Charging and discharging capacity retention rate $\Delta C_C$ is not less than 70% and less than 80%.
C: Charging and discharging capacity retention rate $\Delta C_C$ is not less than 60% and less than 70%.
D: Charging and discharging capacity retention rate $\Delta C_C$ is not less than 50% and less than 60%.
E: Charging and discharging capacity retention rate $\Delta C_C$ is not less than 40% and less than 50%.
F: Charging and discharging capacity retention rate $\Delta C_C$ is less than 40%.

[High temperature storage property of secondary battery]

A laminate cell-type lithium ion secondary battery was charged in an environment of 25°C by a constant current method at 0.1 C up to 4.2 V, and thereafter stored at 60°C for 20 days. The open circuit voltage (referred to hereinbelow as an "OCV") before the onset of storage at 60°C and the OCV after the storage at 60°C for 20 days were measured. Then, the ratio of the OCV before the onset of storage at 60°C relative to the OCV after the storage at 60°C for 20 days was defined as an OCV maintenance ratio, and judged in accordance with the following criteria. Higher OCV maintenance ratio is indicative of better high temperature storage property, that is, better lifetime property.

A: OCV is not less than 99.0%.
B: OCV is not less than 98.8% and less than 99.0%.
C: OCV is not less than 98.6% and less than 98.8%.
D: OCV is not less than 98.4% and less than 98.6%.
E: OCV is not less than 98.2% and less than 98.4%.
F: OCV is not less than 98.0% and less than 98.2%.
G: OCV is less than 98.0%.

[Rate property of secondary battery]

A laminate cell-type lithium ion secondary battery was subjected to a charging-discharging cycle in which, in an environment of 25°C, charging was performed at a constant current of 0.1 C up to 4.2 V and discharging was performed at a constant current of 0.1 C down to 3 V; and a charging-discharging cycle in which, at 25°C, charging was performed at a constant current of 1 C up to 4.2 V and discharging was performed at a constant current of 1 C down to 3 V. The ratio in percentage of the discharging capacity at 1 C relative to the battery capacity at 0.1 C was calculated, and the calculated ratio was defined as charging and discharging rate property.

The battery capacity at 0.1 C refers to the discharging capacity when discharging is performed at a constant current of 0.1 C down to 3 V, whereas the discharging capacity at 1 C refers to the discharging capacity when discharging is performed at a constant current of 1 C down to 3 V.

The charging and discharging rate property was evaluated with the following criteria. Higher value is indicative of smaller internal resistance and capability of high-speed charging and discharging.

A: Charging and discharging rate property is not less than 80%.
B: Charging and discharging rate property is not less than 75% and less than 80%.
C: Charging and discharging rate property is not less than 70% and less than 75%.
D: Charging and discharging rate property is less than 70%.

[Example 1]

(1.1. Production of separator)

(1.1.1. Production of particulate polymer 1)

In a polymerization tank A, 10.78 parts of 2-ethylhexyl acrylate, 1.24 parts of acrylonitrile, 0.12 parts of sodium lauryl sulfate, and 79 parts of ion-exchanged water were placed. In this polymerization tank A, 0.2 parts of ammonium persulfate as a polymerization initiator and 10 parts of ion exchanged water were further added. The mixture was heated to 60°C, and stirred for 90 minutes.

In another polymerization tank B, 65.22 parts of 2-ethylhexyl acrylate, 18.76 parts of acrylonitrile, 2.5 parts of methacrylic acid, 1.5 parts of allyl methacrylate, 0.7 parts of sodium lauryl sulfate, and 46 parts of ion exchanged water were placed and stirred, to prepare an emulsion. This emulsion was successively added from the polymerization tank B to the polymerization tank A over approximately 180 minutes. Thereafter, the mixture was stirred for approximately 120 minutes, and cooled when the consumption amount of monomers became 95% to terminate the reaction. Thereafter, pH was adjusted with a 4% NaOH aqueous solution, so that a composition containing the particulate polymer 1 was obtained.

The glass transition temperature of the obtained particulate polymer 1 was -32°C, and the number average particle diameter thereof was 0.15 μm. The content ratio of the (meth)acrylic acid ester monomer unit in the particulate polymer 1 was 76%; the content ratio of the vinyl monomer unit having an acid component was 2.5%; the content ratio of the (meth)acrylonitrile monomer unit was 20%; and the content ratio of the allyl methacrylate unit was 1.5%.

Into the aforementioned composition containing the particulate polymer 1, a 5% aqueous solution of sodium hydroxide was added, so that pH was adjusted to 8. Thereafter, distillation with heating under reduced pressure was performed to remove unreacted monomers. Subsequently, the resultant product was cooled down to 30°C or lower to obtain an aqueous dispersion liquid containing the particulate polymer 1. The swelling degree of the particulate polymer 1 to the non-aqueous electrolytic solution was 3.8 times.

(1.1.2. Production of slurry for porous membrane)

As the non-conductive particles, alumina particles ("AKP-3000" manufactured by Sumitomo Chemical Company, Limited, volume average particle diameter D50 = 0.45 μm, tetrapod (registered trademark)-like particles) were prepared.

As the viscosity modifier, carboxymethyl cellulose ammonium salt ("1220" manufactured by Daicel FineChem Ltd.) was used. The viscosity of a 1% aqueous solution of this viscosity modifier was 20 mPa·s to 50 mPa·s.

100 parts of the non-conductive particles, and 0.75 parts in terms of the solid content of the aforementioned 1% aqueous solution of the viscosity modifier were mixed. Then, ion exchanged water was added to this mixture so that the solid content concentration was adjusted to 40% by weight, and the resultant mixture was stirred. To this, 2 parts in terms of the solid content of an aqueous dispersion liquid containing the particulate polymer 1 was mixed as the binder. Furthermore, to this, 0.2 parts of a polyethylene glycol-type surfactant ("SN Wet 366" manufactured by San Nopco Limited) and 0.25 parts of a dispersant ("Aqualic GL366" manufactured by Nippon Shokubai Co., Ltd.) were mixed, to produce a slurry for a porous membrane 1.

(1.1.3. Formation of porous membrane layer)

An organic separator layer formed of a polypropylene porous substrate (manufactured by Celgard Inc., product name 2500, thickness 25 μm) was prepared. On one surface of the prepared organic separator layer, the slurry for porous membrane layer 1 was applied, and dried at 60°C for 10 minutes, so that a porous membrane layer was formed. Accordingly, a separator having a thickness of 30 μm and including the porous membrane layer and the organic separator layer was obtained.

(1.2. Production of positive electrode)

(1.2.1. Production of nitrile group-containing acrylic polymer (A1))

Into an autoclave equipped with a stirrer, 164 parts by weight of ion exchanged water, 59.5 parts by weight of 2-ethylhexyl acrylate, 20 parts by weight of methacrylic acid, 20 parts by weight of acrylonitrile, 0.5 parts by weight of 2-acrylamide-2-methylpropane sulfonic acid, 0.3 parts of potassium persulfate as a polymerization initiator, and 1.6 parts of sodium lauryl sulfate as an emulsifier were placed, and sufficiently stirred. Thereafter, the mixture was heated at 70°C

for three hours and at 80°C for two hours for polymerization. Steam was introduced into this to remove unreacted monomers, so that an aqueous dispersion liquid of a nitrile group-containing acrylic polymer (A1) was obtained. The polymerization conversion rate calculated from the solid content concentration was 96%.

To 100 parts of this aqueous dispersion liquid of the nitrile group-containing acrylic polymer (A1), 500 parts of N-methylpyrrolidone was added, and all of water and remained monomers were evaporated under reduced pressure. Thereafter, 81 parts of N-methylpyrrolidone was evaporated, to obtain 8% by weight N-methylpyrrolidone solution of the nitrile group-containing acrylic polymer (A1). The swelling degree of the nitrile group-containing acrylic polymer (A1) to the non-aqueous electrolytic solution at this time was 1.7 times, and the THF insoluble content was 10% or less.

(1.2.2. Formation of positive electrode material layer)

In a planetary mixer, mixed were 100 parts of $LiCoO_2$ having a volume average particle diameter of 20 μm and having a layer structure as the positive electrode active material; 2 parts of acetylene black (volume average particle diameter 35 nm, specific surface area 68 $m^2/g$) as the conductive material; 1.6 parts of mixed polyvinylidene fluoride (a fluorine-containing polymer, a 1:1 (weight ratio) mixture of "KYNAR HSV900" and "KYNAR720" both manufactured by Arkema Inc.) and 0.4 parts in terms of the solid content of an N-methylpyrrolidone solution of the nitrile group-containing acrylic polymer (A1) as the binder; and an appropriate amount of N-methylpyrrolidone. Thus, a slurry for a positive electrode was prepared.

The aforementioned slurry for a positive electrode was applied onto an aluminum foil having a thickness of 20 μm using a comma coater so that the film thickness after drying became approximately 200 μm. Thereafter, the applied slurry was dried for two minutes (at a speed of 0.5 m/min, 60°C), and subjected to heat treatment for two minutes (120°C), so that an electrode raw material was obtained. This electrode raw material was rolled with a roll press, so that a positive electrode including a positive electrode material layer having a thickness of 80 μm was obtained.

(1.2.3. Adjustment of water-soluble polymer X1)

In a 5 MPa pressure resistant container equipped with a stirrer, 32.5 parts of methacrylic acid (ethylenically unsaturated carboxylic acid monomer), 7.5 parts of 2,2,2-trifluoroethyl methacrylate (fluorine-containing (meth)acrylic acid ester monomer), 0.8 parts of ethylene dimethacrylate (cross-linkable monomer), 58.0 parts of butyl acrylate (optional monomer), 1.2 parts of polyoxyalkylene alkenyl ether ammonium sulfate (reactive surfactant monomer, manufactured by Kao Corporation, trade name "Latemul PD-104"), 0.6 parts of t-dodecyl mercaptan, 150 parts of ion exchanged water, and 0.5 parts of potassium persulfate (polymerization initiator) were placed, and sufficiently stirred. Thereafter, the mixture was heated to 60°C to initiate polymerization. When the polymerization conversion rate became 96%, the mixture was cooled down to terminate the reaction. Thus, a mixture containing a water-soluble polymer X1 was obtained. To this mixture containing the water-soluble polymer X1, a 10% ammonia water was added to adjust pH to 8. Thus, a desired aqueous solution containing the water-soluble polymer X1 was obtained.

(1.2.4. Production of slurry for surface layer)

As the water-soluble polymer, 0.075 parts of carboxymethyl cellulose ammonium salt ("1220" manufactured by Daicel FineChem Ltd.), 0.675 parts in terms of the solid content of the aforementioned aqueous solution containing the water-soluble polymer X1, and 0.25 parts of sodium salt of a copolymer of acrylic acid and 2-hydroxy-3-allyloxy propane sulfonic acid ("Aqualic GL366" manufactured by Nippon Shokubai Co., Ltd.) were mixed. To this mixture, ion exchanged water was added to adjust the solid content concentration to 40% by weight, and stirred. To the resultant solution, 2 parts in terms of the solid content of an aqueous dispersion liquid containing the particulate polymer 1 was mixed as the particulate acrylic polymer. Furthermore, 0.21 parts of a polyethylene glycol-type surfactant ("SN Wet 366" manufactured by San Nopco Limited) was mixed to the resultant mixture. Then, ion exchanged water was also added to this mixture to adjust the solid content concentration to 2%. Thus, a slurry for a surface layer 1 was produced. The content ratio of the sum of the particulate acrylic polymer and the water-soluble polymer in the total solid content of this slurry for the surface layer 1 was 93% by weight. In the total solid content of the slurry for the surface layer 1, the ratio of the particulate acrylic polymer was 62%, and the ratio of the water-soluble polymer was 31%. Furthermore, in the water-soluble polymer, the ratio between the carboxymethyl cellulose and the water-soluble polymer X was 10:90.

(1.2.5. Applying and drying)

This slurry for the surface layer 1 was applied onto the positive electrode material layer of the positive electrode obtained as described above so that the weight per unit area (the amount of the solid content applied per unit area) became 0.512 $g/cm^2$, and dried at 50°C for 10 minutes. Thus, a positive electrode 1 including a surface layer was obtained.

The positive electrode 1 obtained in this manner was evaluated for flexibility property by the aforementioned method.

(1.3. Production of battery)

(1.3.1. Production of binder for negative electrode material layer)

In a 5 MPa pressure resistant container equipped with a stirrer, 33 parts of 1,3-butadiene, 1.5 parts of methacrylic acid, 65.5 parts of styrene, 4 parts of sodium dodecylbenzenesulfonate as an emulsifier, 150 parts of ion exchanged water, and 0.5 parts of potassium persulfate as a polymerization initiator were placed, and sufficiently stirred. Thereafter, the mixture was heated to 50°C to initiate polymerization. When the polymerization conversion rate became 96%, the mixture was cooled down to terminate the reaction. Thus, an aqueous dispersion liquid containing a binder was obtained.

To the aqueous dispersion liquid containing the binder, a 5% aqueous solution of sodium hydroxide was added to adjust pH to 8. Thereafter, distillation with heating under reduced pressure was performed to remove unreacted monomers. Subsequently, the resultant product was cooled down to 30°C or lower to obtain a desired aqueous dispersion liquid of a binder for a negative electrode material layer.

(1.3.2. Production of slurry for negative electrode)

Into a planetary mixer equipped with a disper, 100 parts of artificial graphite having a specific surface area of 4 $m^2/g$ (volume average particle diameter: 24.5 μm) as the negative electrode active material, and 1 part of a 1% aqueous solution of carboxymethyl cellulose ("MAC350HC" manufactured by Nippon Paper Chemicals Co., Ltd) were added. Then, ion exchanged water was further added to this mixture to adjust the solid content concentration to 55%. Thereafter, the product was mixed at 25°C for 60 minutes. Subsequently, ion exchanged water was added to this mixture to adjust the solid content concentration to 52%. Subsequently, the product was further mixed at 25°C for 15 minutes to obtain a mixed liquid. To this mixed liquid, 1 part in terms of the solid content of the aforementioned aqueous dispersion liquid of the binder for the negative electrode material layer was added, and ion exchanged water was further added to adjust the final solid content concentration to 42%. Then, the product was mixed for 10 minutes. This mixture was subjected to defoaming treatment under reduced pressure, so that a slurry for a negative electrode having favorable fluidity was obtained.

(1.3.3. Production of negative electrode)

The aforementioned slurry for the negative electrode was applied onto a copper foil having a thickness of 20 μm using a comma coater so that the film thickness after drying became approximately 150 μm. Thereafter, the applied slurry was dried for two minutes (at a speed of 0.5 m/min, 60°C), and subjected to heat treatment for two minutes (120°C), so that an electrode raw material was obtained. This electrode raw material was rolled with a roll press, so that a negative electrode including a negative electrode material layer having a thickness of 80 μm was obtained.

(1.4. Assembling of battery)

As an exterior package of a battery, an aluminum exterior package was prepared. The aforementioned positive electrode was cut out into a 4x4 $cm^2$ square, and the cut-out electrode was disposed such that the surface of the current collector side surface was brought into contact with the aluminum exterior package. The aforementioned separator having the porous membrane layer was cut out into a 5x5 $m^2$ square, and the cut-out separator was disposed on the surface of the positive electrode material layer of the positive electrode, such that the porous membrane layer of the separator faces the positive electrode material layer. Furthermore, the aforementioned negative electrode was cut out into a 4.2x4.2 $cm^2$ square, and this cut-out negative electrode was disposed on the separator such that the surface of the negative electrode material layer side faces the separator. Accordingly, a stacked body for a secondary battery including the positive electrode, the separator, and the negative electrode was obtained within the aluminum package. Furthermore, a $LiPF_6$ solution having a concentration of 1.0 M and containing 2.0% vinylene carbonate (VC) was charged into the aluminum package. The solvent of this $LiPF_6$ solution is a mixed solvent of ethylene carbonate (EC) and ethyl methyl carbonate (EMC) (EC/EMC = 3/7 (volume ratio)). Furthermore, for sealing the opening of the aluminum package, heat sealing was performed at 150°C to close the opening of the aluminum package. Thus, a laminate-type lithium ion secondary battery was produced. This laminate-type cell was evaluated for high temperature cycle property, high temperature storage property, and rate property.

[Example 2]

$LiFePO_4$ (volume average particle diameter 10 μm) was used in place of $LiCoO_2$ as the positive electrode active material.
The amount of acetylene black as the conductive material with respect to 100 parts of the positive electrode active material was changed to 5 parts.
The amount of the binders for the positive electrode with respect to 100 parts of the positive electrode active material was changed to 5 parts without changing the ratio of respective binders. That is, the amount of the mixed polyvinylidene fluoride was changed to 4 parts, and the N-methylpyrrolidone solution of the nitrile group-containing acrylic polymer (A1) was changed to 1 part in terms of the solid content.
Except for the aforementioned matters, a lithium ion secondary battery was produced and evaluated in the same manner as in Example 1.

[Example 3]

As the binder for a positive electrode, the mixed polyvinylidene fluoride was solely used. That is, the amount of the mixed polyvinylidene fluoride with respect to 100 parts of the positive electrode active material was changed to 2 parts and N-methylpyrrolidone solution of the nitrile group-containing acrylic polymer (A1) was not used.
Except for the aforementioned matters, a lithium ion secondary battery was produced and evaluated in the same manner as in Example 1.

[Example 4]

The amounts of the mixed polyvinylidene fluoride and the nitrile group-containing acrylic polymer (A1) used as the binders for a positive electrode were changed to be a ratio of 95:5. That is, the amount of the mixed polyvinylidene fluoride with respect to 100 parts of the positive electrode active material was changed to 1.9 parts and the amount of the N-methylpyrrolidone solution of the nitrile group-containing acrylic polymer (A1) with respect to 100 parts of the positive electrode active material was changed to 0.1 parts in terms of the solid content.
Except for the aforementioned matters, a lithium ion secondary battery was produced and evaluated in the same manner as in Example 1.

[Example 5]

The amounts of the mixed polyvinylidene fluoride and the nitrile group-containing acrylic polymer (A1) used as the binders for a positive electrode were changed to be a ratio of 70:30. That is, the amount of the mixed polyvinylidene fluoride with respect to 100 parts of the positive electrode active material was changed to 1.4 parts and the amount of the N-methylpyrrolidone solution of the nitrile group-containing acrylic polymer (A1) with respect to 100 parts of the positive electrode active material was changed to 0.6 parts in terms of the solid content.
Except for the aforementioned matters, a lithium ion secondary battery was produced and evaluated in the same manner as in Example 1.

[Example 6]

The amounts of the mixed polyvinylidene fluoride and the nitrile group-containing acrylic polymer (A1) used as the binders for a positive electrode were changed to be a ratio of 60:40. That is, the amount of the mixed polyvinylidene fluoride with respect to 100 parts of the positive electrode active material was changed to 1.2 parts and the amount of the N-methylpyrrolidone solution of the nitrile group-containing acrylic polymer (A1) with respect to 100 parts of the positive electrode active material was changed to 0.8 parts in terms of the solid content.
Except for the aforementioned matters, a lithium ion secondary battery was produced and evaluated in the same manner as in Example 1.

[Example 7]

(Production of particulate polymer 2)

In a polymerization tank A, 10.78 parts of 2-ethylhexyl acrylate, 1.23 parts of acrylonitrile, 0.12 parts of sodium lauryl sulfate, and 79 parts of ion-exchanged water were placed. In this polymerization tank A, 0.2 parts of ammonium persulfate as a polymerization initiator and 10 parts of ion exchanged water were further added. The mixture was heated

to 60°C, and stirred for 90 minutes.

In another polymerization tank B, 67.22 parts of 2-ethylhexyl acrylate, 18.77 parts of acrylonitrile, 1.5 parts of methacrylic acid, 0.5 parts of allyl methacrylate, 0.7 parts of sodium lauryl sulfate, and 46 parts of ion exchanged water were placed and stirred, to prepare an emulsion. This emulsion was successively added from the polymerization tank B to the polymerization tank A over approximately 180 minutes. Thereafter, the mixture was stirred for approximately 120 minutes, and cooled when the consumption amount of monomers became 95% to terminate the reaction. Thereafter, pH was adjusted with a 4% NaOH aqueous solution, so that a composition containing the particulate polymer 2 was obtained.

The glass transition temperature of the obtained particulate polymer 2 was -35°C, and the number average particle diameter thereof was 0.18 μm. The content ratio of the (meth)acrylic acid ester monomer unit in the particulate polymer 2 was 78%; the content ratio of the vinyl monomer unit having an acid component was 1.5%; the content ratio of the (meth)acrylonitrile monomer unit was 20.0%; and the content ratio of the allyl methacrylate unit was 0.5%.

Into the aforementioned composition containing the particulate polymer 2, a 5% aqueous solution of sodium hydroxide was added, so that pH was adjusted to 8. Thereafter, distillation with heating under reduced pressure was performed to remove unreacted monomers. Subsequently, the resultant product was cooled down to 30°C or lower to obtain an aqueous dispersion liquid containing the particulate polymer 2. The swelling degree of the particulate polymer 2 to the non-aqueous electrolytic solution was 3.8 times.

When producing the slurry for the porous membrane and when producing the slurry for the surface layer, this aqueous dispersion liquid containing the particulate polymer 2 was used in place of the aqueous dispersion liquid containing the particulate polymer 1.

Except for the aforementioned matters, a lithium ion secondary battery was produced and evaluated in the same manner as in Example 1.

[Example 8]

When producing the slurry for the surface layer, the amount of the carboxymethyl cellulose ammonium salt was changed to 0.375 parts, and the amount of the aqueous solution containing the water-soluble polymer X1 was changed to 0.375 parts in terms of the solid content. Accordingly, the amount ratio between the carboxymethyl cellulose and the water-soluble polymer X1 was changed to 50:50.

Except for the aforementioned matters, a lithium ion secondary battery was produced and evaluated in the same manner as in Example 1.

[Example 9]

When producing the slurry for the surface layer, the amount of the carboxymethyl cellulose ammonium salt was changed to 0.225 parts, and the amount of the aqueous solution containing the water-soluble polymer X1 was changed to 0.525 parts in terms of the solid content. Accordingly, the amount ratio between the carboxymethyl cellulose and the water-soluble polymer X1 was changed to 30:70.

Except for the aforementioned matters, a lithium ion secondary battery was produced and evaluated in the same manner as in Example 1.

[Example 10]

When producing the slurry for the surface layer, the amount of the carboxymethyl cellulose ammonium salt was changed to 0.15 parts, and the amount of the aqueous solution containing the water-soluble polymer X1 was changed to 0.60 parts in terms of the solid content. Accordingly, the amount ratio between the carboxymethyl cellulose and the water-soluble polymer X1 was changed to 20:80.

Except for the aforementioned matters, a lithium ion secondary battery was produced and evaluated in the same manner as in Example 1.

[Example 11]

1.6 parts of a fluorine-containing monomer ("KYNAR 720" manufactured by Arkema Inc.) was used as the binder for a positive electrode in place of 1.6 parts of the mixed polyvinylidene fluoride.

Except for the aforementioned matter, a lithium ion secondary battery was produced and evaluated in the same manner as in Example 1.

[Example 12]

(Production of nitrile group-containing acrylic polymer (A2))

In an autoclave equipped with a stirrer, 240 parts of ion exchanged water, 2.5 parts of sodium alkylbenzene sulfonate, 20 parts of acrylonitrile, 30 parts of butyl acrylate, and 5 parts of methacrylic acid were placed in this order, and the atmosphere in the bottle was substituted with nitrogen. Thereafter, 45 parts of 1,3-butadiene was pressed in, and 0.25 parts of ammonium persulfate was added, to perform a polymerization reaction at a reaction temperature of 40°C. In this manner, an aqueous dispersion liquid of a polymer containing a nitrile group-containing monomer unit, an ethylenically unsaturated carboxylic acid monomer unit, an acrylic acid ester monomer unit, and a conjugated diene monomer unit was obtained. The polymerization conversion rate was 85%, and the iodine value was 280 mg/100 mg.

Water was added to the aforementioned aqueous dispersion liquid of the polymer to adjust the total solid content concentration to 12% by weight. 400 milliliters (total solid content 48 grams) of this aqueous dispersion liquid was placed in a 1 liter autoclave equipped with a stirrer. Then, nitrogen gas flow was introduced for 10 minutes to remove oxygen dissolved in the polymer. Thereafter, a hydrogenation reaction catalyst (a solution obtained by dissolving 75 mg of palladium acetate into 180 ml of water to which nitric acid in a ratio of 4 mol per 1 mol of palladium had been previously added) was added. After the atmosphere in the system was substituted with hydrogen gas twice, pressure was applied with hydrogen gas up to 3 MPa. While this hydrogen gas atmosphere and pressure was maintained, the contents of the autoclave were heated up to 50°C, and subjected to a hydrogenation reaction for 6 hours (this reaction will be referred to as the "first stage hydrogenation reaction"). At this time, the iodine value of the polymer was 35 mg/100 mg.

Subsequently, the pressure in the autoclave was returned to atmospheric pressure, and furthermore, a hydrogenation reaction catalyst (a solution obtained by dissolving 25 mg of palladium acetate into 60 ml of water to which nitric acid in a ratio of 4 mol per 1 mol of palladium had been previously added) was added. After the atmosphere in the system was substituted with hydrogen gas twice, pressure was applied with hydrogen gas up to 3 MPa. While this hydrogen gas atmosphere and pressure was maintained, the contents of the autoclave were heated up to 50°C, and subjected to a hydrogenation reaction for 6 hours (this reaction will be referred to as the "second stage hydrogenation reaction").

Thereafter, the contents were returned to normal temperature, and the system atmosphere was changed to a nitrogen atmosphere. Then, using an evaporator, the contents were concentrated until the solid content concentration became 40%, so that an aqueous dispersion liquid of a nitrile group-containing acrylic polymer (A2) was obtained. To 100 parts of this aqueous dispersion liquid, 320 parts of N-methylpyrrolidone were added, and all of water and residual monomers were evaporated under reduced pressure. Thereafter, N-methylpyrrolidone was added, so that an 8% by weight N-methylpyrrolidone solution of the polymer (A2) was obtained. The swelling degree of the obtained polymer (A2) to the non-aqueous electrolytic solution was 2.9 times, and the THF insoluble content was 10% or less. The iodine value of the nitrile group-containing acrylic polymer (A2) was 10 mg/100 mg.

The N-methylpyrrolidone solution of the nitrile group-containing acrylic polymer (A2) was used in place of the N-methylpyrrolidone solution of the nitrile group-containing acrylic polymer (A1) as the binder for a positive electrode.

Except for the aforementioned matter, a lithium ion secondary battery was produced and evaluated in the same manner as in Example 1.

[Example 13]

(Production of particulate polymer 3)

Into a polymerization tank A equipped with a stirrer, 70 parts of ion exchanged water, 0.15 parts of sodium lauryl sulfate (manufactured by Kao Chemical, product name "EMAL 2F") as an emulsifier, and 0.5 parts of ammonium persulfate were supplied. Then, a gas phase portion was substituted with nitrogen gas, and the temperature was elevated to 60°C.

On the other hand, in another polymerization tank B, 50 parts of ion exchanged water; 0.5 parts of sodium dodecylbenzenesulfonate as a dispersant; and 93.8 parts of butyl acrylate, 2 parts of acrylonitrile, 2 parts of methacrylic acid, 1.2 parts of N-methylol acrylamide, and 1 part of allyl glycidyl ether (AGE) as polymerizable monomers were mixed to obtain a mixture. This mixture was continuously added to the polymerization tank A over four hours for polymerization. During the addition, the reaction was performed at 60°C. After the addition was completed, the obtained product was further stirred at 70°C for three hours, and was then cooled down to terminate the reaction. Subsequently, a 4% NaOH aqueous solution was used to adjust pH. Thus, a composition containing a particulate polymer 3 was obtained.

Into the aforementioned composition containing the particulate polymer 3, a 5% aqueous solution of sodium hydroxide was added, so that pH was adjusted to 8. Thereafter, distillation with heating under reduced pressure was performed to remove unreacted monomers. Subsequently, the resultant product was cooled down to 30°C or lower, so

that an aqueous dispersion liquid containing the particulate polymer 3 was obtained.

The glass transition temperature of the obtained particulate polymer 3 was -45°C, and the number average particle diameter thereof was 370 nm. The content ratio of the (meth)acrylic acid ester monomer unit in the particulate polymer was 93.8%; the content ratio of the vinyl monomer unit having an acid component was 2%; the content ratio of the (meth)acrylonitrile monomer unit was 2%; the content ratio of the N-methylol acrylamide unit was 1.2%, and the content ratio of the allyl glycidyl ether unit was 1%. The swelling degree of the particulate polymer 3 to the non-aqueous electrolytic solution was 3.8 times.

When producing the slurry for a porous membrane, the aqueous dispersion liquid containing the particulate polymer 3 was used in place of the aqueous dispersion liquid containing the particulate polymer 1 as the binder.

Except for the aforementioned matter, a lithium ion secondary battery was produced and evaluated in the same manner as in Example 1 (when producing the slurry for a surface layer, the particulate polymer 3 was not used but the particulate polymer 1 was used).

[Example 14]

When producing the slurry for a surface layer, the amount of carboxymethyl cellulose ammonium salt was changed to 0.75 parts, and the amount of the aqueous solution containing the water-soluble polymer X1 was changed to 0 part. Accordingly, the amount ratio between carboxymethyl cellulose and the water-soluble polymer X1 was changed to 100:0.

Except for the aforementioned matter, a lithium ion secondary battery was produced and evaluated in the same manner as in Example 1.

[Example 15]

(Production of particulate polymer 4)

In a polymerization tank equipped with a stirrer, 76.6 parts of 2-ethylhexyl acrylate, 20 parts of styrene, 3 parts of methacrylic acid, 0.4 parts of ethylene dimethacrylate, 1 part of sodium dodecylbenzenesulfonate as an emulsifier, 150 parts of ion exchanged water, and 0.5 parts of potassium persulfate as a polymerization initiator were placed, and sufficiently stirred. Thereafter, the mixture was heated to 60°C to initiate polymerization. When the polymerization conversion rate became 96%, the reaction was terminated to obtain a composition containing a particulate polymer 4.

Into the aforementioned composition containing the particulate polymer 4, a 5% aqueous solution of sodium hydroxide was added, so that pH was adjusted to 8. Thereafter, distillation with heating under reduced pressure was performed to remove unreacted monomers. Subsequently, the resultant product was cooled down to 30°C or lower to obtain an aqueous dispersion liquid containing the particulate polymer 4. The swelling degree of the particulate polymer 4 to the non-aqueous electrolytic solution was 1.5 times.

The glass transition temperature of the obtained particulate polymer 4 was 5°C, and the number average particle diameter thereof was 170 nm. The content ratio of the (meth)acrylic acid ester monomer unit in the particulate polymer was 76.6%; the content ratio of the vinyl monomer unit having an acid component was 3%; the content ratio of the styrene unit was 20%; and the content ratio of the ethylene dimethacrylate unit was 0.4%.

When producing the slurry for a surface layer, the aqueous dispersion liquid containing the particulate polymer 4 was used in place of the aqueous dispersion liquid containing the particulate polymer 1 as the particulate acrylic polymer.

Except for the aforementioned matter, a lithium ion secondary battery was produced and evaluated in the same manner as in Example 1 (when producing the slurry for a porous membrane, the particulate polymer 4 was not used but the particulate polymer 1 was used).

[Example 16]

(Production of particulate polymer 5)

In a polymerization tank equipped with a stirrer, 87.6 parts of ethyl acrylate, 2 parts of methacrylic acid, 10 parts of acrylonitrile, 0.4 parts of ethylene dimethacrylate, 1 part of sodium dodecylbenzenesulfonate as an emulsifier, 150 parts of ion exchanged water, and 0.5 parts of potassium persulfate as a polymerization initiator were placed, and sufficiently stirred. Thereafter, the mixture was heated to 60°C to initiate polymerization. When the polymerization conversion rate became 96%, the reaction was terminated to obtain a composition containing a particulate polymer 5.

Into the aforementioned composition containing the particulate polymer 5, a 5% aqueous solution of sodium hydroxide was added, so that pH was adjusted to 8. Thereafter, distillation with heating under reduced pressure was performed to remove unreacted monomers. Subsequently, the resultant product was cooled down to 30°C or lower, so

that an aqueous dispersion liquid containing the particulate polymer 4 was obtained. The swelling degree of the particulate polymer 5 to the non-aqueous electrolytic solution was 8 times.

The glass transition temperature of the obtained particulate polymer 5 was 5°C, and the number average particle diameter thereof was 170 nm. The content ratio of the (meth)acrylic acid ester monomer unit in the particulate polymer was 87.6%; the content ratio of the vinyl monomer unit having an acid component was 2%; the content ratio of the (meth)acrylonitrile monomer unit was 10%; and the content ratio of the ethylene dimethacrylate unit was 0.4%.

When producing the slurry for a surface layer, the aqueous dispersion liquid containing the particulate polymer 5 was used in place of the aqueous dispersion liquid containing the particulate polymer 1 as the particulate acrylic polymer.

Except for the aforementioned matter, a lithium ion secondary battery was produced and evaluated in the same manner as in Example 1 (when producing the slurry for a porous membrane layer, the particulate polymer 5 was not used but the particulate polymer 1 was used).

[Comparative Example 1]

As the binder for a positive electrode, the nitrile group-containing acrylic polymer (A1) was solely sed. That is, the amount of the N-methylpyrrolidone solution of the nitrile group-containing acrylic polymer (A1) with respect to 100 parts of the positive electrode active material was changed to 2 parts, and mixed polyvinylidene fluoride was not used.

Except for the aforementioned matters, a lithium ion secondary battery was produced and evaluated in the same manner as in Example 1.

[Comparative Example 2]

The slurry for a surface layer 1 was not applied onto the positive electrode material layer.

Except for the aforementioned matter, a lithium ion secondary battery was produced and evaluated in the same manner as in Example 1.

[Comparative Example 3]

Production of a positive electrode was attempted in the same manner as in Example 1, except that when producing the slurry for a surface layer, the water-soluble polymer (that is, carboxymethyl cellulose ammonium salt, the aqueous solution containing the water-soluble polymer X1, and sodium salt of a copolymer of acrylic acid and 2-hydroxy-3-allyloxy propane sulfonic acid) was not used. However, even when the slurry for a surface layer was attempted to be applied, the slurry did not uniformly spread and was repelled on the positive electrode material layer. Therefore, the slurry for a surface layer could not be applied onto the electrode material layer.

A lithium ion secondary battery was produced and evaluated in the same manner as in Example 1, except that the positive electrode including the positive electrode material layer on which the slurry for a surface layer was attempted to be applied was used as the positive electrode.

[Comparative Example 4]

When producing the slurry for a surface layer, carboxymethyl cellulose ammonium salt, the aqueous solution containing the water-soluble polymer X1, sodium salt of a copolymer of acrylic acid and 2-hydroxy-3-allyloxy propane sulfonic acid, and the aqueous dispersion liquid containing the particulate polymer 1 were not used. In place thereof, 1.19 parts of polyvinylidene fluoride ("KF #1120" manufactured by Kureha Corporation) was used.

Except for the aforementioned matters, a lithium ion secondary battery was produced and evaluated in the same manner as in Example 1.

[Results]

The configurations of the aforementioned Examples 1 to 16 and Comparative Examples 1 to 4 are shown in Table 1 to Table 4, and results thereof are shown in Table 5 to Table 7.

In the following tables, meanings of the abbreviations are as follows.

AB: Acetylene black
Polymer F: Fluorine-containing polymer
PVdF: Polyvinylidene fluoride
Ratio of polymer F: Ratio of fluorine-containing polymer in binder for positive electrode (fluorine-containing polymer and nitrile group-containing acrylic polymer)

Polymer A: Nitrile group-containing acrylic polymer
Ratio of polymer A: Ratio of nitrile group-containing acrylic polymer in binder for positive electrode (fluorine-containing polymer and nitrile group-containing acrylic polymer)
Monomer I: Nitrile group-containing monomer
AN: Acrylonitrile
Monomer II: (Meth)acrylic acid ester monomer
2EHA: 2-ethylhexyl acrylate
Monomer III: Ethylenically unsaturated acid monomer
MAA: Methacrylic acid
AMPS: 2-Acrylamide-2-methylpropane sulfonic acid
Ratio in solid content: Ratio of slurry for surface layer in total solid content
CMC: Carboxymethyl cellulose ammonium salt
X1: Water-soluble polymer X1
GL366: Sodium salt of copolymer of acrylic acid and 2-hydroxy-3-allyloxy propane sulfonic acid
Blend ratio: Blend ratio of water-soluble polymer used in slurry for surface layer, that is ratio represented by "carboxymethyl cellulose/water-soluble polymer X1"
Polymer content: Content ratio of particulate acrylic polymer and water-soluble polymer in the total solid content of slurry for surface layer
Weight per unit area: Amount of solid content of slurry for surface layer to be applied per unit area AKP3000: Alumina particles

[Table 1. Configurations of Example 1 to Example 5]

| | | Ex. 1 | Ex. 2 | Ex. 3 | Ex. 4 | Ex. 5 |
|---|---|---|---|---|---|---|
| Positive electrode active material | Type | LiCoO2 | LiFePO4 | LiCoO2 | LiCoO2 | LiCoO2 |
| Conductive material | Type | AB | AB | AB | AB | AB |
| | Amount (parts) | 2 | 5 | 2 | 2 | 2 |
| | Particle diameter (nm) | 35 | 35 | 35 | 35 | 35 |
| | Specific surface area (m2/g) | 68 | 68 | 68 | 68 | 68 |
| Binder for positive electrode | | | | | | |
| Polymer F | Type | PVdF | PVdF | PVdF | PVdF | PVdF |
| | Ratio of polymer F (%) | 80 | 80 | 100 | 95 | 70 |
| | Grade | Low-molecular weight, high-molecular weight | Low-molecular weight, high-molecular weight | Low-molecular weight, high-molecular weight | Low-molecular weight, high-molecular weight | Low-molecular weight, high-molecular weight |
| Polymer A | Ratio of polymer A (%) | 20 | 20 | 0 | 5 | 30 |

(continued)

| | | Ex. 1 | Ex. 2 | Ex. 3 | Ex. 4 | Ex. 5 |
|---|---|---|---|---|---|---|
| Monomer I | Type | AN | AN | AN | AN | AN |
| | Amount (parts) | 20 | 20 | 20 | 20 | 20 |
| Monomer II | Type | 2EHA | 2EHA | 2EHA | 2EHA | 2EHA |
| | Amount (parts) | 59.5 | 59.5 | 59.5 | 59.5 | 59.5 |
| Monomer III | Type | MAA/AMPS | MAA/AMPS | MAA/AMPS | MAA/AMPS | MAA/AMPS |
| | Amount (parts) | 20/0.5 | 20/0.5 | 20/0.5 | 20/0.5 | 20/0.5 |
| Amount of positive electrode binder (parts) | | 2 | 5 | 2 | 2 | 2 |
| Slurry for surface layer | | | | | | |
| Particula te acrylic polymer | Type | Particulate polymer 1 | Particulate polymer 1 | Particulate polymer 1 | Particulate polymer 1 | Particulate polymer 1 |
| | Ratio in solid content (%) | 62 | 62 | 62 | 62 | 62 |
| | Swelling degree to non-aqueous electroly te (times) | 3.8 | 3.8 | 3.8 | 3.8 | 3.8 |
| Water-soluble polymer | Type | CMC/X1/GL3 66 | CMC/X1/GL3 66 | CMC/X1/GL3 66 | CMC/X1/GL3 66 | CMC/X1/GL3 66 |
| | Blend ratio | 10/90 | 10/90 | 10/90 | 10/90 | 10/90 |
| | Ratio in solid content (%) | 31 | 31 | 31 | 31 | 31 |
| Polymer content (%) | | 93 | 93 | 93 | 93 | 93 |
| Solid content conc. of slurry for surface layer | | 2% | 2% | 2% | 2% | 2% |
| Weight per unit area | (g/cm2) | 0.512 | 0.512 | 0.512 | 0.512 | 0.512 |
| Porous membrane | | | | | | |
| Non-conductive particles | Type | AKP30 00 | AKP30 00 | AKP30 00 | AKP30 00 | AKP30 00 |
| | Amount (parts) | 100 | 100 | 100 | 100 | 100 |
| Binder | Type | Particulate polymer 1 | Particulate polymer 1 | Particulate polymer 1 | Particulate polymer 1 | Particulate polymer 1 |
| | Amount (parts) | 2 | 2 | 2 | 2 | 2 |

[Table 2. Configurations of Example 6 to Example 10]

| | | Ex. 6 | Ex. 7 | Ex. 8 | Ex. 9 | Ex. 10 |
|---|---|---|---|---|---|---|
| Positive electrode active material | Type | LiCoO2 | LiCoO2 | LiCoO2 | LiCoO2 | LiCoO2 |
| Conductive material | Type | AB | AB | AB | AB | AB |
| | Amount (parts) | 2 | 2 | 2 | 2 | 2 |
| | Particle diameter (nm) | 35 | 35 | 35 | 35 | 35 |
| | Specific surface area (m2/g) | 68 | 68 | 68 | 68 | 68 |
| Binder for positive electrode | | | | | | |
| Polymer F | Type | PVdF | PVdF | PVdF | PVdF | PVdF |
| | Ratio of polymer F (%) | 60 | 80 | 80 | 80 | 80 |
| | Grade | Low-molecular weight, high-molecular weight | Low-molecular weight, high-molecular weight | Low-molecular weight, high-molecular weight | Low-molecular weight, high-molecular weight | Low-molecular weight, high-molecular weight |
| Polymer A | Ratio of polymer A (%) | 40 | 20 | 20 | 20 | 20 |
| Monomer I | Type | AN | AN | AN | AN | AN |
| | Amount (parts) | 20 | 20 | 20 | 20 | 20 |
| Monomer II | Type | 2EHA | 2EHA | 2EHA | 2EHA | 2EHA |
| | Amount (parts) | 59.5 | 59.5 | 59.5 | 59.5 | 59.5 |
| Monomer III | Type | MAA/AMPS | MAA/AMPS | MAA/AMPS | MAA/AMPS | MAA/AMPS |
| | Amount (parts) | 20/0.5 | 20/0.5 | 20/0.5 | 20/0.5 | 20/0.5 |
| Amount of positive electrode binder (parts) | | 2 | 2 | 2 | 2 | 2 |

(continued)

| Slurry for surface layer | | | | | | |
|---|---|---|---|---|---|---|
| Particulate acrylic polymer | Type | Particulate polymer 1 | Particulate polymer 2 | Particulate polymer 1 | Particulate polymer 1 | Particulate polymer 1 |
| | Ratio in solid content (%) | 62 | 62 | 62 | 62 | 62 |
| | Swelling degree to non-aqueous electrolyte (times) | 3.8 | 3.8 | 3.8 | 3.8 | 3.8 |
| Water-soluble polymer | Type | CMC/X 1/GL366 | CMC/X 1/GL366 | CMC/X1/GL366 | CMC/X1/GL366 | CMC/X1/GL366 |
| | Blend ratio | 10/90 | 10/90 | 50/50 | 30/70 | 20/80 |
| | Ratio in solid content (%) | 31 | 31 | 31 | 31 | 31 |
| Polymer content (%) | | 93 | 93 | 93 | 93 | 93 |
| Solid content conc. of slurry for surface layer | | 2% | 2% | 2% | 2% | 2% |
| Weight per unit area | (g/cm2) | 0.512 | 0.512 | 0.512 | 0.512 | 0.512 |
| Porous membrane | | | | | | |
| Non-conductive particles | Type | AKP3000 | AKP3000 | AKP3000 | AKP3000 | AKP3000 |
| | Amount (parts) | 100 | 100 | 100 | 100 | 100 |
| Binder | Type | Particulate polymer 1 | Particulate polymer2 | Particulate polymer 1 | Particulate polymer1 | Particulate polymer 1 |
| | Amount (parts) | 2 | 2 | 2 | 2 | 2 |

[Table 3. Configurations of Example 11 to Example 16]

| | | Ex. 11 | Ex. 12 | Ex. 13 | Ex. 14 | Ex. 15 | Ex. 16 |
|---|---|---|---|---|---|---|---|
| Positive electrode active material | Type | LiCoO2 | LiCoO2 | LiCoO2 | LiCoO2 | LiCoO2 | LiCoO2 |
| Conductive material | Type | AB | AB | AB | AB | AB | AB |
| | Amount (parts) | 2 | 2 | 2 | 2 | 2 | 2 |
| | Particle diameter (nm) | 35 | 35 | 35 | 35 | 35 | 35 |
| | Specific surface area (m2/g) | 68 | 68 | 68 | 68 | 68 | 68 |
| Binder for positive electrode | | | | | | | |
| Polymer F | Type | PVdF | PVdF | PVdF | PVdF | PVdF | PVdF |
| | Ratio of polymer F (%) | 80 | 80 | 80 | 80 | 80 | 80 |
| | Grade | Low-molecular weight | Low-molecular weight, high-molecular weight | Low-molecular weight, high-molecular weight | Low-molecular weight, high-molecular weight | Low-molecular weight, high-molecular weight | Low-molecular weight, high-molecular weight |
| Polymer A | Ratio of polymer A (%) | 20 | 20 | 20 | 20 | 20 | 20 |
| Monomer I | Type | AN | AN | AN | AN | AN | AN |
| | Amount (parts) | 20 | 20 | 20 | 20 | 20 | 20 |
| Monomer II | Type | 2EHA | BA | 2EHA | 2EHA | 2EHA | 2EHA |
| | Amount (parts) | 59.5 | 30 | 59.5 | 59.5 | 59.5 | 59.5 |
| Monomer III | Type | MAA/AMPS | MAA | MAA/AMPS | MAA/ AMPS | MAA/AMPS | MAA/AMPS |
| | Amount (parts) | 20/0.5 | 5 | 20/0.5 | 20/0.5 | 20/0.5 | 20/0.5 |
| Amount of positive electrode binder (parts) | | 2 | 2 | 2 | 2 | 2 | 2 |

(continued)

| Slurry for surface layer | | | | | | | |
|---|---|---|---|---|---|---|---|
| Particula te acrylic polymer | Type | Particulate polymer 1 | Particulate polymer 1 | Particulate polymer 1 | Particulate polymer 1 | Particulate polymer 4 | Particulate polymer 5 |
| | Ratio in solid content (%) | 62 | 62 | 62 | 62 | 62 | 62 |
| | Swelling degree to non-aqueous electrolyte (times) | 3.8 | 3.8 | 3.8 | 3.8 | 1.5 | 8 |
| Water-soluble polymer | Type | CMC/X1/GL3 66 | CMC/X1/GL366 | CMC/X1/GL366 | CMC/GL366 | CMC/X1/GL366 | CMC/X1/GL366 |
| | Blend ratio | 10/90 | 10/90 | 10/90 | 100/0 | 10/90 | 10/90 |
| | Ratio in solid content (%) | 31 | 31 | 31 | 31 | 31 | 31 |
| Polymer content (%) | | 93 | 93 | 93 | 93 | 93 | 93 |
| Solid content conc. of slurry for surface layer | | 2% | 2% | 2% | 2% | 2% | 2% |
| Weight per unit (g/cm2) area | | 0.512 | 0.512 | 0.512 | 0.512 | 0.512 | 0.512 |
| Porous membrane | | | | | | | |
| Non-conductive particles | Type | AKP30 00 | AKP30 00 | AKP30 00 | AKP30 00 | AKP30 00 | AKP30 00 |
| | Amount (parts) | 100 | 100 | 100 | 100 | 100 | 100 |
| Binder | Type | Particulate polymer 1 | Particulate polymer 2 | Particulate polymer 3 | Particulate polymer 1 | Particulate polymer 1 | Particulate polymer 1 |
| | Amount (parts) | 2 | 2 | 2 | 2 | 2 | 2 |

[Table 4. Configurations of Comparative Example 1 to Comparative Example 4]

| | | Comp. Ex. 1 | Comp. Ex. 2 | Comp. Ex. 3 | Comp. Ex. 4 |
|---|---|---|---|---|---|
| Positive electrode active material | Type | LiCoO2 | LiCoO2 | LiCoO2 | LiCoO2 |
| Conductive material | Type | AB | AB | AB | AB |
| | Amount (parts) | 2 | 2 | 2 | 2 |
| | Particle diameter (nm) | 35 | 35 | 35 | 35 |
| | Specific surface area (m2/g) | 68 | 68 | 68 | 68 |
| Binder for positive electrode | | | | | |
| Polymer F | Type | - | PVdF | PVdF | PVdF |
| | Ratio of polymer F (%) | 0 | 80 | 80 | 80 |
| | Grade | Low-molecular weight, high-molecular weight | Low-molecular weight, high-molecular weight | Low-molecular weight, high-molecular weight | Low-molecular weight, high-molecular weight |
| Polymer A | Ratio of polymer A (%) | 100 | 20 | 20 | 20 |
| Monomer I | Type | AN | AN | AN | AN |
| | Amount (parts) | 20 | 20 | 20 | 20 |
| Monomer II | Type | 2EHA | 2EHA | 2EHA | 2EHA |
| | Amount (parts) | 59.5 | 59.5 | 59.5 | 59.5 |
| Monomer III | Type | MAA/AMPS | MAA/AMPS | MAA/AMPS | MAA/AMPS |
| | Amount (parts) | 20/0.5 | 20/0.5 | 20/0.5 | 20/0.5 |
| Amount of positive electrode binder (parts) | | 2 | 2 | 2 | 2 |
| Slurry For surface layer | | | | | |
| Particula te acrylic polymer | Type | Particulate polymer 1 | - | Particulate polymer 1 | PVdF |
| | Ratio in solid content (%) | 62 | - | 90 | 85 |
| | Swelling degree to non-aqueous electroly te (times) | 3.8 | - | 3.8 | - |
| Water-soluble polymer | Type | CMC/X1/ GL366 | - | - | - |
| | Blend ratio | 10/90 | - | - | - |
| | Ratio in solid content (%) | 31 | - | - | - |
| Polymer content (%) | | 93 | - | 90 | 85 |
| Solid content conc. of slurry for surface layer | | 2% | - | 2% | 2% |

(continued)

| Slurry For surface layer | | | | | |
|---|---|---|---|---|---|
| Weight per unit area | (g/cm2) | 0.512 | - | Not applicable | 0.512 |
| Porous membrane | | | | | |
| Non-conductive particles | Type | AKP3000 | AKP3000 | AKP3000 | AKP3000 |
| | Amount (parts) | 100 | 100 | 100 | 100 |
| Binder | Type | Particulate polymer 1 | Particulate polymer 1 | Particulate polymer 1 | Particulate polymer 1 |
| | Amount (parts) | 2 | 2 | 2 | 2 |

[Table 5. Results of Examples]

| | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|
| Flexibility property | A | A | A | A | A | B | B | B | A | A |
| High temperature cycle property | A | A | B | B | B | B | A | B | B | B |
| High temperature storage property | A | B | B | B | B | B | A | B | A | A |
| Rate property | A | A | A | A | A | A | A | A | A | A |

[Table 6. Results of Examples]

| | Ex. 11 | Ex. 12 | Ex. 13 | Ex. 14 | Ex. 15 | Ex. 16 |
|---|---|---|---|---|---|---|
| Flexibility property | A | A | A | A | A | B |
| High temperature cycle property | A | A | B | B | B | B |
| High temperature storage property | A | B | B | B | B | B |
| Rate property | A | A | A | A | C | A |

[Table 7. Results of Comparative Examples]

| | Comp. Ex. 1 | Comp. Ex. 2 | Comp. Ex. 3 | Comp. Ex. 4 |
|---|---|---|---|---|
| Flexibility property | C | C | C | C |
| High temperature cycle property | D | D | C | D |
| High temperature storage property | D | E | C | D |
| Rate property | B | A | B | C |

[Discussion]

From the results of Examples and Comparative Examples, it was found that according to the present invention, a secondary battery having excellent high temperature cycle property, high temperature storage property, and particle falling property can be achieved.

## Claims

**1.** A method for producing a positive electrode for a secondary battery, comprising the steps of:

applying a slurry for a positive electrode material layer onto a current collector, and drying the applied slurry to form a positive electrode material layer, the slurry for a positive electrode material layer containing a fluorine-containing polymer, a positive electrode active material, and a dispersion medium; and
applying a slurry for a surface layer onto the positive electrode material layer, and drying the applied slurry, the slurry for a surface layer containing a particulate acrylic polymer, a water-soluble polymer, and water, and having a content ratio of the particulate acrylic polymer and the water-soluble polymer in a total solid content of 60% by weight to 95% by weight;
wherein the particulate acrylic polymer contains a (meth)acrylic acid ester monomer unit and an acid group-containing vinyl monomer unit and the ratio of the acid group-containing vinyl monomer unit in the particulate acrylic polymer is 1.0% by weight or more and 3.0% by weight or less; and
wherein the water-soluble polymer contains an ethylenically unsaturated carboxylic acid monomer unit and the ratio of the ethylenically unsaturated carboxylic acid monomer unit in the water-soluble polymer is 20% by weight or more and 50% by weight or less.

2. The method for producing a positive electrode for a secondary battery according to claim 1, wherein the slurry for a positive electrode material layer further contains a polymer that does not contain fluorine.

3. The method for producing a positive electrode for a secondary battery according to claim 2, wherein the polymer that does not contain fluorine is an acrylic polymer.

4. The method for producing a positive electrode for a secondary battery according to any one of claims 1 to 3, wherein a content ratio of the water-soluble polymer in the total solid content of the slurry for a surface layer is 10% by weight to 40% by weight.

5. The method for producing a positive electrode for a secondary battery according to any one of claims 1 to 4, wherein the water-soluble polymer contains a water-soluble polymer X containing an ethylenically unsaturated carboxylic acid monomer unit and a fluorine-containing (meth)acrylic acid ester monomer unit.

6. The method for producing a positive electrode for a secondary battery according to any one of claims 1 to 5, wherein a swelling degree of the particulate polymer to a non-aqueous electrolytic solution is 1.5 times to 10 times, the swelling degree of the particulate polymer to the non-aqueous electrolytic solution being measured in the following manner:

the particulate acrylic polymer is poured in a petri dish and dried to obtain a film;
then, 4 $cm^2$ of the film is cut out, weighed to obtain pre-immersion weight A, and thereafter immersed in an electrolytic solution at 60°C, wherein the electrolytic solution is a 1.0 mol/L solution of $LiPF_6$ dissolved in a mixed solvent of ethylene carbonate (EC) and diethyl carbonate (DEC) having a volume ratio at 20°C of EC:DEC = 1:2;
the immersed film is taken out after 72 hours, wiped with towel paper, and then immediately weighed to obtain post-immersion weight B; and
the swelling degree of the particulate acrylic polymer to the electrolytic solution is calculated from the following formula:

$$\text{swelling degree} = B/A.$$

7. A secondary battery comprising a positive electrode, a separator, and a negative electrode, wherein the positive electrode is produced by the production method according to any one of claims 1 to 6.

8. The secondary battery according to claim 7, wherein the separator includes an organic separator layer, and a porous membrane layer being formed on a surface of the organic separator layer and containing non-conductive particles.

9. The secondary battery according to claim 8, wherein the porous membrane layer further contains a binder for the porous membrane layer, and the binder for the porous membrane layer contains a particulate acrylic polymer.

10. The secondary battery according to claim 8 or 9, having the porous membrane layer on a positive electrode side of the organic separator layer.

11. A method for producing a stacked body for a secondary battery, comprising the steps of: applying a slurry for a positive electrode material layer onto a current collector, and drying the applied slurry to form a positive electrode

material layer, the slurry for a positive electrode material layer containing a fluorine-containing polymer, a positive electrode active material, and a dispersion medium;
applying a slurry for a surface layer onto the positive electrode material layer, and drying the applied slurry, the slurry for a surface layer containing a particulate acrylic polymer, a water-soluble polymer, and water, and having a content ratio of the particulate acrylic polymer and the water-soluble polymer in a total solid content of 60% by weight to 95% by weight;
wherein the particulate acrylic polymer contains a (meth)acrylic acid ester monomer unit and an acid group-containing vinyl monomer unit and the ratio of the acid group-containing vinyl monomer unit in the particulate acrylic polymer is 1.0% by weight or more and 3.0% by weight or less; and
wherein the water-soluble polymer contains an ethylenically unsaturated carboxylic acid monomer unit and the ratio of the ethylenically unsaturated carboxylic acid monomer unit in the water-soluble polymer is 20% by weight or more and 50% by weight or less; stacking a separator to a side of the positive electrode material layer where the slurry for a surface layer has been applied; and stacking a negative electrode to the separator.

**12.** The method for producing a stacked body for a secondary battery according to claim 11, wherein the separator includes an organic separator layer, and a porous membrane layer being formed on a surface of the organic separator layer and containing non-conductive particles.

**13.** The method for producing a stacked body for a secondary battery according to claim 12, wherein the porous membrane layer further contains a binder for the porous membrane layer, and the binder for the porous membrane layer contains a particulate acrylic polymer.

## Patentansprüche

**1.** Ein Verfahren zur Herstellung einer positiven Elektrode für eine Sekundärbatterie, umfassend die Schritte:

Aufbringen einer Aufschlämmung für eine Schicht aus einem Material für eine positive Elektrode auf einen Stromkollektor und Trocknen der aufgebrachten Aufschlämmung, um eine Schicht aus einem Material für eine positive Elektrode zu bilden, wobei die Aufschlämmung für eine Schicht aus einem Material für eine positive Elektrode ein fluorhaltiges Polymer, ein aktives Material für eine positive Elektrode, und ein Dispersionsmedium enthält; und
Aufbringen einer Aufschlämmung für eine Deckschicht auf der Schicht aus einem Material für eine positive Elektrode und Trocknen der aufgebrachten Aufschlämmung, wobei die Aufschlämmung für eine Deckschicht ein partikuläres Acrylpolymer, ein wasserlösliches Polymer, und Wasser enthält, mit einem Mengenanteil an partikulärem Acrylpolymer und wasserlöslichem Polymer, bezogen auf den gesamten Feststoffgehalt, von 60 Gew.-% bis 95 Gew.-%;
wobei das partikuläre Acrylpolymer eine (Meth)acrylsäure-Monomereinheit und eine Säuregruppe-haltige Vinyl-Monomereinheit enthält und der Anteil der Säuregruppehaltigen Vinyl-Monomereinheit an dem partikulären Acrylpolymer 1,0 Gew.-% oder mehr und 3,0 Gew.-% oder weniger beträgt; und
wobei das wasserlösliche Polymer eine ethylenisch ungesättigte Carbonsäure-Monomereinheit enthält und der Anteil der ethylenisch ungesättigten Carbonsäure-Monomereinheit an dem wasserlöslichen Polymer 20 Gew.-% oder mehr und 50 Gew.-% oder weniger beträgt.

**2.** Das Verfahren zur Herstellung einer positiven Elektrode für eine Sekundärbatterie gemäß Anspruch 1, wobei die Aufschlämmung für eine Schicht aus einem Material für eine positive Elektrode des Weiteren ein Polymer enthält, das nicht fluorhaltig ist.

**3.** Das Verfahren zur Herstellung einer positiven Elektrode für eine Sekundärbatterie gemäß Anspruch 2, wobei das Polymer, das nicht fluorhaltig ist, ein Acrylpolymer ist.

**4.** Das Verfahren zur Herstellung einer positiven Elektrode für eine Sekundärbatterie gemäß irgendeinem der Ansprüche 1 bis 3, wobei der Anteil des wasserlöslichen Polymers, bezogen auf den gesamte Feststoffgehalt der Aufschlämmung für eine Deckschicht, 10 Gew.-% bis 40 Gew.-% beträgt.

**5.** Das Verfahren zur Herstellung einer positiven Elektrode für eine Sekundärbatterie gemäß irgendeinem der Ansprüche 1 bis 4, wobei das wasserlösliche Polymer ein wasserlösliches Polymer X enthält, welches eine ethylenisch ungesättigte Carbonsäure-Monomereinheit und eine fluorhaltige (Meth)acrylsäureester-Monomereinheit enthält.

**6.** Das Verfahren zur Herstellung einer positiven Elektrode für eine Sekundärbatterie gemäß irgendeinem der Ansprüche 1 bis 5, wobei ein Schwellungsgrad des partikulären Polymers bei Kontakt mit einer nichtwässrigen Elektrolyt-Lösung 1,5fach bis 10fach ist,
wobei der Schwellungsgrad des partikulären Polymers bei Kontakt mit der nichtwässrigen Elektrolyt-Lösung auf die folgende Art gemessen wird:

das partikuläre Acrylpolymer wird in eine Petrischale gegossen und getrocknet, um einen Film zu erhalten;
dann werden 4 $cm^2$ des Films ausgeschnitten und gewogen um das Gewicht A vor Immersion zu ermitteln, und anschließend bei 60°C in eine Elektrolyt-Lösung getaucht 60°C, wobei die Elektrolyt-Lösung eine Lösung von 1,0 mol/L $LiPF_6$, gelöst in einem gemischten Lösemittel aus Ethylencarbonat (EC) und Diethylcarbonat (DEC) mit einem Volumenverhältnis bei 20°C von EC:DEC = 1:2, ist;
der getauchte Film wird nach 72 Stunden herausgenommen, mit Küchenpapier abgewischt und dann sofort gewogen, um das Gewicht B nach Immersion zu ermitteln B; und
der Schwellungsgrad des partikulären Acrylpolymers bei Kontakt mit der Elektrolyt-Lösung wird gemäß der folgenden Formel kalkuliert:

$$\text{Schwellungsgrad} = B/A.$$

**7.** Eine Sekundärbatterie umfassend eine positive Elektrode, einen Separator, und eine negative Elektrode, wobei die positive Elektrode hergestellt wurde durch das Herstellungsverfahren gemäß irgendeinem der Ansprüche 1 bis 6.

**8.** Die Sekundärbatterie gemäß Anspruch 7, wobei der Separator umfasst: eine organische Separatorschicht und eine poröse Membranschicht, die auf einer Oberfläche der organischen Separatorschicht ausgebildet ist und nichtleitende Partikel enthält.

**9.** Die Sekundärbatterie gemäß Anspruch 8, wobei die poröse Membranschicht des Weiteren ein Bindemittel für die poröse Membranschicht enthält, und wobei das Bindemittel für die poröse Membranschicht ein partikuläres Acrylpolymer enthält.

**10.** Die Sekundärbatterie gemäß Anspruch 8 oder 9, in welcher sich die poröse Membranschicht auf der der positiven Elektrode zugewandten Seite der organischen Separatorschicht befindet.

**11.** Ein Verfahren zur Herstellung eines gestapelten Körpers für eine Sekundärbatterie, umfassend die Schritte:

Aufbringen einer Aufschlämmung für eine Schicht aus einem Material für eine positive Elektrode auf einen Stromkollektor und Trocknen der aufgebrachten Aufschlämmung, um eine Schicht aus einem Material für eine positive Elektrode zu bilden, wobei die Aufschlämmung für eine Schicht aus einem Material für eine positive Elektrode ein fluorhaltiges Polymer, ein aktives Material für eine positive Elektrode, und ein Dispersionsmedium enthält;
Aufbringen einer Aufschlämmung für eine Deckschicht auf der Schicht aus einem Material für eine positive Elektrode und Trocknen der aufgebrachten Aufschlämmung, wobei die Aufschlämmung für eine Deckschicht ein partikuläres Acrylpolymer, ein wasserlösliches Polymer, und Wasser enthält, mit einem Mengenanteil an partikulärem Acrylpolymer und wasserlöslichem Polymer, bezogen auf den gesamten Feststoffgehalt, von 60 Gew.-% bis 95 Gew.-%;
wobei das partikuläre Acrylpolymer eine (Meth)acrylsäure-Monomereinheit und eine Säuregruppe-haltige Vinyl-Monomereinheit enthält und der Anteil der Säuregruppehaltigen Vinyl-Monomereinheit an dem partikulären Acrylpolymer 1,0 Gew.-% oder mehr und 3,0 Gew.-% oder weniger beträgt; und
wobei das wasserlösliche Polymer eine ethylenisch ungesättigte Carbonsäure-Monomereinheit enthält und der Anteil der ethylenisch ungesättigten Carbonsäure-Monomereinheit an dem wasserlöslichen Polymer 20 Gew.-% oder mehr und 50 Gew.-% oder weniger beträgt;
Stapeln eines Separators auf die Seite der Schicht aus einem Material für eine positive Elektrode, auf die die Aufschlämmung für eine Deckschicht aufgebracht wurde; und Stapeln einer negativen Elektrode auf den Separator.

**12.** Das Verfahren zur Herstellung eines gestapelten Körpers für eine Sekundärbatterie gemäß Anspruch 11, wobei der Separator umfasst: eine organische Separatorschicht und eine poröse Membranschicht, die auf einer Oberfläche der organischen Separatorschicht ausgebildet ist und nichtleitende Partikel enthält.

**13.** Das Verfahren zur Herstellung eines gestapelten Körpers für eine Sekundärbatterie gemäß Anspruch 12, wobei die poröse Membranschicht des Weiteren ein Bindemittel für die poröse Membranschicht enthält, und wobei das Bindemittel für die poröse Membranschicht ein partikuläres Acrylpolymer enthält.

**Revendications**

**1.** Procédé de production d'une électrode positive destinée à une batterie rechargeable, comprenant les étapes de :

application d'un liquide chargé destiné à une couche de matériau d'électrode positive sur un collecteur de courant, et séchage du liquide chargé appliqué pour former une couche de matériau d'électrode positive, le liquide chargé destiné à une couche de matériau d'électrode positive contenant un polymère contenant du fluor, un matériau actif d'électrode positive et un milieu de dispersion ; et

application d'un liquide chargé destiné à une couche de surface sur la couche de matériau d'électrode positive, et séchage du liquide chargé appliqué, le liquide chargé destiné à une couche de surface contenant un polymère acrylique particulaire, un polymère hydrosoluble et de l'eau, et ayant une proportion du polymère acrylique particulaire et du polymère hydrosoluble dans une teneur totale en solides de 60 % en poids à 95 % en poids ;

dans lequel le polymère acrylique particulaire contient un motif monomère d'ester d'acide (méth)acrylique et un motif monomère de vinyle contenant un groupe acide et le rapport du motif monomère de vinyle contenant un groupe acide dans le polymère acrylique particulaire est de 1,0 % en poids ou plus et de 3,0 % en poids ou moins ; et

dans lequel le polymère hydrosoluble contient un motif monomère d'acide carboxylique éthyléniquement insaturé et le rapport du motif monomère d'acide carboxylique éthyléniquement insaturé dans le polymère hydrosoluble est de 20 % en poids ou plus et de 50 % en poids ou moins.

**2.** Procédé de production d'une électrode positive destinée à une batterie rechargeable selon la revendication 1, dans lequel le liquide chargé destiné à une couche de matériau d'électrode positive contient en outre un polymère qui ne contient pas de fluor.

**3.** Procédé de production d'une électrode positive destinée à une batterie rechargeable selon la revendication 2, dans lequel le polymère qui ne contient pas de fluor est un polymère acrylique.

**4.** Procédé de production d'une électrode positive destinée à une batterie rechargeable selon l'une quelconque des revendications 1 à 3, dans lequel une proportion du polymère hydrosoluble dans la teneur totale en solides du liquide chargé destiné à une couche de surface est de 10 % en poids à 40 % en poids.

**5.** Procédé de production d'une électrode positive destinée à une batterie rechargeable selon l'une quelconque des revendications 1 à 4, dans lequel le polymère hydrosoluble contient un polymère hydrosoluble X contenant un motif monomère d'acide carboxylique éthyléniquement insaturé et un motif monomère d'ester d'acide (méth)acrylique contenant du fluor.

**6.** Procédé de production d'une électrode positive destinée à une batterie rechargeable selon l'une quelconque des revendications 1 à 5, dans lequel un degré de gonflement du polymère particulaire par rapport à une solution électrolytique non aqueuse est de 1,5 fois à 10 fois,
le degré de gonflement du polymère particulaire à la solution électrolytique non aqueuse étant mesuré de la manière suivante :

le polymère acrylique particulaire est versé dans une boîte de Petri et séché pour obtenir un film ;

ensuite, 4 $cm^2$ du film sont découpés, pesés pour obtenir un poids pré-immersion A, et ensuite immergés dans une solution électrolytique à 60 °C, la solution électrolytique étant une solution à 1,0 mol/l de $LiPF_6$ dissous dans un solvant mixte de carbonate d'éthylène (EC) et de carbonate de diéthyle (DEC) ayant un rapport volumique à 20 °C de EC/DEC = 1/2 ;

le film immergé est retiré après 72 heures, essuyé à l'aide d'un papier absorbant, puis immédiatement pesé pour obtenir le poids post-immersion B ; et

le degré de gonflement du polymère acrylique particulaire par rapport à la solution électrolytique est calculé d'après la formule suivante :

$$\text{degré de gonflement} = B/A.$$

**7.** Batterie rechargeable comprenant une électrode positive, un séparateur et une électrode négative, dans laquelle l'électrode positive est produite par le procédé de production selon l'une quelconque des revendications 1 à 6.

**8.** Batterie rechargeable selon la revendication 7, dans laquelle le séparateur inclut une couche de séparateur organique, et une couche de membrane poreuse étant formée sur une surface de la couche de séparateur organique et contenant des particules non conductrices.

**9.** Batterie rechargeable selon la revendication 8, dans laquelle la couche de membrane poreuse contient en outre un liant pour la couche de membrane poreuse, et le liant pour la couche de membrane poreuse contient un polymère acrylique particulaire.

**10.** Batterie rechargeable selon la revendication 8 ou 9, présentant la couche de membrane poreuse d'un côté électrode positive de la couche de séparateur organique.

**11.** Procédé de production d'un corps empilé destiné à une batterie rechargeable, comprenant les étapes de :

application d'un liquide chargé destiné à une couche de matériau d'électrode positive sur un collecteur de courant, et séchage du liquide chargé appliqué pour former une couche de matériau d'électrode positive, le liquide chargé destiné à une couche de matériau d'électrode positive contenant un polymère contenant du fluor, un matériau actif d'électrode positive et un milieu de dispersion ;
application d'un liquide chargé destiné à une couche de surface sur la couche de matériau d'électrode positive, et séchage du liquide chargé appliqué, le liquide chargé destiné à une couche de surface contenant un polymère acrylique particulaire, un polymère hydrosoluble et de l'eau, et ayant une proportion du polymère acrylique particulaire et du polymère hydrosoluble dans une teneur totale en solides de 60 % en poids à 95 % en poids ;
dans lequel le polymère acrylique particulaire contient un motif monomère d'ester d'acide (méth)acrylique et un motif monomère de vinyle contenant un groupe acide et le rapport du motif monomère de vinyle contenant un groupe acide dans le polymère acrylique particulaire est de 1,0 % en poids ou plus et de 3,0 % en poids ou moins ; et
dans lequel le polymère hydrosoluble contient un motif monomère d'acide carboxylique éthyléniquement insaturé et le rapport du motif monomère d'acide carboxylique éthyléniquement insaturé dans le polymère hydrosoluble est de 20 % en poids ou plus et de 50 % en poids ou moins ;
empilement d'un séparateur d'un côté de la couche de matériau d'électrode positive où le liquide chargé destiné à une couche de surface a été appliqué ; et empilement d'une électrode négative sur le séparateur.

**12.** Procédé de production d'un corps empilé destiné à une batterie rechargeable selon la revendication 11, dans lequel le séparateur inclut une couche de séparateur organique, et une couche de membrane poreuse étant formée sur une surface de la couche de séparateur organique et contenant des particules non conductrices.

**13.** Procédé de production d'un corps empilé destiné à une batterie rechargeable selon la revendication 12, dans lequel la couche de membrane poreuse contient en outre un liant pour la couche de membrane poreuse, et le liant pour la couche de membrane poreuse contient un polymère acrylique particulaire.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **NAOKI IMACHI.** Insertion of an Insulating Layer between Cathode and Separator for Improving Storage Characteristics of Li-Ion Batteries. *Journal of The Electrochemical Society,* 2012, vol. 159 (3), A269-A272